(19) Europäisches Patentamt
European Patent Office
Office européen des brevets

(11) **EP 4 329 409 A1**

(12) **EUROPEAN PATENT APPLICATION**
published in accordance with Art. 153(4) EPC

(43) Date of publication:
**28.02.2024 Bulletin 2024/09**

(21) Application number: **22842507.0**

(22) Date of filing: **15.07.2022**

(51) International Patent Classification (IPC):
***H04W 72/04*** *(2023.01)* ***H04L 5/00*** *(2006.01)*

(52) Cooperative Patent Classification (CPC):
**H04L 5/00; H04W 72/04**

(86) International application number:
**PCT/KR2022/010357**

(87) International publication number:
**WO 2023/287245 (19.01.2023 Gazette 2023/03)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **15.07.2021 KR 20210092916**

(71) Applicant: Samsung Electronics Co., Ltd.
**Suwon-si, Gyeonggi-do 16677 (KR)**

(72) Inventors:
• **JANG, Youngrok**
**Suwon-si, Gyeonggi-do 16677 (KR)**
• **ABEBE, Ameha Tsegaye**
**Suwon-si, Gyeonggi-do 16677 (KR)**
• **LIM, Seongmok**
**Suwon-si, Gyeonggi-do 16677 (KR)**
• **JI, Hyoungju**
**Suwon-si, Gyeonggi-do 16677 (KR)**

(74) Representative: **Gulde & Partner**
**Patent- und Rechtsanwaltskanzlei mbB**
**Wallstraße 58/59**
**10179 Berlin (DE)**

(54) **METHOD AND DEVICE FOR FREQUENCY HOPPING IN WIRELESS COMMUNICATION SYSTEM**

(57) The present disclosure relates to: a communication technique for merging IoT technology with a 5G communication system for supporting a data transmission rate higher than that of a 4G system; and a system therefor. The present disclosure can be applied to intelligent services (for example, smart homes, smart buildings, smart cities, smart cars or connected cars, healthcare, digital education, retail businesses, security- and safety-related services, and the like) on the basis of 5G communication technology and IoT-related technology. The present disclosure discloses a method for enhancing coverage for a PDCCH in a wireless communication system.

FIG. 1

EP 4 329 409 A1

**Description**

**[Technical Field]**

The present disclosure relates to a method and device for frequency hopping in a wireless communication system.

**[Background Art]**

After the commercialization of a fourth generation (4G) communication system, efforts are being made to develop an improved fifth generation (5G) communication system or pre-5G communication system to meet a growing demand for wireless data traffic. For this reason, the 5G communication system or pre-5G communication system is also referred to as a beyond 4G network communication system or a post-LTE (Long-Term Evolution) system. To achieve high data rates, the 5G communication system is being considered for implementation in the ultra-high frequency (mmWave) band (e.g., a 60 gigahertz (70 GHz) band). To mitigate the path loss of radio waves in the ultra-high frequency band and increase the transmission distance of radio waves, beamforming, massive array multiple-input multiple-output (massive MIMO), full dimensional multiple-input multiple-output (FD-MIMO), array antenna, analog beam-forming, and large scale antenna technologies are being discussed for the 5G communication system. In addition, to improve the network of the system, in the 5G communication system, technologies such as an evolved small cell, an advanced small cell, a cloud radio access network (cloud RAN), an ultra-dense network, device to device communication (D2D), wireless backhaul, a moving network, cooperative communication, coordinated multi-points (CoMP), and interference cancellation are being developed. In addition, in the 5G system, hybrid FSK and QAM modulation (FQAM) and sliding window superposition coding (SWSC), which are advanced coding modulation (ACM) schemes, and filter bank multi-carrier (FBMC), non-orthogonal multiple access (NOMA), and sparse code multiple access (SCMA), which are advanced access technologies, are being developed.

Meanwhile, the Internet is evolving from a human-centric network of connections, where humans create and consume information, to an Internet of Things (IoT) network in which distributed constituent elements, such as things, exchange and process information. Internet of Everything (IoE) technology, which combines IoT technology with big data processing technology through connections to cloud servers, etc., is also emerging. To implement the IoT, technology elements such as sensing technology, wired and wireless communication and network infrastructure, service interface technology, and security technology are required, and recently, technologies such as a sensor network, machine to machine (M2M), and machine type communication (MTC) have been studied for the connection between things. In an IoT environment, an intelligent Internet Technology (IT) service may be provided that creates a new value in human life by collecting and analyzing data generated by the connected things. The IoT may be applied to fields such as smart homes, smart buildings, smart cities, smart cars or connected cars, smart grids, healthcare, smart appliances, and advanced medical services through the convergence and combination between existing information technology (IT) and various industries.

Therefore, various attempts are being made to apply the 5G communication system to the IoT network. For example, technologies such as sensor networks, machine to machine (M2M), and machine type communication (MTC) are being implemented by techniques such as beamforming, MIMO, and array antennas, which are the 5G communication technology. The application of cloud radio access network (cloud RAN) as the big data processing technology described above may also be considered an example of the convergence of 3eG and IoT technologies.

With the development of wireless communication systems as described above, various services can be provided, and accordingly, solutions are required to provide these services smoothly. In particular, a method of effectively operating dormant cells to serve users for longer periods of time is required.

**[Disclosure of Invention]**

**[Technical Problem]**

Disclosed embodiments are directed to providing a method and device for frequency hopping in a wireless communication system.

**[Solution to Problem]**

There is provided a method of a terminal of a communication system according to an embodiment of the present disclosure to solve the above-mentioned problem, the method may include: identifying a time resource allocated for a physical uplink shared channel (PUSCH); determining an offset and a bandwidth part (BWP) size for frequency hopping based on whether an uplink resource and a downlink resource are configured on different frequency resources with respect to the time resource; and transmitting the PUSCH by applying frequency hopping based on the offset and the bandwidth part size. There is provided a method of a base station of a communication system according to an embodiment of the present disclosure, the method may include: identifying a time resource allocated for a physical uplink shared channel (PUSCH); determining an offset and a bandwidth part (BWP) size for frequency hopping based on whether an uplink resource and a downlink resource are configured on different frequency resources with respect to the time resource; and receiving the PUSCH by applying frequency hopping based on the offset and the bandwidth part size.

A terminal of a communication system according to an embodiment of the present disclosure, the terminal may include: a transceiver; and a control unit constituted to: identify a time resource allocated for a physical uplink shared channel (PUSCH); determine an offset and a bandwidth part (BWP) size for frequency hopping based on whether an uplink resource and a downlink resource are configured on different frequency resources with respect to the time resource; and transmit the PUSCH by applying frequency hopping based on the offset and the bandwidth part size.

A base station of a communication system according to an embodiment of the present disclosure, the base station may include: a transceiver; and a control unit constituted to: identify a time resource allocated for a physical uplink shared channel (PUSCH); determine an offset and a bandwidth part (BWP) size for frequency hopping based on whether an uplink resource and a downlink resource are configured on different frequency resources with respect to the time resource; and receive the PUSCH by applying frequency hopping based on the offset and the bandwidth part size.

[Advantageous Effects of Invention]

According to disclosed embodiments, there may be provided a method and device for effectively performing frequency resource allocation in a wireless communication system.

[Brief Description of Drawings]

FIG. 1 is a view illustrating a basic structure of time-frequency domain, which is a radio resource domain in which data or control channels are transmitted in a 5G wireless communication system.

FIG. 2 is a view illustrating an example of a slot structure used in the 5G wireless communication system.

FIG. 3 is a view illustrating an example of a configuration for a bandwidth part (BWP) in the 5G wireless communication system.

FIG. 4 is a view illustrating an example of a control resource set in which a downlink control channel is transmitted in the 5G wireless communication system.

FIG. 5 is a view illustrating a structure of the downlink control channel of the 5G wireless communication system.

FIG. 6 is a view illustrating an example of a method of configuring uplink and downlink resources in the 5G wireless communication system.

FIG. 7 is a view illustrating an example of a method of configuring uplink and downlink resources, according to an embodiment of the present disclosure.

FIG. 8 is a view illustrating an example of a method of configuring uplink and downlink resources, according to an embodiment of the present disclosure.

FIG. 9 is a view illustrating a structure of a transmitter and a structure of a receiver according to an embodiment of the present disclosure.

FIG. 10 is a view illustrating an example of an uplink and downlink resource configuration and magnetic interference according to an embodiment of the present disclosure.

FIG. 11 is a view illustrating an example of an uplink-downlink configuration of the XDD system.

FIG. 12 is a view illustrating another example of an uplink-downlink configuration of the XDD system.

FIG. 13 illustrates an example of PUSCH repetition type B, according to an embodiment of the present disclosure.

FIG. 14 is a view for describing an uplink-downlink configuration in the time domain and frequency domain of the XDD system, according to an embodiment of the present disclosure.

FIG. 15 is a view illustrating an uplink-downlink configuration of time and frequency in an XDD system, according to another embodiment of the present disclosure.

FIG. 16 is a view illustrating an example of switching an uplink-downlink configuration according to an embodiment of the present disclosure.

FIG. 17A is a view illustrating a base station procedure according to an embodiment of the present disclosure.

FIG. 17B is a view illustrating a terminal procedure according to an embodiment of the present disclosure.

FIG. 18 is a view illustrating various frequency hopping methods that may be considered for PUSCH transmission in the XDD system according to an embodiment of the present disclosure.

FIG. 19A is a view illustrating an example of a terminal operation for the frequency hopping method according to an embodiment of the present disclosure.

FIG. 19B is a view illustrating an example of a base station operation for the frequency hopping method according to an embodiment of the present disclosure.

FIG. 20 is a block diagram illustrating a structure of a terminal according to an embodiment of the present disclosure.

FIG. 21 is a block diagram illustrating a structure of a base station according to an embodiment of the present disclosure.

**[Mode for the Invention]**

Hereinafter, embodiments of the present disclosure will be described in detail with reference to the accompanying drawings.

When describing the embodiments, a description of technical contents, which are well known in the technical field to which the present disclosure pertains but are not directly related to the present disclosure, will be omitted. This is to more clearly describe the subject matter of the present disclosure without obscuring the subject matter by omitting any unnecessary description.

Similarly, in the accompanying drawings, some constituent elements are illustrated in an exaggerated or schematic form or are omitted. In addition, a size of each constituent element does not entirely reflect an actual size. Like reference numerals designate like or corresponding elements in the drawings.

Advantages and features of the present disclosure and methods of achieving the advantages and features will be clear with reference to exemplary embodiments described in detail below together with the accompanying drawings. However, the present disclosure is not limited to the exemplary embodiments disclosed herein but will be implemented in various forms. The exemplary embodiments of the present disclosure are provided so that the present disclosure is completely disclosed, and a person with ordinary skill in the art can fully understand the scope of the present disclosure. The present disclosure will be defined only by the scope of the appended claims. Throughout the specification, the same reference numerals denote the same constituent elements. In addition, in the description of the present disclosure, the specific descriptions of related functions or configurations will be omitted when it is determined that the specific descriptions may unnecessarily obscure the subject matter of the present disclosure. In addition, the terms used herein are defined considering the functions in the present disclosure and may vary depending on the intention or usual practice of a user or an operator. Therefore, the definition of the present disclosure should be made based on the entire contents of the present specification.

Hereinafter, a base station is an entity that performs resource allocation of terminals, and may be at least one of gNode B, eNode B, Node B, a base station (BS), a wireless access unit, a base station controller, or a node on the network. The terminal may include a user equipment (UE), a mobile station (MS), a cellular phone, a smartphone, a computer, or a multimedia system capable of performing communication functions. In the present disclosure, a downlink (DL) is a wireless transmission path of a signal transmitted by a base station to a UE, and an uplink (LTL) is a wireless transmission path of a signal transmitted by a UE to a base station. In addition, while an LTE, LTE-A, or 5G system may be described hereinafter as an example, embodiments of the present disclosure may be applied to other communication systems having similar technical backgrounds or channel types. For example, this may include the fifth generation of mobile communications technology (5G, new radio, or NR) that will be developed after LTE-A, or the 5G below may be a concept that includes existing LTE, LTE-A, and other similar services. In addition, the present disclosure may be applied to other communication systems with some modifications without substantially departing from the scope of the present disclosure as judged by those skilled in the art.

In this case, it will be understood that each block of processing flowchart illustrations and combination of flowchart illustrations may be performed by computer program instructions. These computer program instructions may be incorporated into a processor of a general purpose computer, a special purpose computer, or other programmable data processing equipment, such that the instructions executed by the processor of the computer or other programmable data processing equipment create means for performing the functions described in the flowchart block(s). These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that performs the function described in the flowchart block(s). The computer program instructions may also be loaded onto a computer or other programmable data processing apparatus to cause a series of operational steps to be performed on the computer or other programmable data processing apparatus to produce a computer implemented process such that the instructions that execute on the computer or other programmable data processing apparatus may provide steps for implementing the functions described in the flowchart block(s).

In addition, each block may represent a module, segment, or portion of code that includes one or more executable instructions for executing a specified logical function(s). Additionally, it should be noted that it is possible for the functions mentioned in the blocks to occur out of order in some alternative execution examples. For example, two blocks illustrated in succession may in fact be performed substantially simultaneously, or the blocks may sometimes be performed in reverse order, depending on the corresponding function.

In this case, as used herein, the term 'unit', 'part', or 'portion' means software or a hardware constituent element, such as a field programmable gate array (FPGA) or an application specific integrated circuit (ASIC), where the term 'unit', 'part', or 'portion' performs some role. However, the term 'unit', 'part', or 'portion' is not limited to software or hardware. The term 'unit', 'part', or 'portion' may be configured to be in an addressable storage medium or configured to reproduce one or more processors. Thus, as an example, the term 'unit', 'part', or 'portion' includes constituent elements such as software constituent elements, object-oriented software constituent elements, class constituent elements, and task components, processes, functions, properties, procedures, subroutines, segments of program codes, drivers, firmware, microcode, circuitry, data, database, data structures, tables, arrays, and variables. The functions provided in the constituent elements and the term, 'units', 'parts', or 'portions' may be combined into a smaller number of constituent elements, 'units', 'parts', and 'portions' and/or divided into additional constituent elements, 'units', 'parts', and 'portions'. In addition, the constituent elements and the term, 'units', 'parts', or 'portions' may be implemented to execute one or more CPUs within a device or secure multimedia card. In addition, in the embodiments, the term 'unit', 'part', or 'portion' may include one or more processors.

The wireless communication system has been developing away from providing initial voice-oriented services to a broadband wireless communication system that provides highspeed, high-quality packet data services such as communication standards, for example, such as high speed packet access (HSPA), LTE (long term evolution or evolved universal terrestrial radio access (E-UTRA)) of 3GPP, LTE-Advanced (LTE-A), LTE-Pro, high rate packet data (HRPD) of 3GPP2, ultra mobile broadband (UMB), and IEEE's 802.16e.

As a representative example of the broadband wireless communication system, the in the LTE system, an orthogonal frequency division multiplexing (OFDM) method is employed in the downlink (DL) and a single carrier frequency division multiple access (SC-FDMA) method is employed in the uplink (LTL). The uplink means a wireless link through which a LTE (user equipment (LTE) or mobile station (MS)) transmits data or a control signal to a base station (eNode B or base station (BS)), and the downlink means a wireless link through which a base station transmits data or a control signal to a UE. In a multiple access method as described above, the time-frequency resources to carry data or control information for each user are allocated and operated in such a way that the time-frequency resources do not overlap each other, that is, orthogonality is established, and the data or control information for each user may be distinguished.

As a future communication system after LTE, that is, the 5G communication system needs to be able to freely reflect the various requirements of users and service providers, and therefore services that simultaneously satisfy the various requirements need to be supported. Services considered for the 5G communication system include enhanced mobile broadband (eMBB), massive machine type communication (mMTC), ultra reliability low latency communication (URLLC), and the like.

The eMBB aims to provide data rates that are even higher than those supported by existing LTE, LTE-A, or LTE-Pro. For example, in the 5G communication system, the eMBB needs to be able to provide a peak data rate of 20 Gbps on the downlink and 10 Gbps on the uplink from the perspective of a single base station. In addition, the 5G communication system needs to provide a user perceived data rate of increased UEs while providing the peak data rate. To meet these requirements, enhancements in various transmission and reception technologies are required, including more enhanced multi input multi output (MIMO) transmission technology. In addition, while LTE uses a maximum 20MHz transmission bandwidth in the 2GHz band to transmit a signal, the 5G communication system uses a wider frequency bandwidth than 20MHz in the frequency band of 3 to 6GHz or 6GHz or higher to satisfy the data transmission speed required by the 5G communication system.

Simultaneously, mMTC is being considered to support application services such as the Internet of Things (IoT) in the 5G communication system. For mMTC to efficiently provide the Internet of Things, it is required to support the access of a large number of UEs within a cell, improve the coverage of UEs, improve battery life, and reduce the cost of LTEs. Since the Internet of Things will be attached to various sensors and a variety of devices to provide communication functions, a large number of UEs (e.g., 1,000,000 UEs/km$^2$) need to be supported within a cell. In addition, due to the characteristics of the service, UEs that support mMTC are likely to be located in shaded areas not covered by cells, such as the basement of buildings, and may require wider coverage than other services provided by the 5G communication system. The UEs that support mMTC need to be constituted with low-cost UEs and may require a very long battery life time, such as 10 to 15 years, due to the difficulty of replacing the battery in the UEs frequently.

Lastly, in case of URLLC, the URLLC is a cellular-based wireless communication service used for a specific purpose (mission-critical). For example, services used for remote control of robots or machinery, industrial automation, unmanned aerial vehicles, remote health care, emergency alerts, and the like may be considered. Therefore, the communication provided by URLLC needs to provide very low latency and very high reliability. For example, a service that supports URLLC needs to meet an air interface latency of less than 0.5 milliseconds, while also having a packet error rate requirement of 7$^5$ or less. Therefore, for the service that supports URLLC, the 5G system may need to provide a smaller transmit time interval (TTI) than other services, and at the same time, a design consideration may be required to allocate large resources in the frequency band to ensure the reliability of a communication link.

The three 5G services, that is, eMBB, URLLC, and mMTC, may be multiplexed and transmitted on a single system. In this case, different transmission and reception techniques and transmission and reception parameters may be used between services to meet the different requirements of each service. Of course, the 5G is not restricted to the three services described above.

Hereinafter, a frame structure of the 5G system will be described in more detail with reference to the drawings.

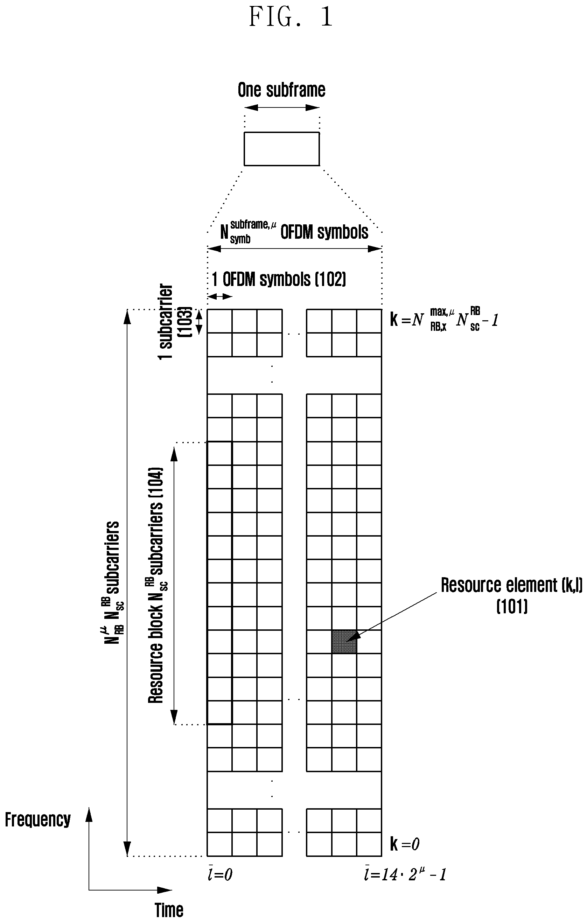

FIG. 1 is a view illustrating a basic structure of time-frequency domain, which is a radio resource domain in which data or control channels are transmitted in a 5G wireless communication system.

With reference to FIG. 1, the horizontal axis represents a time domain and the vertical axis represents a frequency domain. A basic unit of resource in the time and frequency domain is a resource element (RE) 101, which may be defined as one orthogonal frequency division multiplexing (OFDM) symbol 102 on the time axis and one subcarrier 103 on the frequency axis. In the frequency domain, $N_{sc}^{RB}$ (e.g., 12) consecutive REs may constitute one resource block (RB) 104.

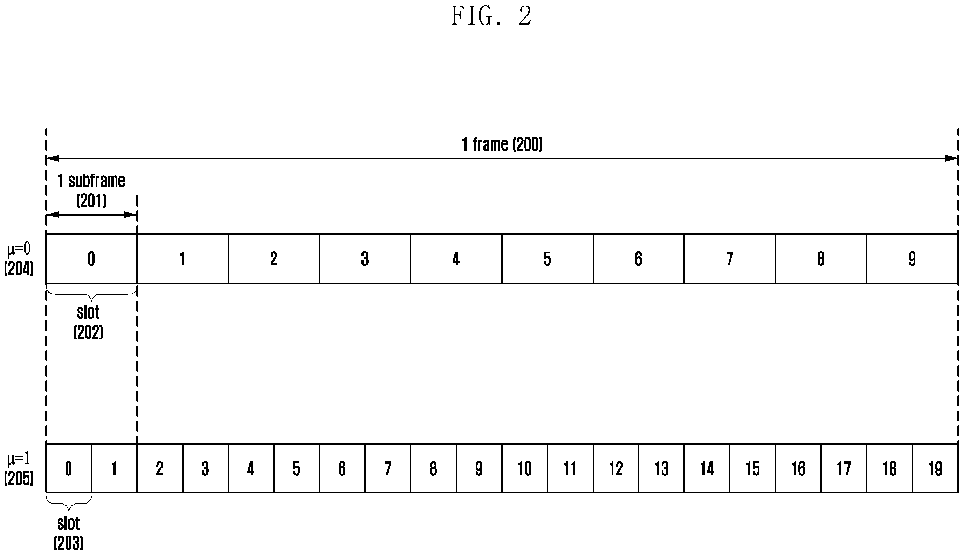

FIG. 2 is a view illustrating an example of a slot structure used in the 5G wireless communication system.

With reference to FIG. 2, an example of a structure with a frame 200, a subframe 201, and a slot 202 is illustrated. One frame 200 may be defined as 10 ms. One subframe 201 may be defined as 1 ms, and therefore one frame 200 may be constituted of a total of 10 subframes 201. One slot 202 or 203 may be defined as 14 OFDM symbols (i.e., number of symbols per 1 slot $(N_{symb}^{slot})=14$). One subframe 201 may be constituted of one or a plurality of slots 202 or 203, and the number of slots 202 or 203 per one subframe 201 may vary depending on a configured value $\mu$ 204 or 205 for a subcarrier spacing. In an example in FIG. 2, a case where $\mu$=0 204 and a case where $\mu$=1 205 are illustrated as configured values for the subcarrier spacing. In case of $\mu$=0 204, one subframe 201 may be constituted of one slot 202, and in case of $\mu$=1 205, one subframe 201 may be constituted of two slots 203. That is, the number of slots ($N_{slot}^{subframe,\mu}$) per one subframe may vary depending on the configured value $\mu$ for the subcarrier spacing, and thus the number of slots ($N_{slot}^{frame,\mu}$) per one frame may vary. $N_{slot}^{subframe,\mu}$ and $N_{slot}^{frame,\mu}$ according to the configuration $\mu$ for each subcarrier spacing may be defined as [Table 1] below.

[Table 1]

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |
| 5 | 14 | 320 | 32 |

Next, a bandwidth part (BWP) configuration in the 5G communication system will be described in detail with reference to the drawings.

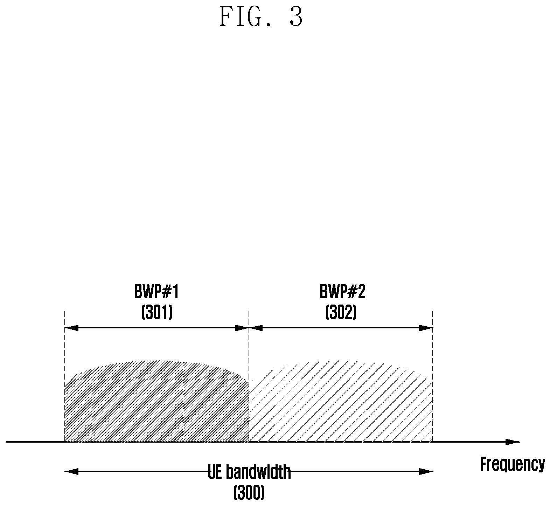

FIG. 3 is a view illustrating an example of a configuration for a bandwidth part (BWP) in the 5G wireless communication system.

With reference to FIG. 3, an example is illustrated in which a UE bandwidth 300 is configured with two bandwidth parts, that is, bandwidth part #1 (BWP#1) 301 and bandwidth part #2 (BWP#2) 302. A base station may configure one or multiple bandwidth parts to a UE, and may configure the following information for each bandwidth part.

[Table 2]

```
BWP ::= SEQUENCE {
 bwp-Id BWP-Id,
 (bandwidth part identifier)
 locationAndBandwidth INTEGER (1..65536),
 (bandwidth part position)
 subcarrierSpacing ENUMERATED {n0, n1, n2, n3, n4, n5},
 (subcarrier spacing)
 cyclicPrefix ENUMERATED { extended }
 (cyclic prefix)
 }
```

Of course, the configuration of the bandwidth part is not limited to the example above, and various parameters related to the bandwidth part may be configured on the UE in addition to the configuration information above. The configuration information may be transmitted to the UE by the base station through higher layer signaling, for example, radio resource control (RRC) signaling. At least one bandwidth part of the configured one or more bandwidth parts may be activated. Whether the configured bandwidth part is active may be quasi-statically transmitted through RRC signaling from the base station to the UE or dynamically transmitted via downlink control information (DCI).

According to an embodiment, the UE before establishing a radio resource control (RRC) connection may be configured with an initial bandwidth part (Initial BWP) for an initial access from the base station via a master information block (MIB). In a more detailed description, in the step of initial access, the UE may receive configuration information on a control resource set (CORESET) and a search space to which a PDCCH may be transmitted to receive system information required for the initial access (which may correspond to remaining system information (RMSI) or system information block 1 (SIB1)) via the MIB. The control resource set and search space configured by the MIB may each be considered as identity (ID) of 0. The base station may notify the UE of configuration information such as frequency allocation information, time allocation information, and numerology for control resource set #0 via the MIB. In addition, the base station may notify the LTE of configuration information on a monitoring period and an occasion for the control resource set #0, that is, configuration information on search space #0, via the MIB. The UE may consider a frequency domain configured with control resource set #0 obtained from the MIB as an initial bandwidth part for the initial access. In this case, the identity of the initial bandwidth part may be considered to be 0.

The configuration for the bandwidth part supported by the 5G wireless communication system may be used for various purposes.

According to an embodiment, the configuration for the bandwidth part may be used in case that the bandwidth supported by the LTE is less than the system bandwidth. For example, the base station may configure the frequency position of the bandwidth part (configuration information 2) to the UE so that the UE may transmit and receive data at a specific frequency position within the system bandwidth.

In addition, according to an embodiment, the base station may configure multiple bandwidth parts to the LTE for the purpose of supporting different numerology. For example, in order to support data transmission and reception using a subcarrier spacing of 15 kHz and a subcarrier spacing of 30 kHz for a given UE, the base station may configure two bandwidth parts with the subcarrier spacing of 15 kHz and 30 kHz, respectively. Different bandwidth parts may be frequency division multiplexed, and in case that the base station intends to transmit or receive data in a specific subcarrier spacing, the bandwidth part configured with the corresponding subcarrier spacing may be activated.

In addition, according to an embodiment, the base station may configure bandwidth parts having different sizes of bandwidth to the UE for the purpose of reducing power consumption of the UE. For example, in case that the UE supports a very large bandwidth of, for example, 100 MHz and is always transmitting and receiving data at the corresponding bandwidth, there may be a very large power consumption. In particular, performing monitoring on unnecessary downlink control channels with a large bandwidth of 100 MHz in the absence of traffic may be very inefficient from the perspective of power consumption. For the purpose of reducing the power consumption of the UE, the base station may configure the UE with a bandwidth part that is relatively small in bandwidth, for example, a bandwidth part of 20 MHz. In the absence of traffic, the LTE may perform a monitoring operation in the bandwidth part of 20 MHz, and in case that data is generated, the UE may transmit and receive data in the bandwidth part of 100 MHz as indicated by the base station.

In a method of configuring the bandwidth part, the UEs before establishing the RRC connection may receive the configuration information on the Initial bandwidth part via the master information block (MIB) in the step of initial access. In a more detailed description, the UE may be configured with the control resource set (CORESET) for the downlink control channel in which the downlink control information (DCI) that schedules the system information block (SIB) may be transmitted from the MIB of the physical broadcast channel (PBCH). The bandwidth of the control resource set configured with the MIB may be considered as the initial bandwidth part, and the UE may receive the physical downlink shared channel (PDSCH) over which the SIB is transmitted via the configured initial bandwidth part. The initial bandwidth part, in addition to receiving the SIB, may also be used for other system information (OSI), paging, and random access.

In case that one or more bandwidth parts are configured on the LTE, the base station may indicate the UE to switch the bandwidth part using a bandwidth part indicator field in the DCI. For example, in FIG. 3, in case that the currently activated bandwidth part of the UE is bandwidth part #1 301, the base station may indicate the UE to use bandwidth part #2 302 as the bandwidth part indicator in the DCI, and the LTE may perform a bandwidth part switch to bandwidth part #2 302 as indicated by the bandwidth part indicator in the received DCI.

As described above, since the DCI-based bandwidth part switch may be indicated by the DCI that schedules the PDSCH or PUSCH, the LTE needs to be able to receive or transmit the PDSCH or PUSCH scheduled by the corresponding DCI in the switched bandwidth part without difficulty in case that the LTE receives a bandwidth part switch request. To this end, the standard establishes requirements for the required delay time $T_{BWP}$ when changing bandwidth parts, which may be defined, for example, as follows.

[Table 3]

| $\mu$ | NR Slot length (ms) | BWP switch delay $T_{BWP}$ (slots) | |
|---|---|---|---|
| | | Type 1[Note 1] | Type 2[Note 1] |
| 0 | 1 | [1] | [3] |
| 1 | 0.5 | [2] | [5] |
| 2 | 0.25 | [3] | [9] |
| 3 | 0.125 | [6] | [17] |
| Note 1: Depends on LTE capability. | | | |
| Note 2: If the BWP switch involves changing of SCS, the BWP switch delay is determined by the larger one between the SCS before BWP switch and the SCS after BWP switch. | | | |

The requirements for the bandwidth part switch delay time may support type 1 or type 2 depending on the capability of the LTE. The LTE may report the type of bandwidth part delay time that the UE is capable of supporting to the base station.

According to the requirements for bandwidth part switch delay time described above, in case that the LTE receives the DCI including the bandwidth part switch indicator in slot n, the UE may complete the switch to the new bandwidth part indicated by the bandwidth part switch indicator at an occasion that is no later than slot $n+T_{BWP}$, and may perform the transmission and reception of the data channels scheduled by the corresponding DCI in the switched new bandwidth part. In case that the base station intends to schedule the data channel with a new bandwidth part, the base station may determine the time domain resource allocation for the data channel, in consideration of the bandwidth part switch delay time $T_{BWP}$ of the UE. That is, when scheduling the data channel with the new bandwidth part, the base station may schedule the data channel after the bandwidth part switch delay time in determining the time domain resource allocation for the data channel. Accordingly, the LTE may not expect the DCI that indicates the bandwidth part switch to indicate a slot offset (K0 or K2) value that is less than the bandwidth part switch delay time $T_{BWP}$.

When the LTE receives the DCI that indicates the bandwidth part switch (e.g., DCI format 1_1 or 0_1), the UE may not perform any transmission or reception during the time interval from the third symbol of the slot in which the PDCCH including the corresponding DCI was received to the beginning point of the slot indicated by the slot offset (K0 or K2) value indicated by the time-domain resource allocation indicator field within the corresponding DCI. For example, when the UE receives the DCI indicating the bandwidth part switch in slot n, and the slot offset value indicated by the corresponding DCI is K, the LTE may not perform any transmission or reception from the third symbol in slot n to the symbol before slot n+K (i.e., the last symbol in slot n+K-1).

Next, a synchronization signal (SS)/PBCH block in the 5G wireless communication system will be described.

The SS/PBCH block may mean a physical layer channel block that is constituted of a primary SS (PSS), a secondary SS (SSS), and a PBCH. Specifically, this may as the following

- PSS: It is a signal that serves as a reference for downlink time/frequency synchronization, and provides some information on a cell ID.
- SSS: It serves as a reference for downlink time/frequency synchronization and provides the remaining cell ID information not provided by the PSS. Additionally, the SSS may serve as a reference signal for demodulation of the PBCH.
- PBCH: It provides essential system information required to transmit and receive data channel and control channel of the UE. The essential system information may include control information related to the search space representing the radio resource mapping information of the control channel, scheduling control information on a separate data channel that transmits the system information, and the like.

- SS/PBCH block: The SS/PBCH block consists of a combination of the PSS, SSS, and PBCH. One or a plurality of SS/PBCH blocks may be transmitted within a time period of 5 ms, and each transmitted SS/PBCH block may be distinguished by an index.

The UE may detect the PSS and SSS in the step of initial access and decode the PBCH. The MIB may be obtained from the PBCH and the configuration of control resource set (CORESET) #0 (which may correspond to a control resource set with a control resource set index of 0) may be received therefrom. The LTE may perform monitoring for control resource set #0 assuming that the selected SS/PBCH block and a demodulation reference signal (DMRS) transmitted by control resource set #0 are quasi co-located (QCL). The LTE may receive system information as downlink control information transmitted from control resource set #0. The UE may obtain random access channel (RACH) related configuration information required for the initial access from the received system information. The LTE may transmit a physical RACH (PRACH) to the base station in consideration of the selected SS/PBCH index, and the base station receiving the PRACH may obtain information on the SS/PBCH block index selected by the UE. The base station may recognize which block the LTE has selected from each of the SS/PBCH blocks and that the UE is monitoring control resource set #0 associated with the corresponding block.

Next, the downlink control information (DCI) in the 5G wireless communication system will be described in detail.

In the 5G system, scheduling information for uplink data (or physical uplink shared channel (PUSCH)) or downlink data (or physical downlink shared channel (PDSCH)) may be transmitted from the base station to the LTE via the DCI. The LTE may monitor a fallback DCI format and a non-fallback DCI format for the PUSCH or PDSCH. The fallback DCI format may be constituted of fixed fields predefined between the base station and the UE, while the non-fallback DCI format may include configurable fields.

The DCI may be transmitted via the physical downlink control channel (PDCCH) through the process of channel coding and modulation. A cyclic redundancy check (CRC) is attached to a DCI message payload, which may be scrambled with a radio network temporary identifier (RNTI) that corresponds to an identity of the UE. According to the purpose of the DCI message, for example, LTE-specific data transmission, power control command, random access response, or the like, different RNTIs may be used. That is, the RNTI is not explicitly transmitted, but is transmitted by being included in a CRC calculation process. When the DCI message transmitted on the PDCCH is received, the UE may identify the CRC using the allocated RNTI. When the CRC identification result is correct, the LTE may recognize that the corresponding message has been transmitted to the UE.

For example, DCI scheduling a PDSCH for system information (SI) may be scrambled with SI-RNTI. DCI scheduling a PDSCH for a random access response (RAR) message may be scrambled with RA-RNTI. DCI scheduling a PDSCH for a paging message may be scrambled with P-RNTI. DCI notifying a slot format indicator (SFI) may be scrambled with SFI-RNTI. DCI notifying transmit power control (TPC) may be scrambled with TPC-RNTI. DCI scheduling a UE-specific PDSCH or PUSCH may be scrambled with cell RNTI (C-RNTI), modulation coding scheme C-RNTI (MCS-C-RNTI), or configured scheduling RNTI (CS-RNTI).

A DCI format 0_0 may be used as fallback DCI for scheduling a PUSCH, and in this case, the CRC may be scrambled with C-RNTI. The DCI format 0_0 in which the CRC is scrambled with C-RNTI may include, for example, the following information

[Table 4]

| - Identifier for DCI formats - 1 bit |
|---|
| - The value of this bit field is always set to 0, indicating an LTL DCI format |
| - Frequency domain resource assignment - $\left\lceil \log_2(N_{RB}^{UL,BWP}(N_{RB}^{UL,BWP}+1)/2) \right\rceil$ bits where $N_{RB}^{UL,BWP}$ is defined in clause 7.3.1.0 |
| - For PUSCH hopping with resource allocation type 1: |
|     - $N_{UL\_hop}$ MSB bits are used to indicate the frequency offset according to Clause 6.3 of [6, TS 38.214], where $N_{UL\_hop} = 1$ if the higher layer parameter *frequencyHoppingOffsetLists* contains two offset values and $N_{UL\_hop} = 2$ if the higher layer parameter *frequencyHoppingOffsetLists* contains four offset values |

(continued)

$$- \left\lceil \log_2(N_{\mathrm{RB}}^{\mathrm{UL,BWP}}(N_{\mathrm{RB}}^{\mathrm{UL,BWP}}+1)/2) \right\rceil - N_{\mathrm{UL\_hop}} \text{ bits provides the}$$

frequency domain resource allocation according to Clause 6.1.2.2.2 of [6, TS 38.214]

- For non-PUSCH hopping with resource allocation type 1:

$$- \left\lceil \log_2(N_{\mathrm{RB}}^{\mathrm{UL,BWP}}(N_{\mathrm{RB}}^{\mathrm{UL,BWP}}+1)/2) \right\rceil \text{ bits provides the frequency}$$

domain resource allocation according to Clause 6.1.2.2.2 of [6, TS 38.214]

- Time domain resource assignment - 4 bits as defined in Clause 6.1.2.1 of [6, TS 38.214]
- Frequency hopping flag - 1 bit according to Table 7.3.1.1.1-3, as defined in Clause 6.3 of [6, TS 38.214]
- Modulation and coding scheme - 5 bits as defined in Clause 6.1.4.1 of [6, TS 38.214]
- New data indicator - 1 bit
- Redundancy version - 2 bits as defined in Table 7.3.1.1.1-2
- HARQ process number - 4 bits
- TPC command for scheduled PUSCH - 2 bits as defined in Clause 7.1.1 of [5, TS 38.213]
- Padding bits, if required.
- UL/SUL indicator - 1 bit for UEs configured with *supplementaryUplink* in *ServingCellConfig* in the cell as defined in Table 7.3.1.1.1-1 and the number of bits for DCI format 1_0 before padding is larger than the number of bits for DCI format 0_0 before padding; 0 bit otherwise. The UL/SUL indicator, if present, locates in the last bit position of DCI format 0_0, after the padding bit(s).

    - If the UL/SUL indicator is present in DCI format 0_0 and the higher layer parameter *pusch-Config* is not configured on both UL and SUL the UE ignores the LTL/SUL indicator field in DCI format 0_0, and the corresponding PUSCH scheduled by the DCI format 0_0 is for the UL or SUL for which high layer parameter *pucch-Config* is configured;

    - If the UL/SUL indicator is not present in DCI format 0_0 and *pucch-Config* is configured, the corresponding PUSCH scheduled by the DCI format 0_0 is for the UL or SUL for which high layer parameter *pucch-Config* is configured.

    - If the UL/SUL indicator is not present in DCI format 0_0 and *pucch-Config* is not configured, the corresponding PUSCH scheduled by the DCI format 0_0 is for the uplink on which the latest PRACH is transmitted.

A DCI format 0_1 may be used as non-fallback DCI for scheduling a PUSCH, and in this case, the CRC may be scrambled with C-RNTI. The DCI format 0_1 in which the CRC is scrambled with C-RNTI may include, for example, the following information

[Table 5]

- Identifier for DCI formats - 1 bit
    - The value of this bit field is always set to 0, indicating an LTL DCI format
- Carrier indicator - 0 or 3 bits, as defined in Clause 10.1 of [5, TS38.213].
- UL/SUL indicator - 0 bit for UEs not configured with *supplementaryUplink* in *ServingCellConfig* in the cell or UEs configured with *supplementaryUplink* in *ServingCellConfig* in the cell but only one carrier in the cell is configured for PUSCH transmission; otherwise, 1 bit as defined in Table 7.3.1.1.1-1.
- Bandwidth part indicator - 0, 1 or 2 bits as determined by the number of UL BWPs $n_{\mathrm{BWP,RRC}}$ configured by higher layers, excluding the initial UL bandwidth part. The bitwidth for this field is determined as $\left\lceil \log_2(n_{\mathrm{BWP}}) \right\rceil$ bits, where

    - $n_{\mathrm{BWP}} = n_{\mathrm{BWP,RRC}} + 1$ if $n_{\mathrm{BWP,RRC}} \leq 3$, in which case the bandwidth part indicator is equivalent to the ascending order of the higher layer parameter *BWP-Id*;

    - otherwise $n_{\mathrm{BWP}} = n_{\mathrm{BWP,RRC}}$, in which case the bandwidth part indicator is defined in Table 7.3.1.1.2-1;

    If a UE does not support active BWP change via DCI, the UE ignores this bit field.

(continued)

- Frequency domain resource assignment - number of bits determined by the following, where $N_{\mathrm{RB}}^{\mathrm{UL,BWP}}$ is the size of the active UL bandwidth part:

  - $N_{\mathrm{RBG}}$ bits if only resource allocation type 0 is configured, where $N_{\mathrm{RBG}}$ is defined in Clause 6.1.2.2.1 of [6, TS 38.214],

  - $\left\lceil \log_2(N_{\mathrm{RB}}^{\mathrm{UL,BWP}}(N_{\mathrm{RB}}^{\mathrm{UL,BWP}}+1)/2) \right\rceil$ bits if only resource allocation type 1 is configured, or

  $\left( \left\lceil \log_2(N_{\mathrm{RB}}^{\mathrm{UL,BWP}}(N_{\mathrm{RB}}^{\mathrm{UL,BWP}}+1)/2) \right\rceil, N_{\mathrm{RBG}} \right)+1$ bits if both resource allocation type 0 and 1 are configured.

  - If both resource allocation type 0 and 1 are configured, the MSB bit is used to indicate resource allocation type 0 or resource allocation type 1, where the bit value of 0 indicates resource allocation type 0 and the bit value of 1 indicates resource allocation type 1.

  - For resource allocation type 0, the $N_{\mathrm{RBG}}$ LSBs provide the resource allocation as defined in Clause 6.1.2.2.1 of [6, TS 38.214].

  - For resource allocation type 1, the $\left\lceil \log_2(N_{\mathrm{RB}}^{\mathrm{UL,BWP}}(N_{\mathrm{RB}}^{\mathrm{UL,BWP}}+1)/2) \right\rceil$ LSBs provide the resource allocation as follows:

      - For PUSCH hopping with resource allocation type 1:

          - $N_{\mathrm{UL\_hop}}$ MSB bits are used to indicate the frequency offset according to Clause 6.3 of [6, TS 38.214], where $N_{\mathrm{UL\_hop}}$ = 1 if the higher layer parameter *frequencyHoppingOffsetLists* contains two offset values and $N_{\mathrm{UL\_hop}}$ = 2 if the higher layer parameter *frequencyHoppingOffsetLists* contains four offset values

          - $\left\lceil \log_2(N_{\mathrm{RB}}^{\mathrm{UL,BWP}}(N_{\mathrm{RB}}^{\mathrm{UL,BWP}}+1)/2) \right\rceil - N_{\mathrm{UL\_hop}}$ bits provides the frequency domain resource allocation according to Clause 6.1.2.2.2 of [6, TS 38.214]

      - For non-PUSCH hopping with resource allocation type 1:

          - $\left\lceil \log_2(N_{\mathrm{RB}}^{\mathrm{UL,BWP}}(N_{\mathrm{RB}}^{\mathrm{UL,BWP}}+1)/2) \right\rceil$ bits provides the frequency domain resource allocation according to Clause 6.1.2.2.2 of [6, TS 38.214]

  If "Bandwidth part indicator" field indicates a bandwidth part other than the active bandwidth part and if both resource allocation type 0 and 1 are configured for the indicated bandwidth part, the UE assumes resource

allocation type 0 for the indicated bandwidth part if the bitwidth of the "Frequency domain resource assignment" field of

the active bandwidth part is smaller than the bitwidth of the "Frequency domain resource assignment" field of the indicated bandwidth part.

(continued)

- Time domain resource assignment - 0, 1, 2, 3, or 4 bits as defined in Clause 6.1.2.1 of [6, TS38.214]. The bitwidth for this field is determined as $\lceil \log_2(I) \rceil$ bits, where *I* is the number of entries in the higher layer parameter *pusch-TimeDomainAllocationList* if the higher layer parameter is configured; otherwise *I* is the number of entries in the default table.

- Frequency hopping flag - 0 or 1 bit:

    - 0 bit if only resource allocation type 0 is configured or if the higher layer parameter *frequencyHopping* is not configured;

    - 1 bit according to Table 7.3.1.1.1-3 otherwise, only applicable to resource allocation type 1, as defined in Clause 6.3 of [6, TS 38.214].

- Modulation and coding scheme - 5 bits as defined in Clause 6.1.4.1 of [6, TS 38.214]

- New data indicator - 1 bit

- Redundancy version - 2 bits as defined in Table 7.3.1.1.1-2

- HARQ process number - 4 bits

- 1st downlink assignment index - 1 or 2 bits:

    - 1 bit for semi-static HARQ-ACK codebook;

    - 2 bits for dynamic HARQ-ACK codebook.

- 2nd downlink assignment index - 0 or 2 bits:

    - 2 bits for dynamic HARQ-ACK codebook with two HARQ-ACK sub-codebooks;

    - 0 bit otherwise.

- TPC command for scheduled PUSCH - 2 bits as defined in Clause 7.1.1 of [5, TS38.213]

- SRS resource indicator - $\left\lceil \log_2\left( \sum_{k=1}^{\min\{L_{\max}, N_{SRS}\}} \binom{N_{SRS}}{k} \right) \right\rceil$ or $\left\lceil \log_2(N_{SRS}) \right\rceil$ bits, where $N_{SRS}$ is the number of configured SRS resources in the SRS resource set associated with the higher layer parameter *usage* of value *'codeBook'* or *'nonCodeBook'*,

- $\left\lceil \log_2\left( \sum_{k=1}^{\min\{L_{\max}, N_{SRS}\}} \binom{N_{SRS}}{k} \right) \right\rceil$ bits according to Tables 7.3.1.1.2-28/29/30/31 if the higher layer parameter *txConfig = nonCodebook,* where $N_{SRS}$ is the number of configured SRS resources in the SRS resource set associated with the higher layer parameter *usage* of value *'nonCodeBook'* and

    - if UE supports operation with *maxMIMO-Layers* and the higher layer parameter *maxMIMO-Layers* of *PUSCH-ServingCellConfig* of the serving cell is configured, $L_{max}$ is given by that parameter

    - otherwise, $L_{max}$ is given by the maximum number of layers for PUSCH supported by the UE for the serving cell for non-codebook based operation.

- $\left\lceil \log_2(N_{SRS}) \right\rceil$ bits according to Tables 7.3.1.1.2-32 if the higher layer parameter *txConfig = codebook,* where $N_{SRS}$ is the number of configured

SRS resources in the SRS resource set associated with the higher layer parameter *usage* of value *'codeBook'.*

- Precoding information and number of layers - number of bits determined by the following:

    - 0 bits if the higher layer parameter *txConfig = nonCodeBook;*

(continued)

| |
|---|
| - 0 bits for 1 antenna port and if the higher layer parameter *txConfig* = *codebook;* <br> - 4, 5, or 6 bits according to Table 7.3.1.1.2-2 for 4 antenna ports, if *txConfig* = |

| |
|---|
| *codebook,* and according to whether transform precoder is enabled or disabled, and the values of higher layer parameters *maxrank,* and *codebookSubset;* <br><br> - 2, 4, or 5 bits according to Table 7.3.1.1.2-3 for 4 antenna ports, if *txConfig = codebook,* and according to whether transform precoder is enabled or disabled, and the values of higher layer parameters *maxRank,* and *codebookSubset;* <br><br> - 2 or 4 bits according to Table7.3.1.1.2-4 for 2 antenna ports, if *txConfig = codebook,* and according to whether transform precoder is enabled or disabled, and the values of higher layer parameters *maxRank* and *codebookSubset;* <br><br> - 1 or 3 bits according to Table7.3.1.1.2-5 for 2 antenna ports, if *txConfig = codebook,* and according to whether transform precoder is enabled or disabled, and the values of higher layer parameters *maxRank* and *codebookSubset.* <br> - Antenna ports - number of bits determined by the following <br> - 2 bits as defined by Tables 7.3.1.1.2-6, if transform precoder is enabled, *dmrs-Type*=1, and *maxLength*=1; <br> - 4 bits as defined by Tables 7.3.1.1.2-7, if transform precoder is enabled, *dmrs-Type*=1, and *maxLength*=2; <br> - 3 bits as defined by Tables 7.3.1.1.2-8/9/10/11, if transform precoder is disabled, *dmrs-Type*=1, and *maxLength*=1, and the value of rank is determined according to the SRS resource indicator field if the higher layer parameter *txConfig = nonCodebook* and according to the Precoding information and number of layers field if the higher layer parameter *txConfig = codebook;* <br> - 4 bits as defined by Tables 7.3.1.1.2-12/13/14/15, if transform precoder is disabled, *dmrs-Type*=1, and *maxLength*=2, and the value of rank is determined according to the SRS resource indicator field if the higher layer parameter *txConfig = nonCodebook* and according to the Precoding information and number of layers field if the higher layer parameter *txConfig = codebook;* <br> - 4 bits as defined by Tables 7.3.1.1.2-16/17/18/19, if transform precoder is disabled, *dmrs-Type*=2, and *maxLength*=1, and the value of rank is determined according to the SRS resource indicator field if the higher layer parameter *txConfig = nonCodebook* and according to the Precoding information and number of layers field if the higher layer parameter *txConfig = codebook;* <br> - 5 bits as defined by Tables 7.3.1.1.2-20/21/22/23, if transform precoder is disabled, *dmrs-Type*=2, and *maxLength*=2, and the value of rank is determined according to the SRS resource indicator field if the higher layer parameter *txConfig = nonCodebook* and according to the Precoding |
| information and number of layers field if the higher layer parameter *txConfig = codebook.* |
| where the number of CDM groups without data of values 1, 2, and 3 in Tables 7.3.1.1.2-6 to 7.3.1.1.2-23 refers to CDM groups {0}, {0,1}, and {0, 1,2} respectively. |

(continued)

If a UE is configured with both *dmrs-UplinkForPUSCH-MappingTypeA* and *dmrs-UplinkForPUSCH-MappingTypeB*, the bitwidth of this field equals max$\{x_A,x_B\}$ , where $x_A$ is the "Antenna ports" bitwidth derived according to *dmrs-UplinkForPUSCH-MappingTypeA* and $x_B$ is the "Antenna ports" bitwidth derived according to *dmrs-UplinkForPUSCH-MappingTypeB*. A number of $|x_A - x_B|$ zeros are padded in the MSB of this field, if the mapping type of the PUSCH corresponds to the smaller value of $x_A$ and $x_B$.

- SRS request - 2 bits as defined by Table 7.3.1.1.2-24 for UEs not configured with *supplementaryUplink* in *ServingCellConfig* in the cell; 3 bits for UEs configured with *supplementaryUplink* in *ServingCellConfig* in the cell where the first bit is the non-SUL/SUL indicator as defined in Table 7.3.1.1.1-1 and the second and third bits are

defined by Table 7.3.1.1.2-24. This bit field may also indicate the associated CSI-RS according to Clause 6.1.1.2 of [6, TS 38.214].

- CSI request - 0, 1, 2, 3, 4, 5, or 6 bits determined by higher layer parameter *reportTriggerSize*.

- CBG transmission information (CBGTI) - 0 bit if higher layer parameter *codeBlockGroupTransmission* for PUSCH is not configured, otherwise, 2, 4, 6, or 8 bits determined by higher layer parameter *maxCodeBlockGroupsPerTransportBlock* for PUSCH.

- PTRS-DMRS association - number of bits determined as follows

- 0 bit if *PTRS-UplinkConfig* is not configured and transform precoder is disabled, or if transform precoder is enabled, or if *maxRank*=1;

- 2 bits otherwise, where Table 7.3.1.1.2-25 and 7.3.1.1.2-26 are used to indicate the association between PTRS port(s) and DMRS port(s) when one PT-RS port and two PT-RS ports are configured by *maxNrofPorts* in *PTRS-UplinkConfig* respectively, and the DMRS ports are indicated by the Antenna ports field.

If "Bandwidth part indicator" field indicates a bandwidth part other than the active bandwidth part and the "PTRS-DMRS association" field is present for the indicated bandwidth part but not present for the active bandwidth part, the UE assumes the "PTRS-DMRS association" field is not present for the indicated bandwidth part.

- beta_offset indicator - 0 if the higher layer parameter *betaOffsets = semiStatic*; otherwise 2 bits as defined by Table 9.3-3 in [5, TS 38.213].

- DMRS sequence initialization - 0 bit if transform precoder is enabled; 1 bit if transform precoder is disabled.

- UL-SCH indicator - 1 bit. A value of "1" indicates UL-SCH shall be transmitted on the PUSCH and a value of "0" indicates UL-SCH shall not be transmitted on the PUSCH. Except for DCI format 0_1 with CRC scrambled by SP-CSI-RNTI, a LTE is not expected to receive a DCI format 0_1 with UL-SCH indicator of "0" and CSI request of all zero(s).

A DCI format 1_0 may be used as fallback DCI for scheduling a PDSCH, and in this case, the CRC may be scrambled with C-RNTI. The DCI format 1_0 in which the CRC is scrambled with C-RNTI may include, for example, the following information

[Table 6]

| | |
|---|---|
| - Identifier for DCI formats - 1 bits | - The value of this bit field is always set to 1, indicating a DL DCI format |
| - Frequency domain resource assignment - $\left\lceil \log_2(N_{RB}^{DL,BWP}(N_{RB}^{DL,BWP}+1)/2) \right\rceil$ bits where $N_{RB}^{DLBWP}$ is given by clause 7.3.1.0 | |
| If the CRC of the DCI format 1_0 is scrambled by C-RNTI and the "Frequency domain resource assignment" field are of all ones, the DCI format 1_0 is for random access procedure initiated by a PDCCH order, with all remaining fields set as follows: | |
| - Random Access Preamble index - 6 bits according to *ra-PreambleIndex* in Clause 5.1.2 of [8, TS38.321] | |

(continued)

| |
|---|
| - UL/SUL indicator - 1 bit. If the value of the "Random Access Preamble index" is not all zeros and if the UE is configured with *supplementaryUplink* in *ServingCellConfig* in the cell, this field indicates which UL carrier in the cell to transmit the PRACH according to Table 7.3.1.1.1-1; otherwise, this field is reserved<br>- SS/PBCH index - 6 bits. If the value of the "Random Access Preamble index" is not all zeros, this field indicates the SS/PBCH that shall be used to determine the RACH occasion for the PRACH transmission; otherwise, this field is reserved.<br>- PRACH Mask index - 4 bits. If the value of the "Random Access Preamble index" is not all zeros, this field indicates the RACH occasion associated with the SS/PBCH indicated by "SS/PBCH index" for the PRACH transmission, according to Clause 5.1.1 of [8, TS38.321]; otherwise, this field is reserved<br>- Reserved bits - 10 bits<br>Otherwise, all remaining fields are set as follows:<br>- Time domain resource assignment - 4 bits as defined in Clause 5.1.2.1 of [6, TS 38.214]<br>- VRB-to-PRB mapping - 1 bit according to Table 7.3.1.2.2-5<br>- Modulation and coding scheme - 5 bits as defined in Clause 5.1.3 of [6, TS 38.214]<br>- New data indicator - 1 bit<br>- Redundancy version - 2 bits as defined in Table 7.3.1.1.1-2<br>- HARQ process number - 4 bits<br>- Downlink assignment index - 2 bits as defined in Clause 9.1.3 of [5, TS 38.213], as counter DAI<br>- TPC command for scheduled PUCCH - 2 bits as defined in Clause 7.2.1 of [5, TS 38.213]<br>- PUCCH resource indicator - 3 bits as defined in Clause 9.2.3 of [5, TS 38.213]<br>- PDSCH-to-HARQ_feedback timing indicator - 3 bits as defined in Clause 9.2.3 of [5, TS38.213] |

A DCI format 1_1 may be used as non-fallback DCI for scheduling a PDSCH, and in this case, the CRC may be scrambled with C-RNTI. The DCI format 1_1 in which the CRC is scrambled with C-RNTI may include, for example, the following information

[Table 7]

| |
|---|
| - Identifier for DCI formats - 1 bits<br>       - The value of this bit field is always set to 1, indicating a DL DCI format<br>- Carrier indicator - 0 or 3 bits as defined in Clause 10.1 of [5, TS 38.213].<br>- Bandwidth part indicator - 0, 1 or 2 bits as determined by the number of DL BWPs $n_{\text{BWP,RRC}}$ configured by higher layers, excluding the initial DL bandwidth part. The bitwidth for this field is determined as $\left\lceil \log_2(n_{\text{BWP}}) \right\rceil$ bits, where<br>    - $n_{\text{BWP}} = n_{\text{BWP,RRC}} +1$ if $n_{\text{BWP,RRC}} \leq 3$, in which case the bandwidth part indicator is equivalent to the ascending order of the higher layer parameter *BWP-Id*;<br>    - otherwise $n_{\text{BWP}} = n_{\text{BWP,RRC}}$, in which case the bandwidth part indicator is defined in Table 7.3.1.1.2-1;<br>    If a UE does not support active BWP change via DCI, the UE ignores this bit field.<br><br>- Frequency domain resource assignment - number of bits determined by the following, where $N_{\text{RB}}^{\text{DL,BWP}}$ is the size of the active DL bandwidth part:<br>    - $N_{\text{RBG}}$ bits if only resource allocation type 0 is configured, where $N_{\text{RBG}}$ is defined in Clause 5.1.2.2.1 of [6, TS38.214],<br>    - $\left\lceil \log_2(N_{\text{RB}}^{\text{DL,BWP}}(N_{\text{RB}}^{\text{DL,BWP}}+1)/2) \right\rceil$ bits if only resource allocation type 1 is configured, or<br>    - $\max\left(\left\lceil \log_2(N_{\text{RB}}^{\text{DL,BWP}}(N_{\text{RB}}^{\text{DL,BWP}}+1)/2) \right\rceil, N_{\text{RBG}}\right)+1$ bits if both resource allocation type 0 and 1 are configured.<br>    - If both resource allocation type 0 and 1 are configured, the MSB bit is used to indicate resource allocation type 0 or resource allocation type 1, where the bit value of 0 indicates resource allocation type 0 and the bit value of 1 indicates resource allocation type 1. |

(continued)

- For resource allocation type 0, the $N_{RBG}$ LSBs provide the resource allocation as defined in Clause 5.1.2.2.1 of [6, TS 38.214].

- For resource allocation type 1, the $\left\lceil \log_2 (N_{RB}^{DL,BWP}(N_{RB}^{DL,BWP}+1)/2) \right\rceil$ LSBs provide the resource allocation as defined in Clause 5.1.2.2.2 of [6, TS 38.214]

If "Bandwidth part indicator" field indicates a bandwidth part other than the active bandwidth part and if both resource allocation type 0 and 1 are configured for the indicated bandwidth part, the UE assumes resource allocation type 0 for the indicated bandwidth part if the bitwidth of the "Frequency domain resource assignment" field of the active bandwidth part is smaller than the bitwidth of the "Frequency domain resource assignment" field of the indicated bandwidth part.

- Time domain resource assignment - 0, 1, 2, 3, or 4 bits as defined in Clause 5.1.2.1 of [6, TS 38.214]. The bitwidth for this field is determined as $\left\lceil \log_2(I) \right\rceil$ bits, where *I* is the number of entries in the higher layer parameter *pdsch-TimeDomainAllocationList* if the higher layer parameter is configured; otherwise *I* is the number of entries in the default table.

- VRB-to-PRB mapping - 0 or 1 bit:

    - 0 bit if only resource allocation type 0 is configured or if interleaved VRB-to-PRB mapping is not configured by high layers;

    - 1 bit according to Table 7.3.1.2.2-5 otherwise, only applicable to resource allocation type 1, as defined in Clause 7.3.1.6 of [4, TS 38.211].

- PRB bundling size indicator - 0 bit if the higher layer parameter *prb-BundlingType* is not configured or is set to 'staticBundling', or 1 bit if the higher

---

layer parameter *prb-BundlingType* is set to 'dynamicBundling' according to Clause 5.1.2.3 of [6, TS 38.214].

- Rate matching indicator - 0, 1, or 2 bits according to higher layer parameters *rateMatchPatternGroup1* and *rateMatchPatternGroup2*, where the MSB is used to indicate *rateMatchPatternGroup1* and the LSB is used to indicate *rateMatchPatternGroup2* when there are two groups.

- ZP CSI-RS trigger - 0, 1, or 2 bits as defined in Clause 5.1.4.2 of [6, TS 38.214]. The bitwidth for this field is determined as $\left\lceil \log_2(n_{ZP}+1) \right\rceil$ bits, where $n_{ZP}$ is the number of aperiodic ZP CSI-RS resource sets configured by higher layer.

For transport block 1:

    - Modulation and coding scheme - 5 bits as defined in Clause 5.1.3.1 of [6, TS 38.214]

    - New data indicator - 1 bit

    - Redundancy version - 2 bits as defined in Table 7.3.1.1.1-2

For transport block 2 (only present if *maxNrofCodeWordsScheduledByDCI* equals 2):

    - Modulation and coding scheme - 5 bits as defined in Clause 5.1.3.1 of [6, TS 38.214]

    - New data indicator - 1 bit

    - Redundancy version - 2 bits as defined in Table 7.3.1.1.1-2

    If "Bandwidth part indicator" field indicates a bandwidth part other than the active bandwidth part and the value of *maxNrofCodeWordsScheduledByDCI* for the indicated bandwidth part equals 2 and the value of *maxNrofCodeWordsScheduledByDCI* for the active bandwidth part equals 1, the LTE assumes zeros are padded when interpreting the "Modulation and coding scheme", "New data indicator", and "Redundancy version" fields of transport block 2 according to Clause 12 of [5, TS38.213], and the UE ignores the "Modulation and coding scheme", "New data indicator", and "Redundancy version" fields of transport block 2 for the indicated bandwidth part.

- HARQ process number - 4 bits

- Downlink assignment index - number of bits as defined in the following

    - 4 bits if more than one serving cell are configured in the DL and the higher layer parameter *pdsch-HARQ-ACK-Codebook=dynamic*, where the 2 MSB bits are the counter DAI and the 2 LSB bits are the total DAI;

(continued)

| - 2 bits if only one serving cell is configured in the DL and the higher layer parameter *pdsch-HARQ-ACK-Codebook=dynamic*, where the 2 bits are the counter DAI; <br> - 0 bits otherwise. <br> If the UE is configured with a PUCCH-SCell, the number of serving cells is determined within a PUCCH group. |
| --- |
| - TPC command for scheduled PUCCH - 2 bits as defined in Clause 7.2.1 of [5, TS 38.213] <br> - PUCCH resource indicator - 3 bits as defined in Clause 9.2.3 of [5, TS 38.213] <br> - PDSCH-to-HARQ_feedback timing indicator - 0, 1, 2, or 3 bits as defined in Clause 9.2.3 of [5, TS 38.213]. The bitwidth for this field is determined as $\lceil \log_2(I) \rceil$ bits, where *I* is the number of entries in the higher layer parameter *dl-DataToUL-ACK*. <br> - Antenna port(s) - 4, 5, or 6 bits as defined by Tables 7.3.1.2.2-1/2/3/4, |

| where the number of CDM groups without data of values 1, 2, and 3 refers to CDM groups {0}, {0,1}, and {0, 1,2} respectively. The antenna ports $\{p_0,..,p_{\upsilon-1}\}$ shall be determined according to the ordering of DMRS port(s) given by Tables 7.3.1.2.2-1/2/3/4. <br> If a UE is configured with both *dmrs-DownlinkForPDSCH-MappingTypeA* and *dmrs-DownlinkForPDSCH-MappingTypeB,* the bitwidth of this field equals max $\{x_A, x_B\}$, where $x_A$ is the "Antenna ports" bitwidth derived according to *dmrs-DownlinkForPDSCH-MappingTypeA* and $x_B$ is the "Antenna ports" bitwidth derived according to *dmrs-DownlinkForPDSCH-MappingTypeB*. A number of $|x_A - x_B|$ zeros are padded in the MSB of this field, if the mapping type of the PDSCH corresponds to the smaller value of $x_A$ and $x_B$. |
| --- |
| - Transmission configuration indication - 0 bit if higher layer parameter *tci-PresentInDCI* is not enabled; otherwise 3 bits as defined in Clause 5.1.5 of [6, TS38.214]. <br> If "Bandwidth part indicator" field indicates a bandwidth part other than the active bandwidth part, <br> - if the higher layer parameter *tci-PresentInDCI* is not enabled for the CORESET used for the PDCCH carrying the DCI format 1_1, <br>      - the UE assumes *tci-PresentInDCI* is not enabled for all CORESETs in the indicated bandwidth part; <br> - otherwise, <br>      - the UE assumes *tci-PresentInDCI* is enabled for all CORESETs in the indicated bandwidth part. |
| - SRS request - 2 bits as defined by Table 7.3.1.1.2-24 for UEs not configured with *supplementaryUplink* in *ServingCellConfig* in the cell; 3 bits for UEs configured with *supplementaryUplink* in *ServingCellConfig* in the cell where the first bit is the non-SUL/SUL indicator as defined in Table 7.3.1.1.1-1 and the second and third bits are defined by Table 7.3.1.1.2-24. This bit field may also indicate the associated CSI-RS according to Clause 6.1.1.2 of [6, TS 38.214]. <br> - CBG transmission information (CBGTI) - 0 bit if higher layer parameter *codeBlockGroupTransmission* for PDSCH is not configured, otherwise, 2, 4, 6, or 8 bits as defined in Clause 5.1.7 of [6, TS38.214], determined by the higher layer parameters *maxCodeBlockGroupsPerTransportBlock* and *maxNrofCodeWordsScheduledByDCI* for the PDSCH. <br> - CBG flushing out information (CBGFI) - 1 bit if higher layer parameter *codeBlockGroupFlushIndicator* is configured as "TRUE", 0 bit otherwise. <br> - DMRS sequence initialization - 1 bit. |

Hereinafter, a method of allocating time domain resource for a data channel in the 5G wireless communication system will be described.

The base station may configure a table for time domain resource allocation information for a physical downlink shared channel (PDSCH) and a physical uplink shared channel (PUSCH) to the UE through higher layer signaling (e.g., RRC signaling). For the PDSCH, a table constituted of maxNrofDL-Allocations=16 entries may be configured, and for the PUSCH, a table constituted of maxNrofUL-Allocations=16 entries may be configured. The time domain resource allocation information may include, for example, a PDCCH-to-PDSCH slot timing (corresponding to a time interval in units of slots between an occasion in which the PDCCH is received and an occasion in which the PDSCH scheduled by the received PDCCH is transmitted, denoted by K0), PDCCH-to-PUSCH slot timing (corresponding to a time interval in units of slots between an occasion in which the PDCCH is received and an occasion in which the PUSCH scheduled by the received PDCCH is transmitted, denoted by K2), information on a position and length of a start symbol in which the PDSCH or the PUSCH is scheduled within the slot, a mapping type of PDSCH or PUSCH, and the like. For example, information such as Table 8 or Table 9 may be notified from the base station to the UE.

【Table 8】

| *PDSCH-TimeDomainResourceAllocationList* information element |
| --- |
| PDSCH-TimeDomainResourceAllocationList ::= SEQUENCE |
| (SIZE(1..maxNrofDL-Allocations)) OF PDSCH-TimeDomainResourceAllocation |
| PDSCH-TimeDomainResourceAllocation ::= SEQUENCE { |
| k0 INTEGER(0..32) OPTIONAL, -- Need S |
| (PDCCH-to-PDSCH timing, slot unit) |
| mappingType ENUMERATED {typeA, typeB}, |

| (PDSCH mapping type) |
| --- |
| startSymbolAndLength INTEGER (0..127) |
| (Start symbol and length of PDSCH) |
| } |

【Table 9】

<table>
<tr><td>

***PUSCH-TimeDomainResourceAllocation* information element**

PUSCH-TimeDomainResourceAllocationList ::= SEQUENCE

(SIZE(1..maxNrofUL-Allocations)) OF PUSCH-TimeDomainResourceAllocation

PUSCH-TimeDomainResourceAllocation ::= SEQUENCE {

k2 INTEGER(0..32) OPTIONAL, -- Need S

(PDCCH-to-PUSCH timing, slot unit)

mappingType ENUMERATED {typeA, typeB},

(PUSCH mapping type)

startSymbolAndLength INTEGER (0..127)

(Start symbol and length of PUSCH)

}
</td></tr>
</table>

The base station may notify the UE of one of entries in a table for the above-described time domain resource allocation information through L1 signaling (e.g., DCI) (e.g., may be indicated by the 'time domain resource allocation' field in DCI). The LTE may obtain time domain resource allocation information on the PDSCH or PUSCH based on the DCI received from the base station.

Hereinafter, a method of allocating frequency domain resource for a data channel in the 5G wireless communication system will be described.

The 5G wireless communication system supports two types of resource allocation, which are resource allocation type 0 and resource allocation type 1, as a method of indicating frequency domain resource allocation information on the physical downlink shared channel (PDSCH) and physical uplink shared channel (PUSCH).

Resource allocation type 0

- RB allocation information may be notified from the base station to the UE in the form of a bitmap for a resource block group (RBG). In this case, the RBG may be constituted of a set of successive virtual RBs (VRBs), and a size P of the RBG may be determined based on a value configured as a higher layer parameter (*rbg-Size*) and a size value of a bandwidth part defined as a table below.

[Table 10] Nominal RBG size *P*

| Bandwidth Part Size | Configuration 1 | Configuration 2 |
|---|---|---|
| 1 - 36 | 2 | 4 |
| 37 - 72 | 4 | 8 |
| 73 - 144 | 8 | 16 |
| 145 - 275 | 16 | 16 |

- The total number of RBGs ($N_{RBG}$) in bandwidth part i of size $N_{BWP,i}^{size}$ may be defined as the following.

$$N_{RBG} = \left\lceil \left( N_{BWP,i}^{size} + \left( N_{BWP,i}^{start} \bmod P \right) \right) / P \right\rceil$$ , where

♦ the size of the first RBG is $RBG_0^{size} = P - N_{BWP,i}^{start} \bmod P$ ,

♦ the size of last RBG is $RBG_{last}^{size} = \left( N_{BWP,i}^{start} + N_{BWP,i}^{size} \right) \bmod P$ if $\left( N_{BWP,i}^{start} + N_{BWP,i}^{size} \right) \bmod P > 0$ and
P otherwise,
♦ the size of all other RBGs is P.

- Respective bits of $N_{RBG}$ bit-sized bitmap may correspond to respective RBGs. The RBGs may be assigned indices in order in which frequencies increase, starting from the lowest frequency position in the bandwidth part. For the $N_{RBG}$ RBGs in the bandwidth part, RBG#0 through RBG#($N_{RBG}$-1) may be mapped from MSB to LSB of the RBG bitmap. In case that a value of a specific bit in the bitmap is 1, the UE may judge that a RBG that corresponds to the corresponding bit value is allocated, and in case that a value of a specific bit in the bitmap is 0, the UE may judge that a RBG that corresponds to the corresponding bit value is not allocated.

Resource allocation type 1

- It is information on a start position and length for VRBs to which RB allocation information is allocated in succession and may be notified from the base station to the UE. In this case, interleaving or non-interleaving may be further applied to the successively allocated VRBs. A Resource Allocation field for resource allocation type 1 may be constituted of a resource indication value (RIV), which may be constituted of a start point ($RB_{start}$) of a VRB and a length ($L_{RBs}$) of successively allocated RBs. More specifically, a RIV in a bandwidth part of size $N_{BWP}^{size}$ may be defined as follows.

■ if $(L_{RBs} - 1) \leq \lfloor N_{BWP}^{size}/2 \rfloor$ then

♦ $RIV = N_{BWP}^{size}(L_{RBs} - 1) + RB_{start}$

■ else

♦ $RIV = N_{BWP}^{size}(N_{BWP}^{size} - L_{RBs} + 1) + (N_{BWP}^{size} - 1 - RB_{start})$

■ where $L_{RBs} \geq 1$ and shall not exceed $N_{BWP}^{size} - RB_{start}$ .

The base station may configure the resource allocation type to the UE through higher layer signaling (e.g., resourceAllocation, which is a higher layer parameter, may be configured with one value of resourceAllocationType0, resourceAllocationType1, or dynamicSwitch). When the LTE has received a configuration of both resource allocation type 0 and resource allocation type 1 (or equivalently, when the higher layer parameter, resourceAllocation, has been configured with dynamicSwitch), the base station may indicate whether a bit corresponding to a most significant bit (MSB) in a field indicating resource allocation within the DCI format that indicates scheduling is resource allocation type 0 or resource allocation type 1. In addition, based on the type of resource allocation indicated, resource allocation information may be indicated through bits other than those corresponding to the MSB, and the LTE may, based thereon, interpret resource allocation field information in a DCI field. When the UE is configured with either resource allocation type 0 or resource allocation type 1 (or equivalently, when the higher layer parameter, resourceAllocation, is configured with one value of resourceAllocationType0 or resourceAllocationType1), the resource allocation information may be indicated based on the type of resource allocation for which the field indicating the resource allocation in the DCI format that indicates scheduling is configured, and the UE may, based thereon, interpret the resource allocation field information in the DCI field.
Hereinafter, a modulation and coding scheme (MCS) used by the 5G wireless communication system will be described in detail.

In 5G, a plurality of MCS index tables are defined for PDSCH and PUSCH scheduling. Which MCS table of the plurality of MCS tables the LTE assumes may be configured or indicated through higher layer signaling or L1 signaling from the base station to the UE, or through a RNTI value that the UE assumes when a PDCCH is decoded.

MCS index table 1 for PDSCH and CP-OFDM based PUSCH (or PUSCH without transform precoding) may be as shown in Table 11 below.

[Table 11]: MCS index table 1 for PDSCH

| MCS Index $I_{MCS}$ | Modulation Order $Q_m$ | Target code Rate $R$ x [1024] | Spectral efficiency |
|---|---|---|---|
| 0 | 2 | 120 | 0.2344 |
| 1 | 2 | 157 | 0.3066 |
| 2 | 2 | 193 | 0.3770 |
| 3 | 2 | 251 | 0.4902 |
| 4 | 2 | 308 | 0.6016 |
| 5 | 2 | 379 | 0.7402 |
| 6 | 2 | 449 | 0.8770 |
| 7 | 2 | 526 | 1.0273 |
| 8 | 2 | 602 | 1.1758 |
| 9 | 2 | 679 | 1.3262 |
| 10 | 4 | 340 | 1.3281 |
| 11 | 4 | 378 | 1.4766 |
| 12 | 4 | 434 | 1.6953 |
| 13 | 4 | 490 | 1.9141 |
| 14 | 4 | 553 | 2.1602 |
| 15 | 4 | 616 | 2.4063 |
| 16 | 4 | 658 | 2.5703 |
| 17 | 6 | 438 | 2.5664 |
| 18 | 6 | 466 | 2.7305 |
| 19 | 6 | 517 | 3.0293 |
| 20 | 6 | 567 | 3.3223 |
| 21 | 6 | 616 | 3.6094 |
| 22 | 6 | 666 | 3.9023 |
| 23 | 6 | 719 | 4.2129 |
| 24 | 6 | 772 | 4.5234 |
| 25 | 6 | 822 | 4.8164 |
| 26 | 6 | 873 | 5.1152 |
| 27 | 6 | 910 | 5.3320 |
| 28 | 6 | 948 | 5.5547 |
| 29 | 2 | reserved | |
| 30 | 4 | reserved | |
| 31 | 6 | reserved | |

MCS index table 2 for PDSCH and CP-OFDM based PUSCH (or PUSCH without transform precoding) may be as shown in Table 12 below.

[Table 12]: MCS index table 2 for PDSCH

| MCS Index $I_{MCS}$ | Modulation Order $Q_m$ | Target code Rate $R$ x [1024] | Spectral efficiency |
|---|---|---|---|
| 0 | 2 | 120 | 0.2344 |
| 1 | 2 | 193 | 0.3770 |
| 2 | 2 | 308 | 0.6016 |
| 3 | 2 | 449 | 0.8770 |
| 4 | 2 | 602 | 1.1758 |
| 5 | 4 | 378 | 1.4766 |
| 6 | 4 | 434 | 1.6953 |
| 7 | 4 | 490 | 1.9141 |
| 8 | 4 | 553 | 2.1602 |
| 9 | 4 | 616 | 2.4063 |
| 10 | 4 | 658 | 2.5703 |
| 11 | 6 | 466 | 2.7305 |
| 12 | 6 | 517 | 3.0293 |
| 13 | 6 | 567 | 3.3223 |
| 14 | 6 | 616 | 3.6094 |
| 15 | 6 | 666 | 3.9023 |
| 16 | 6 | 719 | 4.2129 |
| 17 | 6 | 772 | 4.5234 |
| 18 | 6 | 822 | 4.8164 |
| 19 | 6 | 873 | 5.1152 |
| 20 | 8 | 682.5 | 5.3320 |
| 21 | 8 | 711 | 5.5547 |
| 22 | 8 | 754 | 5.8906 |
| 23 | 8 | 797 | 6.2266 |
| 24 | 8 | 841 | 6.5703 |
| 25 | 8 | 885 | 6.9141 |
| 26 | 8 | 916.5 | 7.1602 |
| 27 | 8 | 948 | 7.4063 |
| 28 | 2 | reserved | |
| 29 | 4 | reserved | |
| 30 | 6 | reserved | |
| 31 | 8 | reserved | |

MCS index table 3 for PDSCH and CP-OFDM based PUSCH (or PUSCH without transform precoding) may be as shown in Table 13 below.

[Table 13]: MCS index table 3 for PDSCH

| MCS Index $I_{MCS}$ | Modulation Order $Q_m$ | Target code Rate $R$ x [1024] | Spectral efficiency |
|---|---|---|---|
| 0 | 2 | 30 | 0.0586 |
| 1 | 2 | 40 | 0.0781 |
| 2 | 2 | 50 | 0.0977 |
| 3 | 2 | 64 | 0.1250 |
| 4 | 2 | 78 | 0.1523 |
| 5 | 2 | 99 | 0.1934 |
| 6 | 2 | 120 | 0.2344 |
| 7 | 2 | 157 | 0.3066 |
| 8 | 2 | 193 | 0.3770 |
| 9 | 2 | 251 | 0.4902 |
| 10 | 2 | 308 | 0.6016 |
| 11 | 2 | 379 | 0.7402 |
| 12 | 2 | 449 | 0.8770 |
| 13 | 2 | 526 | 1.0273 |
| 14 | 2 | 602 | 1.1758 |
| 15 | 4 | 340 | 1.3281 |
| 16 | 4 | 378 | 1.4766 |
| 17 | 4 | 434 | 1.6953 |
| 18 | 4 | 490 | 1.9141 |
| 19 | 4 | 553 | 2.1602 |
| 20 | 4 | 616 | 2.4063 |
| 21 | 6 | 438 | 2.5664 |
| 22 | 6 | 466 | 2.7305 |
| 23 | 6 | 517 | 3.0293 |
| 24 | 6 | 567 | 3.3223 |
| 25 | 6 | 616 | 3.6094 |
| 26 | 6 | 666 | 3.9023 |
| 27 | 6 | 719 | 4.2129 |
| 28 | 6 | 772 | 4.5234 |
| 29 | 2 | reserved | |
| 30 | 4 | reserved | |
| 31 | 6 | reserved | |

MCS index table 1 for DFT-s-OFDM based PUSCH (or PUSCH with transform precoding) may be as shown in Table 14 below.

[Table 14]: MCS index table for PUSCH with transform precoding and 64QAM

| MCS Index $I_{MCS}$ | Modulation Order $Q_m$ | Target code Rate R x 1024 | Spectral efficiency |
|---|---|---|---|
| 0 | q | 240/ q | 0.2344 |

(continued)

| MCS Index $I_{MCS}$ | Modulation Order $Q_m$ | Target code Rate R x 1024 | Spectral efficiency |
|---|---|---|---|
| 1 | 9 | 314/ q | 0.3066 |
| 2 | 2 | 193 | 0.3770 |
| 3 | 2 | 251 | 0.4902 |
| 4 | 2 | 308 | 0.6016 |
| 5 | 2 | 379 | 0.7402 |
| 6 | 2 | 449 | 0.8770 |
| 7 | 2 | 526 | 1.0273 |
| 8 | 2 | 602 | 1.1758 |
| 9 | 2 | 679 | 1.3262 |
| 10 | 4 | 340 | 1.3281 |
| 11 | 4 | 378 | 1.4766 |
| 12 | 4 | 434 | 1.6953 |
| 13 | 4 | 490 | 1.9141 |
| 14 | 4 | 553 | 2.1602 |
| 15 | 4 | 616 | 2.4063 |
| 16 | 4 | 658 | 2.5703 |
| 17 | 6 | 466 | 2.7305 |
| 18 | 6 | 517 | 3.0293 |
| 19 | 6 | 567 | 3.3223 |
| 20 | 6 | 616 | 3.6094 |
| 21 | 6 | 666 | 3.9023 |
| 22 | 6 | 719 | 4.2129 |
| 23 | 6 | 772 | 4.5234 |
| 24 | 6 | 822 | 4.8164 |
| 25 | 6 | 873 | 5.1152 |
| 26 | 6 | 910 | 5.3320 |
| 27 | 6 | 948 | 5.5547 |
| 28 | q | reserved | |
| 29 | 2 | reserved | |
| 30 | 4 | reserved | |
| 31 | 6 | reserved | |

MCS index table 2 for DFT-s-OFDM based PUSCH (or PUSCH with transform precoding) may be as shown in Table 15 below.

[Table 15]: MCS index table 2 for PUSCH with transform precoding and 64QAM

| MCS Index $I_{MCS}$ | Modulation Order $Q_m$ | Target code Rate R x 1024 | Spectral efficiency |
|---|---|---|---|
| 0 | q | 60/q | 0.0586 |
| 1 | q | 80/q | 0.0781 |

(continued)

| MCS Index $I_{MCS}$ | Modulation Order $Q_m$ | Target code Rate R x 1024 | Spectral efficiency |
|---|---|---|---|
| 2 | q | 100/q | 0.0977 |
| 3 | q | 128/q | 0.1250 |
| 4 | q | 156/q | 0.1523 |
| 5 | q | 198/q | 0.1934 |
| 6 | 2 | 120 | 0.2344 |
| 7 | 2 | 157 | 0.3066 |
| 8 | 2 | 193 | 0.3770 |
| 9 | 2 | 251 | 0.4902 |
| 10 | 2 | 308 | 0.6016 |
| 11 | 2 | 379 | 0.7402 |
| 12 | 2 | 449 | 0.8770 |
| 13 | 2 | 526 | 1.0273 |
| 14 | 2 | 602 | 1.1758 |
| 15 | 2 | 679 | 1.3262 |
| 16 | 4 | 378 | 1.4766 |
| 17 | 4 | 434 | 1.6953 |
| 18 | 4 | 490 | 1.9141 |
| 19 | 4 | 553 | 2.1602 |
| 20 | 4 | 616 | 2.4063 |
| 21 | 4 | 658 | 2.5703 |
| 22 | 4 | 699 | 2.7305 |
| 23 | 4 | 772 | 3.0156 |
| 24 | 6 | 567 | 3.3223 |
| 25 | 6 | 616 | 3.6094 |
| 26 | 6 | 666 | 3.9023 |
| 27 | 6 | 772 | 4.5234 |
| 28 | q | reserved | |
| 29 | 2 | reserved | |
| 30 | 4 | reserved | |
| 31 | 6 | reserved | |

MCS index table for PUSCH with transform precoding (transform precoding or discrete furrier transform (DFT) precoding) and 64 QAM applied may be as shown in Table 16 below.

[Table 16]

| MCS Index $I_{MCS}$ | Modulation Order $Q_m$ | Target code Rate R x 1024 | Spectral efficiency |
|---|---|---|---|
| 0 | q | 240/ q | 0.2344 |
| 1 | q | 314/ q | 0.3066 |
| 2 | 2 | 193 | 0.3770 |

(continued)

| MCS Index $I_{MCS}$ | Modulation Order $Q_m$ | Target code Rate R x 1024 | Spectral efficiency |
|---|---|---|---|
| 3 | 2 | 251 | 0.4902 |
| 4 | 2 | 308 | 0.6016 |
| 5 | 2 | 379 | 0.7402 |
| 6 | 2 | 449 | 0.8770 |
| 7 | 2 | 526 | 1.0273 |
| 8 | 2 | 602 | 1.1758 |
| 9 | 2 | 679 | 1.3262 |
| 10 | 4 | 340 | 1.3281 |
| 11 | 4 | 378 | 1.4766 |
| 12 | 4 | 434 | 1.6953 |
| 13 | 4 | 490 | 1.9141 |
| 14 | 4 | 553 | 2.1602 |
| 15 | 4 | 616 | 2.4063 |
| 16 | 4 | 658 | 2.5703 |
| 17 | 6 | 466 | 2.7305 |
| 18 | 6 | 517 | 3.0293 |
| 19 | 6 | 567 | 3.3223 |
| 20 | 6 | 616 | 3.6094 |
| 21 | 6 | 666 | 3.9023 |
| 22 | 6 | 719 | 4.2129 |
| 23 | 6 | 772 | 4.5234 |
| 24 | 6 | 822 | 4.8164 |
| 25 | 6 | 873 | 5.1152 |
| 26 | 6 | 910 | 5.3320 |
| 27 | 6 | 948 | 5.5547 |
| 28 | q | reserved | |
| 29 | 2 | reserved | |
| 30 | 4 | reserved | |
| 31 | 6 | reserved | |

MCS index table for PUSCH with transform precoding (transform precoding or discrete furrier transform (DFT) precoding) and 64 QAM applied may be as shown in Table 17 below.

[Table 17]

| MCS Index $I_{MCS}$ | Modulation Order $Q_m$ | Target code Rate R x 1024 | Spectral efficiency |
|---|---|---|---|
| 0 | q | 60/q | 0.0586 |
| 1 | q | 80/q | 0.0781 |
| 2 | q | 100/q | 0.0977 |
| 3 | q | 128/q | 0.1250 |

(continued)

| MCS Index $I_{MCS}$ | Modulation Order $Q_m$ | Target code Rate R x 1024 | Spectral efficiency |
|---|---|---|---|
| 4 | q | 156/q | 0.1523 |
| 5 | q | 198/q | 0.1934 |
| 6 | 2 | 120 | 0.2344 |
| 7 | 2 | 157 | 0.3066 |
| 8 | 2 | 193 | 0.3770 |
| 9 | 2 | 251 | 0.4902 |
| 10 | 2 | 308 | 0.6016 |
| 11 | 2 | 379 | 0.7402 |
| 12 | 2 | 449 | 0.8770 |
| 13 | 2 | 526 | 1.0273 |
| 14 | 2 | 602 | 1.1758 |
| 15 | 2 | 679 | 1.3262 |
| 16 | 4 | 378 | 1.4766 |
| 17 | 4 | 434 | 1.6953 |
| 18 | 4 | 490 | 1.9141 |
| 19 | 4 | 553 | 2.1602 |
| 20 | 4 | 616 | 2.4063 |
| 21 | 4 | 658 | 2.5703 |
| 22 | 4 | 699 | 2.7305 |
| 23 | 4 | 772 | 3.0156 |
| 24 | 6 | 567 | 3.3223 |
| 25 | 6 | 616 | 3.6094 |
| 26 | 6 | 666 | 3.9023 |
| 27 | 6 | 772 | 4.5234 |
| 28 | q | reserved | |
| 29 | 2 | reserved | |
| 30 | 4 | reserved | |
| 31 | 6 | reserved | |

Hereinafter, a downlink control channel in the 5G wireless communication system will be described in more detail with reference to the drawings.

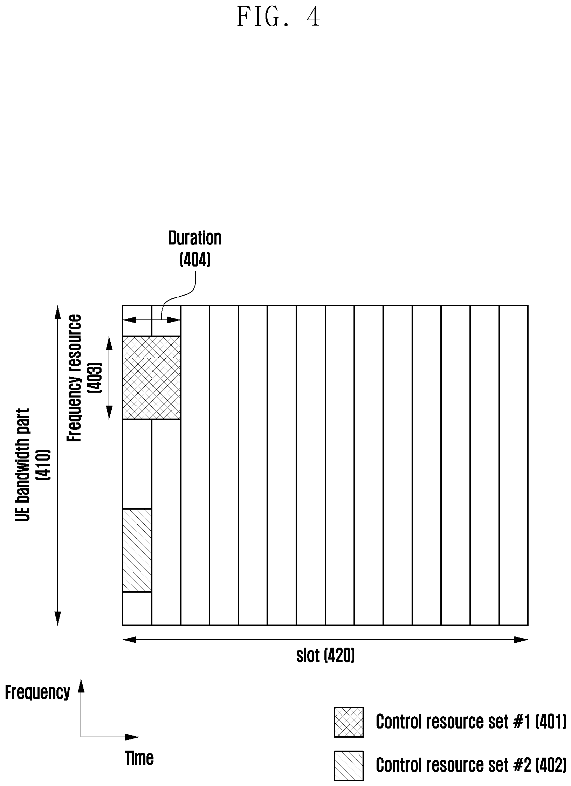

FIG. 4 is a view illustrating an example of a control resource set (CORESET) in which a downlink control channel is transmitted in the 5G wireless communication system.

With reference to FIG. 4, a UE bandwidth part 410 may be configured in the frequency axis and two control resource sets (control resource set #1 401 and control resource set #2 402) may be configured in one slot 420 in the time axis. The control resource sets 401 and 402 may be configured to a specific frequency resource 403 within the overall UE bandwidth part 410 in the frequency axis. In addition, the control resource sets 401 and 402 may be configured as one or a plurality of OFDM symbols in the time axis, which may be defined as a control resource set duration 404. With reference to an example illustrated in FIG. 4, control resource set #1 401 is configured with a control resource set length of 2 symbol, and control resource set #2 402 is configured with a control resource set length of 1 symbol.

The control resource set in the 5G wireless communication system described above may be configured by the base station to the UE through higher layer signaling (e.g., system information, master information block (MIB), radio resource control (RRC) signaling). Configuring the control resource set to the UE means providing information such as the control resource set identity, the frequency position of the control resource set, and the symbol length of the control resource set. For example, this may the following information

[Table 18]

```
ControlResourceSet ::= SEQUENCE {
 -- Corresponds to L1 parameter 'CORESET-ID'
 controlResourceSetId ControlResourceSetId,
 (control resource set identity)
 frequencyDomainResources BIT STRING (SIZE (45)),
 (resource allocation information for frequency axis)
 duration INTEGER (1..maxCoReSetDuration),
 (resource allocation information for time axis)
 cce-REG-MappingType CHOICE {
 (CCE-to-REG mapping method)
 interleaved SEQUENCE {
 reg-BundleSize ENUMERATED {n2, n3, n6},
 (REG bundle size)
 precoderGranularity ENUMERATED {sameAsREG-bundle, allContiguousRBs},
 interleaverSize ENUMERATED {n2, n3, n6}
 (interleaver size)
 shiftIndex INTEGER(0..maxNrofPhysicalResourceBlocks-1) OPTIONAL
 (interleaver shift)
 },
 nonInterleaved NULL
 },
 tci-StatesPDCCH SEQUENCE(SIZE (L.maxNrofFCI-StatesPDCCH)) OF
 TCI-StateId OPTIONAL,
 (QCL configuration information)
 tci-PresentInDCI ENUMERATED {enabled} OPTIONAL, -- Need S
 1
```

In Table 18, tci-StatesPDCCH (simply referred to as a transmission configuration indication (TCI) state) configuration information may include information on one or a plurality of synchronization signal (SS)/physical broadcast channel (PBCH) block indices or channel state information reference signal (CSI-RS) indices that are in a quasi-co-located (QCL) relationship with the DMRS transmitted from the corresponding control resource set.

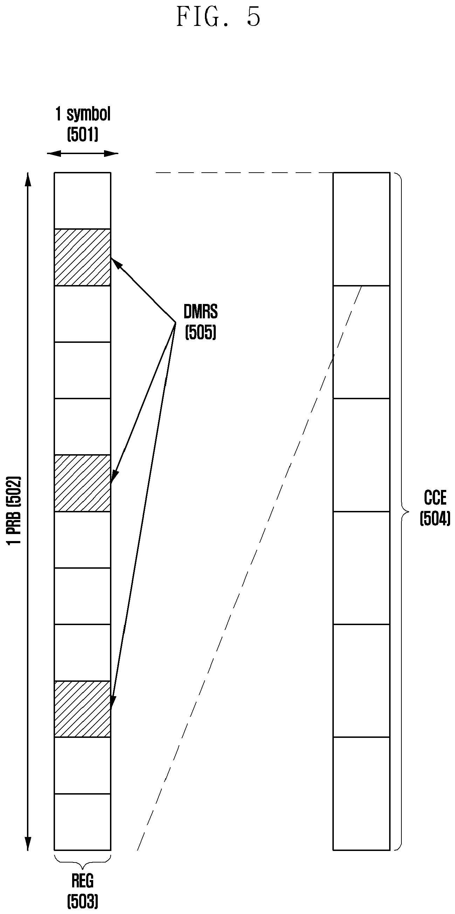

FIG. 5 is a view illustrating a structure of the downlink control channel of the 5G wireless communication system.

That is, FIG. 5 is a view illustrating an example of a basic unit of time and frequency resources constituting the downlink control channel that may be used in the 5G wireless communication system.

With reference to FIG. 5, a basic unit of time and frequency resources constituting a control channel may be defined to a resource element group (REG) 503. The REG 503 may be defined to one OFDM symbol 501 on the time axis and one physical resource block (PRB) 502 on the frequency axis, that is, 12 subcarriers. The base station may configure a downlink control channel allocation unit by concatenating the REG 503.

As illustrated in FIG. 5, when a basic unit to which a downlink control channel is allocated is a control channel element (CCE) 504 in the 5G wireless communication system, one CCE 504 may be constituted of a plurality of REGs 503. For example, the REG 503 illustrated in FIG. 5 may be constituted of 12 REs, and when one CCE 504 is constituted of six REGs 503, one CCE 504 may be constituted of 72 REs. When a downlink CORESET is configured, the corresponding region may be constituted of a plurality of CCEs 504, and a specific downlink control channel may be mapped and transmitted to one or a plurality of CCEs 504 according to an aggregation level (AL) in the control resource set. The CCEs 504 in the control resource set are divided by numbers, and in this case, the numbers of the CCEs 504 may be assigned according to a logical mapping method.

The basic unit of the downlink control channel illustrated in FIG. 5, that is, the REG 503 may include both REs to which DCI is mapped and a region to which a DMRS 505, which is a reference signal for decoding the REs, is mapped. As illustrated in FIG. 5, three DMRSs 505 may be transmitted within one REG 503. The number of CCEs necessary for transmitting the PDCCH may be 1, 2, 4, 8, or 16 according to an aggregation level (AL), and the numbers of different CCEs may be used for implementing link adaptation of the downlink control channel. For example, when AL=L, one downlink control channel may be transmitted through the L number of CCEs. The UE needs to detect a signal without knowing information on the downlink control channel, but for blind decoding, a search space representing a set of CCEs may be defined. The search space is a set of downlink control channel candidates constituted of CCEs in which the UE should attempt to decode on a given aggregation level. Since there are various aggregation levels that make one bundle with 1, 2, 4, 8, and 16 CCEs, the UE may have a plurality of search spaces. A search space set may be defined as a set of search spaces in all configured aggregation levels.

The search space may be classified into a common search space and a UE-specific search space. In order to receive cell-common control information such as dynamic scheduling for system information or a paging message, a certain group of UEs or all UEs may search for the common search space of the PDCCH. For example, PDSCH scheduling allocation information for transmission of an SIB including operator information on a cell may be received by searching for the common search space of the PDCCH. In case of the common search space, since a certain group of UEs or all UEs needs to receive the PDCCH, the common search space may be defined as a set of predefined CCEs. Scheduling allocation information on UE-specific PDSCH or PUSCH may be received by searching for a UE-specific search space of the PDCCH. The UE-specific search space may be UE-specifically defined as a function of an identity of the UE and various system parameters.

In the 5G wireless communication system, a parameter for a search space of the PDCCH may be configured from the base station to the UE through higher layer signaling (e.g., SIB, MIB, and RRC signaling). For example, the base station may configure the number of PDCCH candidates in each aggregation level L, a monitoring period of the search space, a monitoring occasion in units of symbols in a slot of the search space, a search space type (common search space or UE-specific search space), a combination of a DCI format and RNTI to be monitored in the corresponding search space, and a control resource set index for monitoring the search space to the UE. For example, parameters for the search space for PDCCH may include the following information.

[Table 19]

```
SearchSpace ::= SEQUENCE {
 -- Identity of the search space. SearchSpaceId = 0 identifies the SearchSpace
 configured via PBCH (MIB) or ServingCellConfigCommon.
 searchSpaceId SearchSpaceId,
 (Search space identity)
 controlResourceSetId ControlResourceSetId,
 (control resource set identity)
 monitoringSlotPeriodicityAndOffset CHOICE {
 (monitoring slot level period)
 sl1 NULL,
 sl2 INTEGER (0..1),
 sl4 INTEGER (0..3),
 sl5 INTEGER (0..4),
 sl8 INTEGER (0..7),
 sl10 INTEGER (0..9),
 sl16 INTEGER (0.. 15),
 sl20 INTEGER (0.. 19)
 } OPTIONAL,
 duration(monitoring length) INTEGER (2..2559)
 monitoringSymbolsWithinSlot BIT STRING (SIZE (14)) OPTIONAL,
 (monitoring symbol in slot)
 nrofCandidates SEQUENCE {
 (Number of PDCCH candidates for each aggregation level)
 aggregationLevel1 ENUMERATED {n0, n1, n2, n3, n4, n5, n6, n8},
 aggregationLevel2 ENUMERATED {n0, n1, n2, n3, n4, n5, n6, n8},
 aggregationLevel4 ENUMERATED {n0, n1, n2, n3, n4, n5, n6, n8},
 aggregationLevel8 ENUMERATED {n0, n1, n2, n3, n4, n5, n6, n8},
 aggregationLevel16 ENUMERATED {n0, n1, n2, n3, n4, n5, n6, n8}
 },
 searchSpaceType CHOICE {
 (search space type)
 -- Configures this search space as common search space (CSS) and DCI formats to
 monitor.
 common SEQUENCE {
 (common search space)
 }
 ue-Specific SEQUENCE {
 (UE-specific search space)
 -- Indicates whether the LTE monitors in this USS for DCI formats 0-0 and 1-0 or for formats
 0-1 and 1-1.
 formats ENUMERATED {formats0-0-And-1-0, formats0-1-And-1-1},
```

}Based on configuration information, the base station may configure one or a plurality of search space sets to the LTE. According to an embodiment, the base station may configure search space set 1 and search space set 2 to the UE, and configure to monitor a DCI format A scrambled with X-RNTI in the search space set 1 in the common search space and to monitor a DCI format B scrambled with Y-RNTI in the search space set 2 in a UE-specific search space.

According to the configuration information, one or a plurality of search space sets may exist in the common search space or the UE-specific search space. For example, search space set #1 and search space set #2 may be configured as the common search space, and search space set #3 and search space set #4 may be configured as the UE-specific search space.

In the common search space, a combination of the following DCI format and RNTI may be monitored. The present disclosure is not limited to the following examples.

- DCI format 0_0/1_0 with CRC scrambled by C-RNTI, CS-RNTI, MCS-C-RNTI, SP-CSI-RNTI, RA-RNTI, TC-RNTI, P-RNTI, SI-RNTI
- DCI format 2_0 with CRC scrambled by SFI-RNTI
- DCI format 2_1 with CRC scrambled by INT-RNTI
- DCI format 2_2 with CRC scrambled by TPC-PUSCH-RNTI, TPC-PUCCH-RNTI
- DCI format 2_3 with CRC scrambled by TPC-SRS-RNTI

In the LTE-specific search space, the following combination of DCI format and RNTI may be monitored. The present disclosure is not limited to the following examples.

- DCI format 0_0/1_0 with CRC scrambled by C-RNTI, CS-RNTI, TC-RNTI
- DCI format 1_0/1_1 with CRC scrambled by C-RNTI, CS-RNTI, TC-RNTI

The specified RNTIs may follow the following definitions and uses.

Cell RNTI (C-RNTI): UE-specific PDSCH scheduling use

MCS-C-RNTI (Modulation Coding Scheme C-RNTI): UE-specific PDSCH scheduling use

Temporary cell RNTI (TC-RNTI): UE-specific PDSCH scheduling use

Configured scheduling RNTI (CS-RNTI): semi-statically configured UE-specific PDSCH scheduling use

Random access RNTI (RA-RNTI): use for scheduling a PDSCH in a random access step

Paging RNTI (P-RNTI): use for scheduling a PDSCH in which paging is transmitted

System information RNTI (SI-RNTI): use for scheduling a PDSCH in which system information is transmitted

Interruption RNTI (INT-RNTI): use for notifying whether a PDSCH is punctured

Transmit power control for PUSCH RNTI (TPC-PUSCH-RNTI): use for indicating a power control command for a PUSCH

Transmit power control for PUCCH RNTI (TPC-PUCCH-RNTI): use for indicating a power control command for a PUCCH

Transmit power control for SRS RNTI (TPC-SRS-RNTI): use for indicating a power control command for an SRS

The specified DCI formats described above may be defined as follows.

[Table 20]

| DCI format | Usage |
|---|---|
| 0_0 | Scheduling of PUSCH in one cell |
| 0_1 | Scheduling of PUSCH in one cell |
| 1_0 | Scheduling of PDSCH in one cell |
| 1_1 | Scheduling of PDSCH in one cell |
| 2_0 | Notifying a group of LTEs of the slot format |
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands for SRS transmissions by one or more UEs |

In the 5G wireless communication system, a search space of aggregation level L in a control resource set p and a search space set s may be expressed as the following equation.

[Equation 1]

$$ L \cdot \left\{ \left( Y_{p,n_{s,f}^{\mu}} + \left\lfloor \frac{m_{s,n_{CI}} \cdot N_{CCE,p}}{L \cdot M_{p,s,\max}^{(L)}} \right\rfloor + n_{CI} \right) mod \left\lfloor N_{CCE,p}/L \right\rfloor \right\} + i $$

- L: Aggregation level
- $n_{CI}$: Carrier index
- $N_{CCE,p}$: Total number of CCEs that exist within control resource set p.
- $n_{s,f}^{\mu}$: Slot index
- $M_{p,s,\max}^{(L)}$: Number of PDCCH candidates for aggregation level L
- $m_{snCI} = 0, ..., M_{p,s,\max}^{(L)} -1$: PDCCH candidate index for aggregation level L
- i = 0, ..., L-1

- $Y_{p,n_{s,f}^{\mu}} = \left( A_p \cdot Y_{p,n_{s,f}^{\mu}-1} \right) mod\ D$ , $Y_{p-1} = n_{RNTI} \neq 0$, $A_0 = 39827$, $A_1 = 39829$, $A_2 = 39839$, D = 65537

- $n_{RNTI}$ : UE identity

A value of Y_(p,n$^{\mu}_{s,f}$) may correspond to zero in case of a common search space.

The value of Y_(p,n$^{\mu}_{s,f}$) may correspond to a value that varies with an identity of the UE (C-RNTI or an ID configured by the base station to the UE) and a time index for a UE-specific search space.

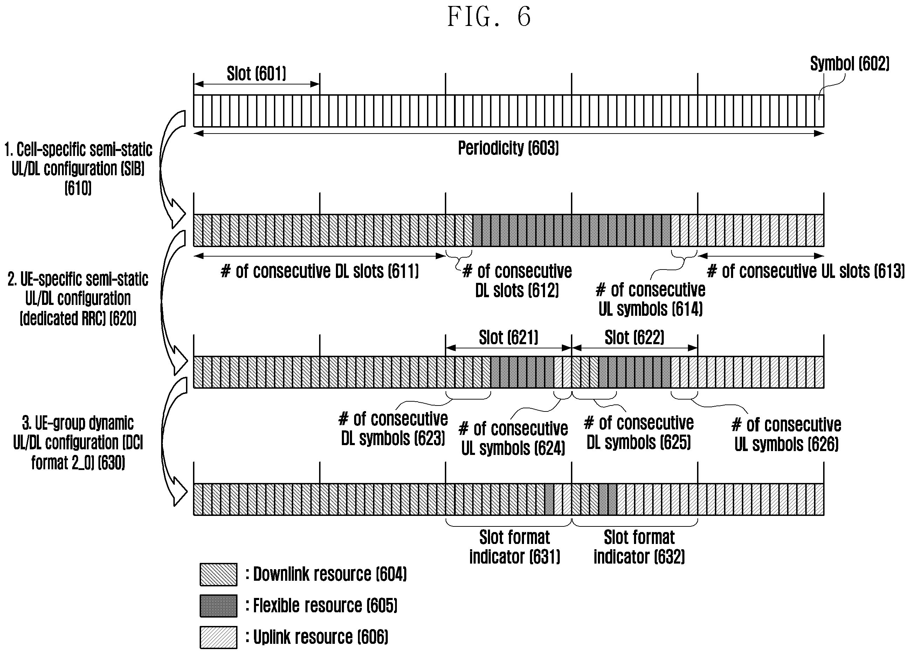

FIG. 6 is a view illustrating an example of an uplink-downlink configuration that is considered in the 5G communication system, according to an embodiment of the present disclosure.

With reference to FIG. 6, a slot 601 may include 14 symbols 602. In the 5G communication system, the uplink-downlink configuration of a symbol/slot may be configured in three steps. First, the uplink-downlink of the symbol/slot may be configured semi-statically in units of symbols through cell-specific configuration information 610 over system information. Specifically, the cell-specific uplink-downlink configuration information through the system information may include uplink-downlink pattern information and subcarrier information that is referenced. A periodicity 603 and the number of consecutive downlink slots 611 and the number of symbols in the next slot 612 from a start point of each pattern, and the number of consecutive uplink slots 613 and the number of symbols in the next slot 614 from an end of the pattern may be indicated in the uplink-downlink pattern information. In this case, slots and symbols that are not indicated as an uplink 606 and a downlink 604 may be judged as flexible slots/symbols 605.

Second, slots 621and 622 including flexible slots or flexible symbols may each be indicated as the number of consecutive downlink symbols 623 and 625 from a start symbol of the slot and the number of consecutive uplink symbols 624 and 626 from an end of the slot or may be indicated as full downlink slots or full uplink slots with user-specific configuration information 620 through dedicated higher layer signaling.

In addition, and lastly, in order to dynamically change a transmit intervals of a downlink signal and an uplink signal, symbols indicated as flexible symbols in each slot (i.e., symbols that are not indicated as downlink and uplink) may be indicated whether each symbol is a downlink symbol, an uplink symbol, or a flexible symbol through slot format indicators (SFIs) 631 and 632 included in the downlink control channel 630. The slot format indicator may be selected as one index in a table with a pre-configured uplink-downlink configuration of 14 symbols in one slot, as shown in Table 21 below.

[Table 21]

| Format | Symbol number in a slot | | | | | | | | | | | | | |
|---|---|---|---|---|---|---|---|---|---|---|---|---|---|---|
| | 0 | 1 | 2 | 3 | 4 | 5 | 6 | 7 | 8 | 9 | 10 | 11 | 12 | 13 |
| 0 | D | D | D | D | D | D | D | D | D | D | D | D | D | D |
| 1 | U | U | U | U | U | U | U | U | U | U | U | U | U | U |
| 2 | F | F | F | F | F | F | F | F | F | F | F | F | F | F |
| 3 | D | D | D | D | D | D | D | D | D | D | D | D | D | F |
| 4 | D | D | D | D | D | D | D | D | D | D | D | D | F | F |
| 5 | D | D | D | D | D | D | D | D | D | D | D | F | F | F |
| 6 | D | D | D | D | D | D | D | D | D | D | F | F | F | F |
| 7 | D | D | D | D | D | D | D | D | D | F | F | F | F | F |
| 8 | F | F | F | F | F | F | F | F | F | F | F | F | F | U |
| 9 | F | F | F | F | F | F | F | F | F | F | F | F | U | U |
| 10 | F | U | U | U | U | U | U | U | U | U | U | U | U | U |
| 11 | F | F | U | U | U | U | U | U | U | U | U | U | U | U |
| 12 | F | F | F | U | U | U | U | U | U | U | U | U | U | U |
| 13 | F | F | F | F | U | U | U | U | U | U | U | U | U | U |
| 14 | F | F | F | F | F | U | U | U | U | U | U | U | U | U |
| 15 | F | F | F | F | F | F | U | U | U | U | U | U | U | U |
| 16 | D | F | F | F | F | F | F | F | F | F | F | F | F | F |
| 17 | D | D | F | F | F | F | F | F | F | F | F | F | F | F |
| 18 | D | D | D | F | F | F | F | F | F | F | F | F | F | F |

(continued)

| Format | Symbol number in a slot | | | | | | | | | | | | | |
|---|---|---|---|---|---|---|---|---|---|---|---|---|---|---|
| | 0 | 1 | 2 | 3 | 4 | 5 | 6 | 7 | 8 | 9 | 10 | 11 | 12 | 13 |
| 19 | D | F | F | F | F | F | F | F | F | F | F | F | F | U |
| 20 | D | D | F | F | F | F | F | F | F | F | F | F | F | U |
| 21 | D | D | D | F | F | F | F | F | F | F | F | F | F | U |
| 22 | D | F | F | F | F | F | F | F | F | F | F | F | U | U |
| 23 | D | D | F | F | F | F | F | F | F | F | F | F | U | U |
| 24 | D | D | D | F | F | F | F | F | F | F | F | F | U | U |
| 25 | D | F | F | F | F | F | F | F | F | F | F | U | U | U |
| 26 | D | D | F | F | F | F | F | F | F | F | F | U | U | U |
| 27 | D | D | D | F | F | F | F | F | F | F | F | U | U | U |
| 28 | D | D | D | D | D | D | D | D | D | D | D | D | F | U |
| 29 | D | D | D | D | D | D | D | D | D | D | D | F | F | U |
| 30 | D | D | D | D | D | D | D | D | D | D | F | F | F | U |
| 31 | D | D | D | D | D | D | D | D | D | D | D | F | U | U |
| 32 | D | D | D | D | D | D | D | D | D | D | F | F | U | U |
| 33 | D | D | D | D | D | D | D | D | D | F | F | F | U | U |
| 34 | D | F | U | U | U | U | U | U | U | U | U | U | U | U |
| 35 | D | D | F | U | U | U | U | U | U | U | U | U | U | U |
| 36 | D | D | D | F | U | U | U | U | U | U | U | U | U | U |
| 37 | D | F | F | U | U | U | U | U | U | U | U | U | U | U |
| 38 | D | D | F | F | U | U | U | U | U | U | U | U | U | U |
| 39 | D | D | D | F | F | U | U | U | U | U | U | U | U | U |
| 40 | D | F | F | F | U | U | U | U | U | U | U | U | U | U |
| 41 | D | D | F | F | F | U | U | U | U | U | U | U | U | U |
| 42 | D | D | D | F | F | F | U | U | U | U | U | U | U | U |
| 43 | D | D | D | D | D | D | D | D | D | F | F | F | F | U |
| 44 | D | D | D | D | D | D | F | F | F | F | F | F | U | U |
| 45 | D | D | D | D | D | D | F | F | U | U | U | U | U | U |
| 46 | D | D | D | D | D | F | U | D | D | D | D | D | F | U |
| 47 | D | D | F | U | U | U | U | D | D | F | U | U | U | U |
| 48 | D | F | U | U | U | U | U | D | F | U | U | U | U | U |
| 49 | D | D | D | D | F | F | U | D | D | D | D | F | F | U |
| 50 | D | D | F | F | U | U | U | D | D | F | F | U | U | U |
| 51 | D | F | F | U | U | U | U | D | F | F | U | U | U | U |
| 52 | D | F | F | F | F | F | U | D | F | F | F | F | F | U |
| 53 | D | D | F | F | F | F | U | D | D | F | F | F | F | U |
| 54 | F | F | F | F | F | F | F | D | D | D | D | D | D | D |
| 55 | D | D | F | F | F | U | U | U | D | D | D | D | D | D |

(continued)

| Format | Symbol number in a slot | | | | | | | | | | | | | |
|---|---|---|---|---|---|---|---|---|---|---|---|---|---|---|
| | 0 | 1 | 2 | 3 | 4 | 5 | 6 | 7 | 8 | 9 | 10 | 11 | 12 | 13 |
| 56 - 254 | Reserved | | | | | | | | | | | | | |
| 255 | UE determines the slot format for the slot based on *tdd-UL-DL-ConfigurationCommon,* or *tdd-UL-DL-ConfigurationDedicated* and, if any, on detected DCI formats | | | | | | | | | | | | | |

[Regarding XDD]

Additional coverage extension technologies have been introduced compared to LTE communication services in the 5G mobile communication service. However, the actual 5G mobile communication service may use TDD system, which is generally suitable for services with a high proportion of downlink traffic. In addition, as a center frequency increases to expand a frequency band, a decrease in coverage of the base station and the UE occurs, and thus coverage enhancement is a key requirement for the 5G mobile communication service. In particular, the enhancement of the coverage of the uplink channel is a key requirement for the 5G mobile communication services, in order to support services where the transmit power of the UE is generally lower than the transmit power of the base station and the proportion of downlink traffic is higher, and because the proportion of downlink is higher than uplink in the time domain. There may be a method of increasing time resources of an uplink channel, lowering a center frequency, or increasing the transmit power of the UE as a method of physically enhancing the coverage of the uplink channel between the base station and the UE. However, changing the frequency may be limited because a frequency band is determined for each network operator. In addition, since the maximum transmit power of the UE is determined by regulation to reduce interference, there may be limitations on increasing the maximum transmit power of the UE to improve the coverage.

Therefore, in order to enhance the coverage of the base station and the UE, the resources of the uplink and downlink may be divided not only in the time domain according to the proportion of traffic on the uplink and downlink as in a TDD system, but also the resources of the uplink and downlink may be divided in the frequency domain as in an FDD system. In an embodiment, a system that is capable of flexibly dividing uplink resources and downlink resources in the time domain and frequency domain may be referred to as a cross division duplex (XDD) system, a flexible TDD system, a hybrid TDD system, a TDD-FDD system, a hybrid TDD-FDD system, and the like, and for convenience of description, in the present disclosure the system will be described as an XDD system. According to an embodiment, X in the XDD may mean time or frequency.

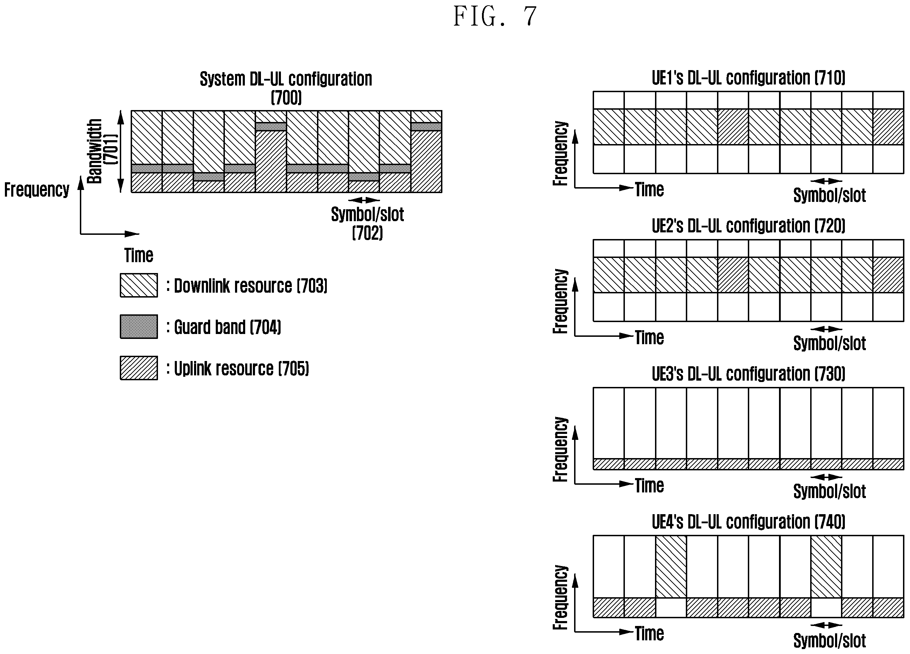

FIG. 7 is a view illustrating an uplink-downlink resource configuration of an XDD system that flexibly divides resources of the uplink and downlink in the time domain and frequency domain, according to an embodiment of the present disclosure.

With reference to FIG. 7, from the perspective of the base station, an uplink-downlink configuration 700 of the overall XDD system may flexibly allocate resources to each symbol or slot 702, depending on the proportion of traffic on the uplink and downlink, for an entire frequency band 701. However, this is only an example, and a unit to which resources are allocated is not limited to a symbol or slot 702, and resources may be flexibly allocated based on units such as a mini-slot. In this case, a guard band 704 may be allocated between frequency bands of a downlink resource 703 and an uplink resource 705. The guard band 704 may be allocated as a measure to reduce interference that is imposed on the reception of the uplink channel or signal by an out-of-band emission that occurs when the base station transmits the downlink channel or signal from the downlink resource 703. In this case, for example, UE 1 710 and UE 2 720, which overall have a higher downlink traffic than an uplink traffic, may be allocated a resource ratio of the downlink to the uplink of 4:1 in the time domain depending on a configuration of the base station. Simultaneously, UE 3 730 operating at a cell edge and lacking uplink coverage may be allocated only uplink resource in a specific time interval by the configuration of the base station. Additionally, UE 4 740 operating at the cell edge, which has poor uplink coverage but relatively high downlink and uplink traffic volumes, may be allocated higher uplink resources in the time domain and higher downlink resources in the frequency band for uplink coverage. As described in the example above, there are advantages in that UEs with relatively high downlink traffic operating at a cell center may be allocated more downlink resources in the time domain, while UEs with relatively low uplink coverage operating at the cell edge may be allocated more uplink resources in the time domain.

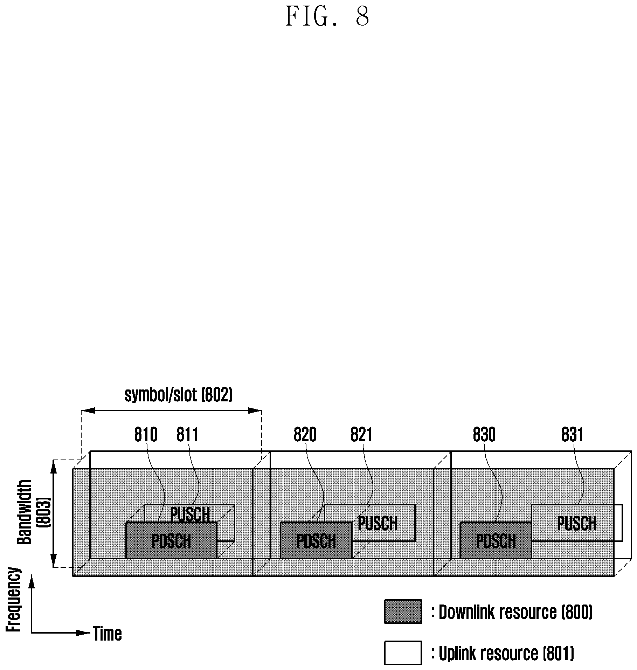

FIG. 8 is a view illustrating an example of an uplink-downlink resource configuration for a full duplex communication system that flexibly divides resources of the uplink and downlink in the time domain and frequency domain, according to an embodiment of the present disclosure.

According to an example illustrated in FIG. 8, a downlink resource 800 and an uplink resource 801 may be configured to overlap in part or in all in the time and frequency domains. A downlink transmission from the base station to the LTE may occur in a region configured as the downlink resource 800, and an uplink transmission from the UE to the base station may occur in a region configured as the uplink resource 801.

In an example of FIG. 8, all of a downlink resource 810 and an uplink resource 811 may be configured to overlap in a time resource corresponding to a symbol or slot 802 and a frequency resource corresponding to a bandwidth 803. In this case, since the downlink resource 810 and the uplink resource 811 overlap in time and frequency, downlink and uplink transmissions and receptions of the base station or the UE may occur simultaneously in the same time and frequency resource.

In another example of FIG. 8, some of the downlink resource 820 and the uplink resource 821 may be configured to overlap in the time resource corresponding to the symbol or slot and the frequency resource corresponding to the bandwidth 803. In this case, in some regions where the downlink resource 820 and the uplink resource 821 overlap, downlink and uplink transmissions and receptions of the base station or the LTE may occur simultaneously.

In still another example of FIG. 8, the downlink resource 830 and the uplink resource 831 may be configured not to overlap in the time resource corresponding to the symbol or slot and the frequency resource corresponding to the bandwidth 803.

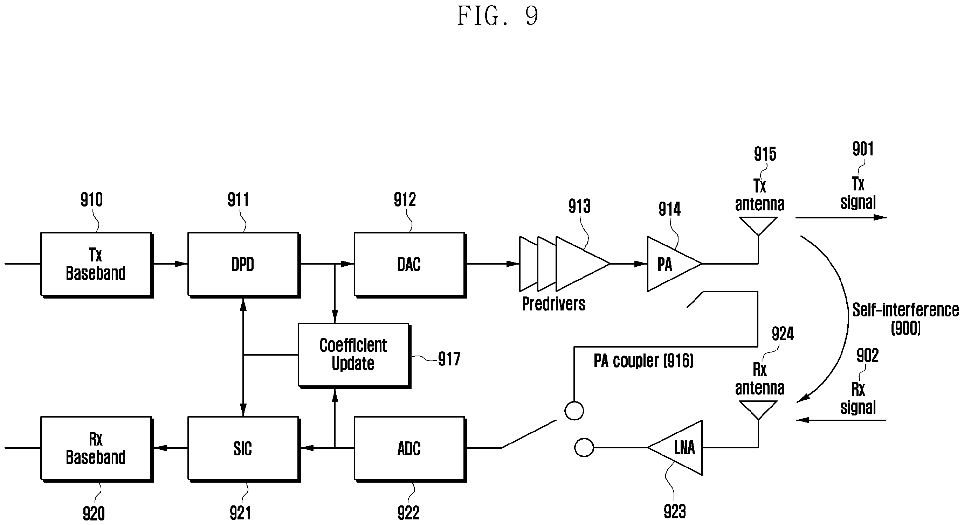

FIG. 9 is a view illustrating a transmission and reception structure for a duplex scheme according to an embodiment of the present disclosure.

The transmission and reception structure illustrated in FIG. 9 may be used in a base station device or a UE device. According to the transmission and reception structure illustrated in FIG. 9, a transmitter may be constituted of a transmit baseband (Tx baseband) block 910, a digital pre-distortion (DPD) block 911, a digital-to-analog converter (DAC) 912, a pre-driver 913, a power amplifier (PA) 914, a transmit antenna (Tx antenna) 915, and the like. Each block may perform the following roles

Transmit baseband block 910: Digital processing block for a transmit signal.
Digital pre-distortion block 911: Pre-distortion of a digital transmit signal.
Digital-to-analog converter 912: Converting a digital signal to an analog signal.
Pre-driver 913: Progressive power amplification of an analog transmit signal.
Power amplifier 914: Power amplification of an analog transmit signal.
Transmit antenna 915: Antenna for transmitting a signal.

According to the transmission and reception structure illustrated in FIG. 9, a receiver may be constituted of a receive antenna (Rx Antenna) 924, a low noise amplifier (LNA) 923, an analog-to-digital converter (ADC) 922, a successive interference cancellator 921, a receive baseband block (Rx Baseband) 920, and the like. Each block may perform the following roles

Receive antenna 924: Antenna for receiving signal.
Low noise amplifier 923: Amplifying power of an analog receive signal while minimizing amplification of a noise.
Analog-to-digital converter 922: Converting an analog signal to a digital signal.
Successive interference cancellator 921: Interference cancellator for a digital signal.
Receive baseband block 920: Digital processing block for a receive signal.

According to the transmission and reception structure illustrated in FIG. 9, there may be a power amplifier coupler (PA Coupler) 916 and a coefficient update block 917 for further signal processing between the transmitter and receiver. Each block may perform the following roles

Power amplifier coupler 916: Block for the purpose of observing waveform of analog transmit signal passed through power amplifier at receiver.
Coefficient update block 917: Updating various coefficients required for digital domain signal processing of the transmitter and receiver. Here, the calculated coefficients may be used to configure various parameters in a DPD 911 block of the transmitter and a SIC 921 block of the receiver.

The transmission and reception structure illustrated in FIG. 9 may be used for the purpose of effectively controlling interference between transmit and receive signals when operations of transmitting and receiving are performed simultaneously at the base station or the LTE device. For example, when transmission and reception occur simultaneously on any device, a transmit signal 901 transmitted through the transmit antenna 915 of the transmitter may be received through the receive antenna 924 of the receiver, in which case the transmit signal 901 received by the receiver may interfere with the receive signal 902 originally intended to be received by the receiver. The interference between the transmit signal 901 and the receive signal 902 received by the receiver is referred to as magnetic interference 900. For example, more specifically, when the base station device is simultaneously performing downlink transmission and uplink reception, a downlink signal transmitted by the base station may be received by the receiver of the base station, which may cause interference between the downlink signal transmitted by the base station and the uplink signal that the base station originally intended to receive by the receiver. When the LTE device simultaneously performs downlink reception and uplink transmission, an uplink signal transmitted by the LTE may be received by the receiver of the UE, which may cause interference between the uplink signal transmitted by the UE and the downlink signal originally intended to be received by the receiver. As described above, the interference between links in different directions, that is, the downlink signal and the uplink signal, at the base station and the LTE device, is also referred to as crosslink interference.

In an embodiment of the present disclosure, magnetic interference between a transmit signal (or a downlink signal) and a receive signal (or an uplink signal) may occur in a system where transmission and reception may occur simultaneously.

For example, the magnetic interference may occur in the XDD system described above.

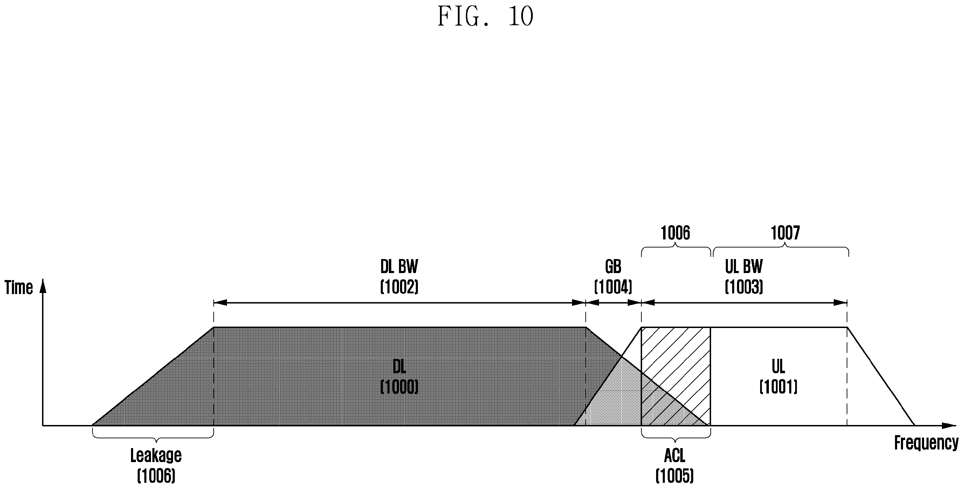

FIG. 10 is a view for illustrating an example of downlink and uplink resources configuration in the XDD system.

In case of the XDD, a downlink 1000 resource and an uplink 1001 resource may be distinguished in the frequency domain, in which case a guard band (GB) 1004 may exist between the downlink 1000 resource and the uplink 1001 resource. An actual downlink transmission may occur within a downlink bandwidth 1002, and an actual uplink transmission may occur within an uplink bandwidth 1003. In this case, leakage 1006 may occur outside an uplink or downlink transmission band. In a region where the downlink resource 1000 and the uplink resource 1001 are adjacent, interference due to such leakage (which may be referred to as adjacent carrier leakage (ACL), 1005) may occur. FIG. 10 illustrates an example in which the ACL 1005 occurs from the downlink 1000 to the uplink 1001. As the downlink bandwidth 1002 and uplink bandwidth 1003 are more closely adjacent, there may be a greater effect of signal interference by the ACL 1005, which may result in performance degradation. In an example, as illustrated in FIG. 10, some resource regions 1006 within the uplink band 1003 adjacent to the downlink band 1002 may be significantly affected by interference from the ACL 1005. Some resource regions 1007 within the uplink band 1003 that are relatively far from the downlink band 1002 may be less affected by interference from the ACL 1005. That is, there may the resource region 1006 that is relatively more affected by interference and the resource region 1007 that is relatively less affected by interference within the uplink band 1003. The guard band 1004 may be inserted between the downlink bandwidth 1002 and the uplink bandwidth 1003 for the purpose of reducing the performance degradation caused by the ACL 1005. While there is an advantage in that the larger size of the guard band 1004 may reduce the effect of interference caused by the ACL 1005 between the downlink bandwidth 1002 and the uplink bandwidth 1003, there is a disadvantage in that as the size of the guard band 1004 increases, there are fewer resources that may be used for transmission and reception, which may result in less resource efficiency. In contrast, a smaller size of the guard band 1004 may increase the amount of resources that may be used for transmission and reception, which has an advantage of increasing resource efficiency, but a disadvantage of increasing the effect of interference due to the ACL 1005 between the downlink bandwidth 1002 and the uplink bandwidth 1003. Therefore, it may be important to consider tradeoffs to determine an appropriate size of the guard band 1004.

[Method of operating XDD bandwidth part].

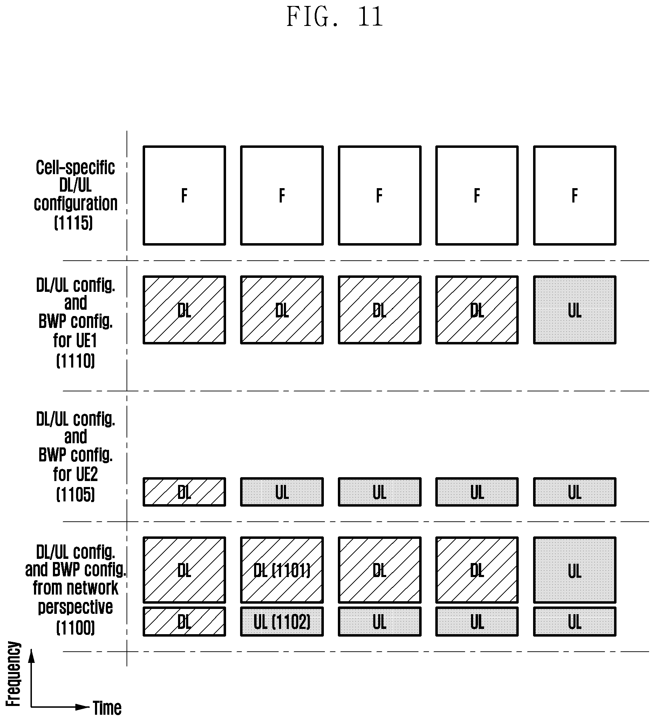

FIG. 11 is a view illustrating an example of an uplink-downlink configuration of the XDD system.

From the perspective of the base station, the uplink-downlink configuration 1100 of the overall XDD system may flexibly allocate resources to each symbol or slot according to the proportion of traffic in the uplink and downlink across the entire frequency band. In this case, a guard band may be allocated between the frequency bands between the downlink resource 1101 and the uplink resource 1102. This guard band may be allocated as a measure to reduce interference to the reception of an uplink channel or signal by out-of-band emission, which occurs when the base station transmits a downlink channel or signal from the downlink resource. In this case, for example, a UE 1110 that has more downlink traffic than uplink traffic overall due to a configuration of the base station may be allocated a greater proportion of the downlink resource than the uplink resource (the example in FIG. 11 assumes a ratio of downlink to uplink resources of 4:1 in the time domain). At the same time, a UE 1105 operating at a cell edge and lacking uplink coverage may be allocated a litter bit more downlink resource than uplink resource by the configuration of the base station (the example of FIG. 11 assumes a ratio of downlink to uplink resources of 1:4 in the time domain). As with the above example, more downlink resource may be allocated in the time domain to increase downlink transmission efficiency for UEs with high downlink traffic operating relatively near a cell center, and more uplink resource may be allocated in the time domain to enhance coverage for UEs operating relatively near a cell edge. In this case, the corresponding base station 1100 may configure most of time resources to F (flexible) when configuring a cell-specific DL/LTL configuration 1115 for a flexible DL/UL configuration.

In the present example, for LTEs that do not support full duplex, which allows simultaneous transmission and reception of uplink and downlink within the same time frequency resource, the base station may need to distinguish between the downlink and uplink resources of the UE 1110 receiving the downlink and the UE 1105 transmitting the uplink at a particular time (e.g., in the second to fourth time interval in FIG. 11). The distinction between the downlink and uplink resources may be performed through one of two methods below. A first method is a method of ensuring that frequency configuration information on DL BWP of UE 1 1110 and UL BWP of UE 2 1105 do not overlap each other. This method has an advantage of minimizing the effect on the implementation of the UE and base station, but it has a disadvantage of being inflexible and time-consuming because it requires BWP switching when there is a need to switch the proportion of frequency resources between the downlink and uplink within one hour. For convenience of description, the first method described above will be referred to as a BWP-based XDD operation method in the following. A second method is a method of allocating a scheduled PDSCH of LTE 1 1110 and a scheduled PUSCH of LTE 2 1105 so that they do not overlap with each other on the frequency axis. This method has an advantage in that it is very flexible since it is based on base station scheduling, and the rate of switch of frequency resource proportions between the downlink and uplink is very fast. However, since the frequency configuration information on the DL BWP of UE 1 1110 and the UL BWP of UE 2 1105 may overlap in part or in all, there is a risk that various problems as described below in subsequent embodiments may arise. For convenience of description, the second method described above will be referred to as a scheduling-based XDD operation method.

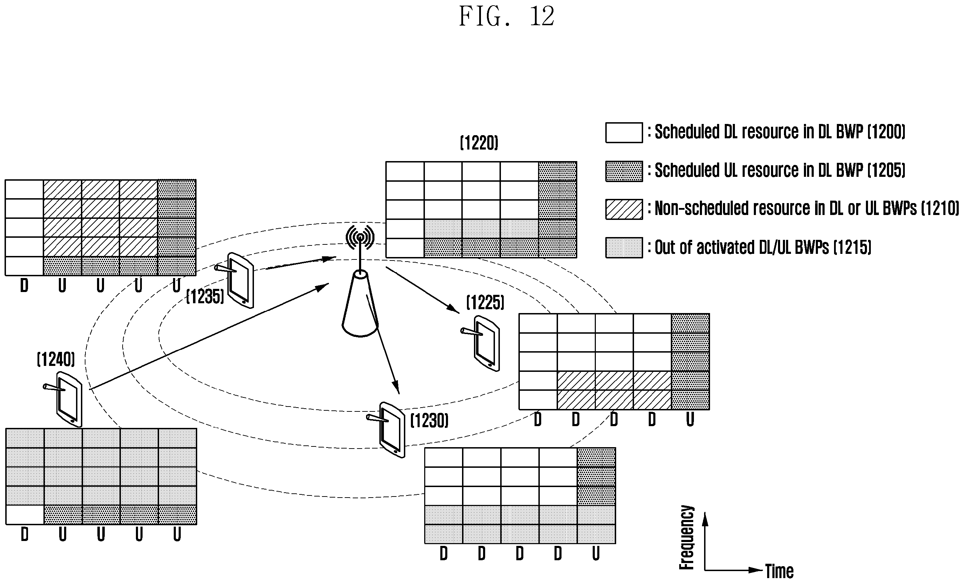

FIG. 12 is a view illustrating another example of an uplink-downlink configuration of the XDD system.

With reference to FIG. 12, the base station may appropriately use the two methods of distinguishing between the downlink and uplink frequency resources for the XDD. In an example, from the perspective of the base station, an uplink-downlink configuration such as a reference numeral of 1220 may be assumed. The base station may allocate a resource ratio of downlink to uplink of 4:1 in the time domain to LTEs 1225 and 1230 that have more downlink traffic than uplink traffic. In this case, when the base station applies the BWP-based XDD operation method described above to a certain UE (1230), a scheduled PDSCH 1200 and a scheduled PUSCH 1205 may not be allocated to a region 1215 other than an activated DL BWP and LTL BWP, so that an uplink/downlink throughput of the UE is partially limited. When the base station applies the scheduling-based XDD operation method described above to a certain UE (1225), the base station has a higher degree of scheduling freedom compared to the BWP-based XDD operation, and thus may allocate a PDSCH to a wide band as necessary (e.g., as in the first time interval of the reference numeral of 1225), or may not allocate a PDSCH to an interval that requires an uplink transmission of another UE (e.g., as in the second to fourth time interval of the reference numeral of 1225). Similarly, the base station may allocate a resource ratio of downlink to uplink of 1:4 in the time domain for LTEs 1235 and 1240 in which uplink traffic is greater than downlink traffic and/or uplink coverage is critical. In this case, when the base station applies the BWP-based XDD operation method described above to a certain UE (1240), a scheduled PDSCH 1200 and a scheduled PUSCH 1205 may not be allocated to a region 1215 other than an activated DL BWP and LTL BWP, so that an uplink/downlink throughput of the UE is partially limited. When the base station applies the scheduling-based XDD operation method described above to a certain UE (1235), the base station has a higher degree of scheduling freedom compared to the BWP-based XDD operation, and thus may allocate a PUSCH to a wide band as necessary (e.g., as in the fifth time interval of the reference numeral of 1235), or may not allocate a PUSCH to an interval that requires an downlink reception of another LTE (e.g., as in the second to fourth time interval of the reference numeral of 1235).

Meanwhile, in the example above, ambiguities in operations of the base station and LTE may arise in a resource 1210 that is included in the activated DL BWP or UL BWP, but in which the actual PDSCH or PUSCH is not allocated for an XDD operation. For example, in case of TRS (CSI-RS for tracking), since a smaller value of 52 RB and a BWP bandwidth over which the TRS is transmitted is used as a transmission bandwidth, there is a risk of considering that the TRS is transmitted in a region 1210 where no downlink resource such as a PDSCH has been allocated for the XDD operation in case of a LTE operating in an activated DL BWP that includes an XDD uplink band of another UE, such as the UE 1225. Similarly, there is a risk of considering that a periodic or semi-persistent uplink channel or signal, such as an SRS or PUCCH, is transmitted in a region 1210 where no downlink resource, such as a PUSCH, has been allocated for the XDD operation in case of a LTE operating in an activated UL BWP that includes an XDD downlink band of another UE, such as the UE 1235.

[PUSCH: Regarding transmission method]

Hereinafter, a scheduling method of PUSCH transmission will be described. PUSCH transmission may be dynamically scheduled by a UL grant in DCI or may operate according to a configured grant type 1 or type 2. Dynamic scheduling indication for PUSCH transmission is possible in a DCI format 0_0 or 0_1.

The configured grant type 1 PUSCH transmission does not receive the LTL grant through DCI, but may be semi-statically configured through reception of configuredGrantConfig including the rrc-ConfiguredUplinkGrant of Table 22 through higher signaling. The configured grant Type 2 PUSCH transmission may be semi-continuously scheduled by the UL grant in DCI after reception of the configuredGrantConfig that does not include the rrc-ConfiguredUplinkGrant of Table 22 through higher signaling. When PUSCH transmission is operated by a configured grant, parameters applied to PUSCH transmission may be applied through ConfiguredGrantConfig of Table 22, which is received through higher level signaling, except for dataScramblingIdentityPUSCH, txConfig, codebookSubset, maxRank, and scaling of UCI-OnPUSCH provided by pusch-Config of Table 23, which is higher signaling. When the UE is provided with a transform-Precoder in configuredGrantConfig of Table 22 through higher signaling , the UE applies tp-pi2BPSK in pusch-Config of Table 23 to PUSCH transmission operating by the configured grant.

[Table 22]

```
ConfiguredGrantConfig ::= SEQUENCE {
 frequencyHopping ENUMERATED {intraSlot, interSlot} OPTIONAL, -- Need S,
  cg-DMRS-Configuration DMRS-UplinkConfig,
  mcs-Table ENUMERATED {qam256, qam64LowSE} OPTIONAL, -- Need S
  mcs-TableTransformPrecoder ENUMERATED {qam256, qam64LowSE}
  OPTIONAL, -- Need S
 uci-OnPUSCH SetupRelease { CG-UCI-OnPUSCH }
  OPTIONAL, -- Need M
  resourceAllocation ENUMERATED { resourceAllocationType0,
resourceAllocationType1, dynamicSwitch },
  rbg-Size ENUMERATED {config2} OPTIONAL, -- Need S
 powerControlLoopToUse ENUMERATED {n0, n1},
 p0-PUSCH-Alpha P0-PUSCH-AlphaSetId,
 transformPrecoder ENUMERATED {enabled, disabled} OPTIONAL, -- Need S
  nrofHARQ-Processes INTEGER(1..16),
 repK ENUMERATED {n1, n2, n4, n8},
 repK-RV ENUMERATED {s1-0231, s2-0303, s3-0000} OPTIONAL, -- Need R
 periodicity ENUMERATED {
  sym2, sym7, symlxl4, sym2x14, sym4x14, sym Sx 14, sym8x14, sym10x14, sym16x14,
  sym20x 14,
  sym32x14, sym40×14, sym64x14, sym80x14, sym128x14, sym160x14, sym256x14,
  sym320x14, sym512x14,
  sym640x14, sym1024x14, sym1280x14, sym2560x14, sym5120x14,
  sym6, sym1×12, sym2×12, sym4x12, sym5x12, sym8x12, sym10x12, sym16x12,
  sym20x12, sym32x12,
  sym40x12, sym64x12, sym80×12, sym128x12, sym160x12, sym256x12, sym320x12,
  sym512x12, sym 640x 12,
  sym1280x12, sym2560×12 },
  configuredGrantTimer INTEGER (1..64} OPTIONAL, -- Need R
  rrc-ConfiguredUplinkGrant SEQUENCE {
 timeDomainOffset INTEGER (0..5119),
 timeDomainAllocation INTEGER (0..15),
 frequencyDomainAllocation BIT STRING (SIZE(18)),
  antennaPort INTEGER (0..31),
  dmrs-SeqInitialization INTEGER (0..1) OPTIONAL, -- Need R
 precodingAndNumberOfLayers INTEGER (0..63),
  srs-ResourceIndicator INTEGER (0..15) OPTIONAL, -- Need R
  mcsAndTBS INTEGER (0..31),
 frequencyHoppingOffset INTEGER (1.. maxNrofPhysicalResourceBlocks-1)
  OPTIONAL, -- Need R
 pathlossReferenceIndex INTEGER (0..maxNrofPUSCH-PathlossReferenceRSs-1), ... }
  OPTIONAL, -- Need R ... }
```

Next, a PUSCH transmission method will be described. A DMRS antenna port for PUSCH transmission is the same as an antenna port for SRS transmission. PUSCH transmission may follow a codebook-based transmission method and a non-codebook-based transmission method, respectively, according to whether a value of txConfig in pusch-Config of Table 23, which is higher signaling, is a 'codebook' or a 'nonCodebook'.

As described above, PUSCH transmission may be dynamically scheduled through the DCI format 0_0 or 0_1 and be semi-statically configured by the configured grant. When the UE is indicated to schedule PUSCH transmission through the DCI format 0_0, the UE performs a beam configuration for PUSCH transmission using the pucch-spatial-RelationInfoID corresponding to the LTE-specific PUCCH resource corresponding to a minimum ID in the uplink BWP activated in a serving cell, and in this case, PUSCH transmission is performed based on a single antenna port. The UE does not expect scheduling of PUSCH transmission through the DCI format 0_0 within the BWP in which a PUCCH resource including the pucch-spatialRelationInfo is not configured. When the UE has not been configured with txConfig in pusch-Config of Table 23, the UE does not expect to be scheduled in the DCI format 0_1.
[Table 23]

```
PUSCH-Config ::= SEQUENCE {
  dataScramblingIdentityPUSCH INTEGER (0..1023) OPTIONAL, -- Need S
 txConfig ENUMERATED {codebook, nonCodebook} OPTIONAL, -- Need S
  dmrs-UplinkForPUSCH-MappingTypeA SetupRelease { DMRS-UplinkConfig }
  OPTIONAL, -- Need M
  dmrs-UplinkForPUSCH-MappingTypeB SetupRelease { DMRS-UplinkConfig }
  OPTIONAL, -- Need M
 pusch-PowerControl PUSCH-PowerControl
  OPTIONAL, -- Need M
 frequencyHopping ENUMERATED {intraSlot, interSlot}
  OPTIONAL, -- Need S
 frequencyHoppingOffsetLists SEQUENCE (SIZE (1..4)) OF INTEGER (1..
  maxNrofPhysicalResourceBlocks-1)
  OPTIONAL, -- Need M
  resourceAllocation ENUMERATED { resourceAllocationType0,
resourceAllocationType1, dynamicSwitch},
 pusch-TimeDomainAllocationList SetupRelease { PUSCH-
  TimeDomainResourceAllocationList } OPTIONAL, -- Need M
 pusch-AggregationFactor ENUMERATED { n2, n4, n8 }
  OPTIONAL, -- Need S
 mcs-Table ENUMERATED {qam256, qam64LowSE} OPTIONAL, -- Need S
 mcs-TableTransformPrecoder ENUMERATED {qam256, qam64LowSE}
  OPTIONAL, -- Need S
transformPrecoder ENUMERATED {enabled, disabled}
  OPTIONAL, -- Need S
 codebookSubset ENUMERATED {fullyAndPartialAndNonCoherent,
partialAndNonCoherent,nonCoherent}
  OPTIONAL, -- Cond codebookBased
 maxRank INTEGER (1..4)
  OPTIONAL, -- Cond codebookBased
rbg-Size ENUMERATED { config2}
  OPTIONAL, -- Need S
uci-OnPUSCH SetupRelease { UCI-OnPUSCH}
  OPTIONAL, -- Need M
 tp-pi2BPSK ENUMERATED {enabled}
  OPTIONAL, -- Need S ... }
```

Next, a codebook-based PUSCH transmission will be described. Codebook-based PUSCH transmission may be dynamically scheduled through a DCI format 0_0 or 0_1, and operate semi-statically according to a configured grant. When the codebook-based PUSCH is dynamically scheduled by the DCI format 0_1 or semi-statically configured by the configured grant, the LTE determines a precoder for PUSCH transmission based on an SRS resource indicator (SRI), a transmission precoding matrix indicator (TPMI), and a transmission rank (the number of PUSCH transmission layers).

In this case, the SRI may be given through a field SRS resource indicator in DCI or may be configured through srs-ResourceIndicator, which is higher signaling. When transmitting the codebook-based PUSCH, the UE may be configured with at least one SRS resource, and up to two SRS resources. When the UE is provided with an SRI through DCI, the SRS resource indicated by the corresponding SRI means an SRS resource corresponding to the SRI among SRS resources transmitted before the PDCCH including the corresponding SRI. In addition, the TPMI and transmission rank may be given through field precoding information and number of layers in DCI or may be configured through precodingAndNumberOfLayers, which are higher signaling. The TPMI is used for indicating a precoder applied to PUSCH transmission. When the UE is configured with one SRS resource, the TPMI is used for indicating a precoder to be applied in the configured one SRS resource. When the UE is configured with a plurality of SRS resources, the TPMI is used for indicating a precoder to be applied in the SRS resource indicated through the SRI.

A precoder to be used for PUSCH transmission is selected from an uplink codebook having the same number of antenna ports as a nrofSRS-Ports value in SRS-Config, which is higher signaling. In codebook-based PUSCH transmission, the UE determines a codebook subset based on the TPMI and codebookSubset in pusch-Config, which is higher signaling. The codebookSubset in the pusch-Config, which is higher signaling may be configured with one of

'fullyAndPartialAndNonCoherent', 'partialAndNonCoherent', or 'noncoherent' based on a UE capability reported by the UE to the base station. When the UE reports 'partialAndNonCoherent' as the UE capability, the UE does not expect that a value of codebookSubset, which is higher signaling, is configured as 'fullyAndPartialAndNonCoherent'. In addition, when the UE reports 'noncoherent' as the UE capability, the UE does not expect that a value of a codebookSubset, which is higher signaling, is configured as 'fullyAndPartialAndNonCoherent' or 'partialAndNonCoherent'. When nrofSRS-Ports in the SRS-ResourceSet, which is higher signaling indicates two SRS antenna ports, the UE does not expect that a value of the codebookSubset, which is higher signaling is configured as 'partialAndNonCoherent'.

The UE may be configured with one SRS resource set in which a value of usage in the SRS-ResourceSet, which is higher signaling is configured as a 'codebook', and one SRS resource in the corresponding SRS resource set may be indicated through the SRI. When several SRS resources are configured in the SRS resource set in which a value of usage in the SRS-ResourceSet, which is higher signaling is configured as a 'codebook', the UE expects that a value of nrofSRS-Ports in the SRS-Resource, which is higher signaling is configured with the same value for all SRS resources.

The UE transmits, to the base station, one or a plurality of SRS resources included in an SRS resource set in which a value of usage is configured as a 'codebook' according to higher signaling, and the base station selects one of SRS resources transmitted by the UE and indicates the UE to perform PUSCH transmission using transmission beam information of the corresponding SRS resource. In this case, in codebook-based PUSCH transmission, the SRI is used as information for selecting an index of one SRS resource and is included in DCI. Additionally, the base station includes information indicating a transmission rank and TPMI to be used by the UE for PUSCH transmission in the DCI. The UE applies a precoder indicated by the TPMI and a transmission rank indicated based on the transmission beam of the corresponding SRS resource to perform PUSCH transmission using the SRS resource indicated by the SRI.

Next, non-codebook-based PUSCH transmission will be described. Non-codebook-based PUSCH transmission may be dynamically scheduled through a DCI format 0_0 or 0_1, and operate semi-statically according to a configured grant. When at least one SRS resource is configured in the SRS resource set in which a value of usage in the SRS-ResourceSet, which is higher signaling is configured as a 'nonCodebook', the UE may be scheduled to non-codebook based PUSCH transmission through the DCI format 0_1.

The UE may be configured with one non-zero power CSI-RS resource (NZP CSI-RS) connected to an SRS resource set in which a value of usage in the SRS-ResourceSet is configured as 'nonCodebook' through higher signaling. The UE may calculate a precoder for SRS transmission by measuring the NZP CSI-RS resource connected to the SRS resource set. When the difference between a last reception symbol of an aperiodic NZP CSI-RS resource connected to the SRS resource set and a first symbol of aperiodic SRS transmission in the UE is less than 42 symbols, the UE does not expect that information on the precoder for SRS transmission is updated.

When a value of resourceType in the SRS-ResourceSet, which is higher signaling is configured as 'aperiodic', the connected NZP CSI-RS is indicated by a SRS request, which is a field in the DCI format 0_1 or 1_1. In this case, when the connected NZP CSI-RS resource is an acyclic NZP CSI-RS resource and a value of a filed SRS request in the DCI format 0_1 or 1_1 is not '00', it may indicate that the NZP CSI-RS connected to the SRS resource set exists. In this case, the corresponding DCI should not indicate cross carrier or cross BWP scheduling. In addition, when a value of the SRS request indicates existence of the NZP CSI-RS, the corresponding NZP CSI-RS is positioned in a slot in which the PDCCH including the SRS request field is transmitted. In this case, TCI states configured to the scheduled subcarrier are not configured to QCL-Type D.

When a periodic or semi-persistent SRS resource set is configured, the connected NZP CSI-RS may be indicated through the associatedCSI-RS in the SRS-ResourceSet, which is higher signaling. For non-codebook-based transmission, the UE does not expect that spatialRelationInfo, which is higher signaling for SRS resources, and associatedCSI-RS in SRS-ResourceSet, which is higher signaling, are configured together.

When a plurality of SRS resources are configured, the LTE may determine a precoder to be applied to PUSCH transmission and a transmission rank based on the SRI indicated by the base station. In this case, the SRI may be indicated through a field SRS resource indicator in DCI or may be configured through srs-ResourceIndicator, which is higher signaling. As with the above-described codebook-based PUSCH transmission, when the UE is provided with an SRI through DCI, the SRS resource indicated by the SRI means an SRS resource corresponding to the SRI among SRS resources transmitted before the PDCCH including the SRI. The UE may use one or a plurality of SRS resources for SRS transmission, and the maximum number of SRS resources that may be simultaneously transmitted in the same symbol in one SRS resource set is determined by a UE capability reported by the LTE to the base station. In this case, SRS resources simultaneously transmitted by the UE occupy the same RB. The UE configures one SRS port for each SRS resource. Only one SRS resource set in which a value of usage in the SRS-ResourceSet, which is higher signaling is configured as a 'nonCodebook' may be configured, and up to four SRS resources for non-codebook-based PUSCH transmission may be configured.

The base station transmits one NZP-CSI-RS connected to the SRS resource set to the UE, and the UE calculates a precoder to use when transmitting one or more SRS resources in the corresponding SRS resource set based on a measurement result upon receiving the corresponding NZP-CSI-RS. The UE applies the calculated precoder when transmitting one or a plurality of SRS resources in the SRS resource set in which usage is configured as a 'nonCodebook' to the base station, and the base station selects one or a plurality of SRS resources among the received one or the plurality of SRS resources. In this case, in non-codebook-based PUSCH transmission, the SRI indicates an index capable of expressing one or a combination of a plurality of SRS resources, and the SRI is included in the DCI. In this case, the number of SRS resources indicated by the SRI transmitted by the base station may be the number of transmission layers of the PUSCH, and the UE transmits the PUSCH by applying a precoder applied to SRS resource transmission to each layer.

[PUSCH: Preparation procedure time]

Next, a PUSCH preparation procedure time will be described. In case that the base station schedules the LTE to transmit a PUSCH using a DCI format 0_0 or a DCI format 0_1, the UE may require a PUSCH preparation procedure time for transmitting the PUSCH by applying a transmission method indicated through DCI (transmission precoding method of SRS resource, the number of transmission layers, and spatial domain transmission filter). In NR, the PUSCH preparation procedure time is defined in consideration of this. The PUSCH preparation procedure time of the LTE may follow Equation 3 below.

[Equation 3]

$$T_{proc,2} = \max(( N_2 + d_{2,1} + d_2)( 2048 + 144 ) \kappa 2^{-\mu} T_c + T_{ext} + T_{switch}, d_{2,2} )$$

In the aforementioned $T_{proc,2}$, each variable may have the following meaning.

- $N_2$: The number of symbols determined according to UE processing capability 1 or 2 and numerology $\mu$ according to a capability of the UE. When it is reported as UE processing capability 1 according to the capability report of the UE, it has a value of Table 24, and when it is reported as UE processing capability 2 and it is configured through higher layer signaling that the UE processing capability 2 may be used, it may have a value of Table 25.

[Table 24]

| $\mu$ | PUSCH preparation time $N_2$ [symbols] |
|---|---|
| 0 | 10 |
| 1 | 12 |
| 2 | 23 |
| 3 | 36 |

[Table 25]

| $\mu$ | PUSCH preparation time $N_2$ [symbols] |
|---|---|
| 0 | 5 |
| 1 | 5.5 |
| 2 | 11 for frequency range 1 |

- $d_{2,1}$: The number of symbols, determined by 0 in case that resource elements of a first OFDM symbol of PUSCH transmission are all configured with DM-RS only, and 1 otherwise.
- $\kappa$: 64
- $\mu$: It follows a value of $\mu_{DL}$ or $\mu_{UL}$, whichever makes Tproc,2 larger. $\mu_{DL}$ denotes numerology of a downlink in which a PDCCH including DCI scheduling a PUSCH is transmitted, and $\mu_{UL}$ denotes numerology of an uplink in which a PUSCH is transmitted.
- $T_c$: it has $1/(\Delta f_{max} \cdot N_f)$, $\Delta f_{max}=480 \cdot 10^3$ $Hz$, and $N_f=4096$.

- d$_{2,2}$: In case that DCI scheduling the PUSCH indicates BWP switching, it follows a BWP switch time, otherwise, it has 0.
- d$_2$: In case that OFDM symbols of a PUCCH and a PUSCH with high priority index and a PUCCH with low priority index overlap in time, a value of d$_2$ of the PUSCH with high priority index is used. Otherwise, d$_2$ is 0.
- T$_{ext}$: In case that the UE uses a shared spectrum channel access method, the UE may calculate T$_{ext}$ and apply the T$_{ext}$ to the PUSCH preparation procedure time. Otherwise, the text is assumed to be 0.
- T$_{switch}$: In case that an uplink switching interval is triggered, T$_{switch}$ is assumed to be switching interval time. Otherwise, it is assumed to be 0.

When considering time axis resource mapping information of a PUSCH scheduled through DCI and the timing advance (TA) effect between uplink and downlink, the base station and the UE judge that the PUSCH preparation procedure time is not sufficient in case that a first symbol of the PUSCH starts earlier than a first uplink symbol in which the CP starts after T$_{proc,2}$ from the last symbol of the PDCCH including DCI in which the PUSCH is scheduled. If not, the base station and the UE judge that the PUSCH preparation procedure time is sufficient. Only in case that the PUSCH preparation procedure time is sufficient, the UE transmits the PUSCH, and in case that the PUSCH preparation procedure time is not sufficient, the UE may ignore DCI scheduling the PUSCH.

Next, repeated PUSCH transmission will be described. When the UE is scheduled with PUSCH transmission in a DCI format 0_1 in the PDCCH including the CRC scrambled with C-RNTI, MCS-C-RNTI, or CS-RNTI, if the UE is configured with higher layer signaling, pusch-AgreegationFactor, the same symbol allocation is applied in consecutive slots as many as pusch-AgreegationFactor, and PUSCH transmission is limited to single rank transmission. For example, the LTE should repeat the same TB in consecutive slots as many as pusch-AgreegationFactor, and apply the same symbol allocation to each slot. Table 26 represents a redundancy version applied to PUSCH repeated transmission for each slot. When the UE is scheduled with PUSCH repeated transmission in a DCI format 0_1 in a plurality of slots and at least one symbol of slots in which repeated PUSCH transmission is performed according to information on higher layer signaling, tdd-UL-DL-ConfigurationCommon or tdd-UL-DL-ConfigurationDedicated is indicated as a downlink symbol, the UE does not perform PUSCH transmission in a slot in which the corresponding symbol is positioned.

[Table 26]

| rv$_{Id}$ indicated by the DCI scheduling the PUSCH | rv$_{Id}$ to be applied to $n$th transmission occasion | | | |
| --- | --- | --- | --- | --- |
| | $n$ mod 4 = 0 | $n$ mod 4 = 1 | $n$ mod 4 = 2 | $n$ mod 4 = 3 |
| 0 | 0 | 2 | 3 | 1 |
| 2 | 2 | 3 | 1 | 0 |
| 3 | 3 | 1 | 0 | 2 |
| 1 | 1 | 0 | 2 | 3 |

[PUSCH: Regarding repeated transmission]

Hereinafter, repeated transmission of an uplink data channel in the 5G system will be described in detail. The 5G system supports two types of repeated transmission methods for the uplink data channel: PUSCH repeated transmission type A and PUSCH repeated transmission type B. The UE may be configured with one of PUSCH repeated transmission types A or B as higher layer signaling.

PUSCH repeated transmission type A (PUSCH repetition type A)

- As described above, within a single slot, a symbol length and a position of a start symbol of the uplink data channel are determined by a time domain resource allocation method, and the base station may notify the LTE of the number of repeated transmissions through higher layer signaling (e.g., RRC signaling) or L1 signaling (e.g., DCI).
- The UE may repeatedly transmit the same uplink data channel in consecutive slots of the repeated transmit interval, which is identified on the basis of the length of the uplink data channel configured based on the start symbol and the number of repeated transmissions. In this case, in the repeat transmit interval, in case that there is a slot configured as a downlink by the base station to the UE or at least one symbol configured as a downlink among symbols of the uplink data channel with which the UE is configured, the UE omits the uplink data channel transmission in the corresponding slot or symbol, but counts the number of repeated transmissions of the uplink data channel.

PUSCH repeated transmission type B (PUSCH repetition type B)

- As described above, within a single slot, a start symbol and a length of the uplink data channel are determined by a time domain resource allocation method, and the base station may notify the UE of the number of repeated transmissions (numberofrepetitions) through higher signaling (e.g., RRC signaling) or L1 signaling (e.g., DCI).

- First, a nominal repetition of the uplink data channel is determined based on the start symbol and length of the configured uplink data channel as the following. A slot at which the $n^{th}$ nominal repetition starts is given by

$$K_s + \left\lfloor \frac{S + n \cdot L}{N_{symb}^{slot}} \right\rfloor$$

, and a symbol starting at the slot is given by $\mathrm{mod}(S + n \cdot L, N_{symb}^{slot})$ . A slot at which

$$K_s + \left\lfloor \frac{S + (n+1) \cdot L - 1}{N_{symb}^{slot}} \right\rfloor$$

the $n^{th}$ nominal repetition ends is given by , and a symbol ending at the slot is

given by $\mathrm{mod}(S + (n+1) \cdot L - 1, N_{symb}^{slot})$ . Here, n=0,..., numberofrepetitions-1, S is a start symbol of a configured uplink data channel, and L is a symbol length of the configured uplink data channel. $K_s$ represents a slot

at which PUSCH transmission starts and $N_{symb}^{slot}$ represents the number of symbols per slot.

- The LTE may determine a specific OFDM symbol as an invalid symbol for PUSCH repeated transmission type B in the following cases.

    1. A symbol configured as a downlink by tdd-UL-DL-ConfigurationCommon or tdd-UL-DL-ConfigurationDedicated may be determined to be an invalid symbol for PUSCH repeated transmission type B.
    2. Symbols indicated by ssb-PositionsInBurst in SIB 1 for SSB reception in unpaired spectrum (TDD spectrum) or ssb-PositionsInBurst in ServingCellConfigCommon that is higher layer signaling may be determined to be invalid symbols for PUSCH repeated transmission type B.
    3. Symbols indicated through pdcch-ConfigSIB 1 in MIB to transmit a control resource set connected to Type0-PDCCH CSS set in unpaired spectrum (TDD spectrum) may be determined to be invalid symbols for PUSCH repeated transmission type B.
    4. In unpaired spectrum (TDD spectrum), when numberOfInvalidSymbolsForDL-UL-Switching that is a higher layer signaling is configured, symbols configured as a downlink by tdd-UL-DL-ConfigurationCommon or tdd-UL-DL-ConfigurationDedicated may be determined to be invalid symbols for as many symbols as numberOfInvalidSymbolsForDL-UL-Switching.

- Additionally, an invalid symbol may be configured in a higher layer parameter (e.g., InvalidSymbolPattern). The higher layer parameters (e.g., InvalidSymbolPattern) provide a symbol level bitmap across one or two slots so that an invalid symbol may be configured. In the bitmap, 1 represents an invalid symbol. Additionally, a period and pattern of the bitmap may be configured through the higher layer parameter (e.g., periodicityAndPattern). When the higher layer parameter (e.g., InvalidSymbolPattern) is configured and the InvalidSymbolPatternIndicator-ForDCIFormat0_1 or InvalidSymbolPatternIndicator-ForDCIFormat0_2 parameter represents 1, the UE applies an invalid symbol pattern, when the parameter represents 0, the LTE does not apply an invalid symbol pattern. When the higher layer parameter (e.g., InvalidSymbolPattern) is configured and InvalidSymbolPatternIndicator-ForDCIFormat0_1 or InvalidSymbolPatternIndicator-ForDCIFormat0_2 parameter is not configured, the UE applies an invalid symbol pattern.

After an invalid symbol is determined, for each nominal repetition, the UE may consider symbols other than an invalid symbol as valid symbols. When one or more valid symbols are included in each nominal repetition, the nominal repetition may include one or more actual repetitions. Here, each actual repetition includes a consecutive set of valid symbols that may be used for PUSCH repeated transmission type B within a single slot. When an OFDM symbol length of a nominal repetition is not 1, the UE may ignore the transmission for the corresponding actual repetition when a length of the actual repetition becomes 1.

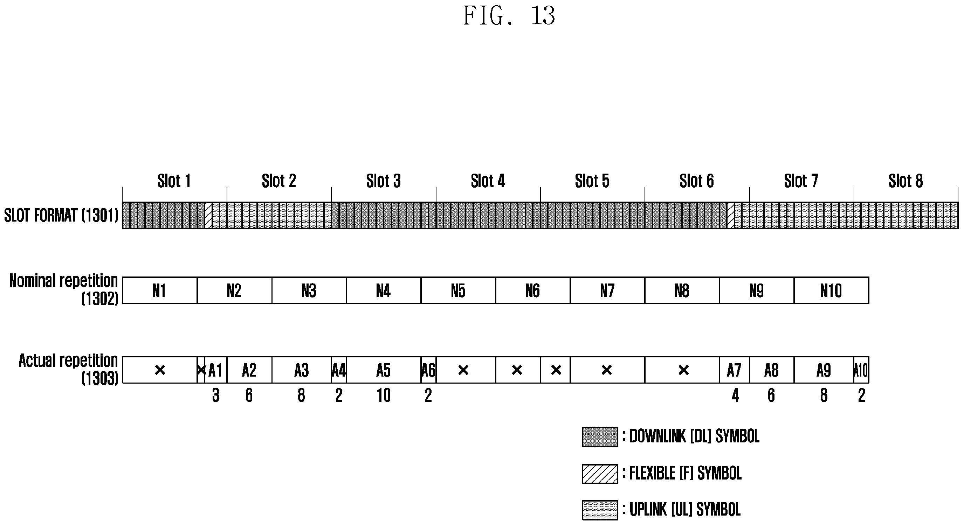

FIG. 13 illustrates an example of PUSCH repetition type B, according to an embodiment of the present disclosure.

FIG. 13 illustrates a case in which the LTE is configured with a transmission start symbol S of 0, a length L of a transmission symbol of 10, and the number of repeated transmissions of 10 for a nominal repetition, which may be represented as N1 to N10 in the drawing (1302). In this case, the LTE may judge an invalid symbol in consideration of a slot format 1301 to determine an actual repetition 1303, which may be represented as A1 to A10 in the drawing. In this case, according to the method of determining an invalid symbol and an actual repetition described above, PUSCH repetition type B is not transmitted for a symbol in which a slot format is determined to be a downlink (DL), and when a slot boundary exists within a nominal repetition, the nominal repetition may be divided into two actual repetitions with respect to the slot boundary. For example, A1, which means a first actual repetition, may be constituted of three OFDM symbols, and A2, which may be transmitted next, may be constituted of six OFDM symbols.

In addition, with respect to PUSCH repeated transmission, in NR Release 16, the following additional methods may be defined for LTL grant-based PUSCH transmission and configured grant-based PUSCH transmission crossing a slot boundary.

- Method 1 (mini-slot level repetition): Through one UL grant, two or more PUSCH repeated transmissions within one slot or crossing the boundary of consecutive slots are scheduled. In addition, for Method 1, time domain resource allocation information in DCI indicates a resource of a first repeated transmission. In addition, time domain resource information of the remaining repeated transmissions may be determined according to time domain resource information of the first repeated transmission and an uplink or downlink direction determined for each symbol of each slot. Each repeated transmission occupies consecutive symbols.
- Method 2 (multi-segment transmission): Two or more PUSCH repeated transmissions are scheduled in consecutive slots through one UL grant. In this case, one transmission is designated for each slot, and different start points or repetition lengths may be different for each transmission. In addition, in Method 2, time domain resource allocation information in DCI indicates a start point and repetition length of all repeated transmissions. In addition, in case of performing repeated transmission in a single slot through Method 2, when several bundles of consecutive uplink symbols exist in the corresponding slot, each repeated transmission is performed for each bundle of uplink symbols. When a bundle of consecutive uplink symbols is uniquely present in the corresponding slot, one PUSCH repeated transmission is performed according to a method of NR release 15.
- Method 3: Two or more PUSCH repeated transmissions are scheduled in consecutive slots through two or more LTL grants. In this case, one transmission is designated for each slot, and the nth LTL grant may be received before PUSCH transmission scheduled to the n-1th UL grant ends.
- Method 4: Through one UL grant or one configured grant, one or several PUSCH repeated transmissions in a single slot, or two or more PUSCH repeated transmissions may be supported across the boundary of consecutive slots. The number of repetitions indicated by the base station to the UE is only a nominal value, and the number of repeated PUSCH transmissions actually performed by the UE may be greater than the nominal number of repetitions. Time domain resource allocation information within DCI or within a configured grant means a resource of the first repeated transmission indicated by the base station. Time domain resource information of the remaining repeated transmission may be determined with reference to at least resource information of the first repeated transmission and the uplink or downlink direction of the symbols. When time domain resource information of repeated transmission indicated by the base station spans the slot boundary or includes an uplink/downlink switching point, the repeated transmission may be divided into a plurality of repeated transmissions. In this case, the repeated transmission may include one repeated transmission for each uplink period in one slot.

[PUSCH: Frequency hopping process]

Hereinafter, frequency hopping of an uplink data channel (physical uplink shared channel (PUSCH)) in the 5G system will be described in detail.

In the 5G, as a frequency hopping method for the uplink data channel, two methods are supported for each PUSCH repeated transmission type. First, PUSCH repeated transmission type A supports intra-slot frequency hopping and inter-slot frequency hopping, and PUSCH repeated transmission type B supports inter-repetition frequency hopping and inter-slot frequency hopping.

An intra-slot frequency hopping method supported by PUSCH repeated transmission type A is a method in which the UE switches and transmits allocated resources in the frequency domain in two hops within a single slot by a configured frequency offset. In the intra-slot frequency hopping, a start RB for each hop may be represented by Equation 4.

[Equation 4]

$$RB_{start} = \begin{cases} RB_{start} & i = 0 \\ \left( RB_{start} + RB_{offset} \right) \bmod N_{BWP}^{size} & i = 1 \end{cases}$$

In Equation 4, i=0 and i=1 represent a first hop and a second hop, respectively, and $RB_{start}$ represents the start RB in UL BWP and is calculated from the frequency resource allocation method. $RB_{offset}$ represents a frequency offset between two hops through a higher layer parameter. The number of symbols in the first hop may be denoted by $\lfloor N_{symb}^{PUSCH,s}/2 \rfloor$, and the number of symbols in the second hop may be denoted by $N_{symb}^{PUSCH,s} - \lfloor N_{symb}^{PUSCH,s}/2 \rfloor$. $N_{symb}^{PUSCH,s}$ is a length of PUSCH transmission within a single slot, represented by the number of OFDM symbols.

Next, an inter-slot frequency hopping method supported by PUSCH repeated transmission types A and B is a method in which the UE switches and transmits allocated resources in the frequency domain for each slot by a configured frequency offset. In the inter-slot frequency hopping, a start RB for $n_s^\mu$ slot may be represented by Equation 5.

[Equation 5]

$$RB_{start}\left(n_s^\mu\right) = \begin{cases} RB_{start} & n_s^\mu \bmod 2 = 0 \\ \left(RB_{start} + RB_{offset}\right) \bmod N_{BWP}^{size} & n_s^\mu \bmod 2 = 1 \end{cases}$$

In Equation 5, $n_s^\mu$ is a current slot number in multi-slot PUSCH transmission, $RB_{start}$ is a start RB in LTL BWP and is calculated from the frequency resource allocation method. $RB_{offset}$ represents a frequency offset between two hops through a higher layer parameter.

Next, an inter-repetition frequency hopping method supported by PUSCH repeated transmission type B is to shift and transmit allocated resources in the frequency domain for one or a plurality of actual repetitions within each nominal repetition by a configured frequency offset. $RB_{start}(n)$, which is an index of the start RB in the frequency domain for one or a plurality of actual repetitions within the nth nominal repetition, may follow Equation 6 below.

[Equation 6]

$$RB_{start}\left(n\right) = \begin{cases} RB_{start} & n \bmod 2 = 0 \\ \left(RB_{start} + RB_{offset}\right) \bmod N_{BWP}^{size} & n \bmod 2 = 1 \end{cases}$$

In Equation 6, n represents an index of nominal repetition and $RB_{offset}$ represents an RB offset between two hops through a higher layer parameter.

In an embodiment of the present disclosure, a special form of transmitter and receiver structure may be required to effectively process magnetic interference between a transmit signal (or downlink signal) and a receive signal (or uplink signal). For example, transmitter and receiver structure illustrated in FIG. 9 may be considered. The transmitter and receiver structure illustrated in FIG. 9 may process the magnetic interference described above in a variety of methods. In an example, a DPD 911 block of the transmitter may pre-distort a transmit signal 901 in the digital domain to minimize leakage power emitted to adjacent bands (which may correspond, for example, to adjacent carrier leakage (ACL) 1005 illustrated in FIG. 10). In another example, a SIC 921 block in the transmitter may serve to remove a transmit signal received by the receiver, that is, magnetic interference, from a receive signal. Additionally, various transmission and reception technologies may be applied to effectively control interference. In order to effectively process the interference between the transmitter and receiver at the base station or UE device, it is necessary to be able to configure parameter values of respective transmitter and receiver blocks to specific values. In this case, optimal parameter values of the respective transmitter and receiver blocks to effectively process the interference may differ depending on an uplink and downlink transmission resource pattern, and accordingly, when the uplink and downlink transmission resource pattern switch, a certain amount of delay time may occur for each device to switch the pattern.

In an embodiment of the present disclosure, there are provided various embodiments of configuring resources for uplink and downlink transmission and reception in the time and frequency domains, and a method of performing a switch from a specific uplink and downlink transmission and reception resource pattern to a different uplink and downlink transmission and reception resource pattern.

Hereinafter, higher layer signaling may be signaling corresponding to at least one or a combination of one or more of the following signaling.

- MIB (Master Information Block)
- SIB (System Information Block) or SIB X (X=1, 2, ...)
- RRC (Radio Resource Control)
- MAC (Medium Access Control) CE (Control Element)
- LTE Capability Reporting
- UE assistance information or message

In addition, L1 signaling may be signaling corresponding to at least one or a combination of one or more of the following physical layer channels or signaling methods.

- PDCCH (Physical Downlink Control Channel)
- DCI (Downlink Control Information)
- UE-specific DCI
- Group common DCI
- Common DCI
- Scheduling DCI (e.g., DCI used for the purpose of scheduling downlink or uplink data)
- Non-scheduling DCI (e.g., DCI that are not intended to schedule downlink or uplink data)
- PUCCH (Physical Uplink Control Channel)
- UCI (Uplink Control Information)

<First embodiment: Method of configuring resources in XDD system>

A first embodiment of the present disclosure is directed to a method and device for configuring resources for transmission and reception of an uplink or downlink in the time domain and frequency domain through cell-specific configuration information in an XDD system. With the method of configuring resources for transmission or reception of an uplink or downlink according to an embodiment of the present disclosure, the UE may be configured with an uplink resource and a downlink resource on different frequency domains within the same time domain. Accordingly, the time domain resources in which the UE is capable of performing uplink transmission or downlink reception may increase, thereby enhancing uplink coverage of the UE and the base station as described above. Hereinafter, for convenience of description, a resource configuration for transmission or reception of an uplink or downlink will be referred to as an uplink-downlink configuration.

Specifically, as described above, in the XDD system, the UE may be allocated resources for uplink and downlink transmission and reception that are divided not only in the time domain but also in the frequency domain, so that the resource configuration for uplink or downlink transmission and reception may be configured in the time domain and frequency domain, respectively, instead of being configured only in the time domain as in a TDD system. The base station may control an interference effect caused by an out-of-band (OOB) emission, which is caused by the relative closeness of frequency bands of the uplink and downlink resources compared to FDD, by configuring the guard band to the LTE through the resource configuration for transmission or reception of the uplink or downlink in the time domain and frequency domain. In addition, the UE may judge in which frequency bands the uplink or downlink may actually be scheduled and transmitted and received, even if an uplink BWP and a downlink BWP have the same center frequency, through the resource configuration for transmission and reception of the uplink or downlink in both the time domain and the frequency domain.

Hereinafter, methods of configuring uplink or downlink in the time domain and frequency domain of the XDD system is provided.

The following methods may be considered as methods of configuring resources for uplink or downlink transmission and reception in the time domain and frequency domain of the XDD system.

[Method 1]

The base station may indicate a configuration of the uplink and downlink in the time domain for each frequency band by dividing an entire frequency band into n frequency bands (a specific method of dividing the entire frequency band into n frequency bands is proposed in a second embodiment) in order to configure the resources for uplink or downlink transmission and reception in the time domain and the frequency domain to the UE. Each of the n frequency bands may be constituted of a collection of consecutive resource blocks, which may be referred to as a resource block set (RBS) or a resource block group, and will be referred to as RBS in the present disclosure for convenience of description. The uplink-downlink configuration information configured for each frequency band may include uplink-downlink pattern information and subcarrier information that is referenced. A periodicity in the time domain, the number of consecutive downlink slots from a start point of each pattern, the number of symbols in the next slot, the number of consecutive uplink slots from an end of the pattern, and the number of symbols in the next slot may be indicated in the uplink-downlink pattern information. In this case, a slot or symbol that is not indicated as the uplink and downlink may be judged as a flexible slot/symbol.

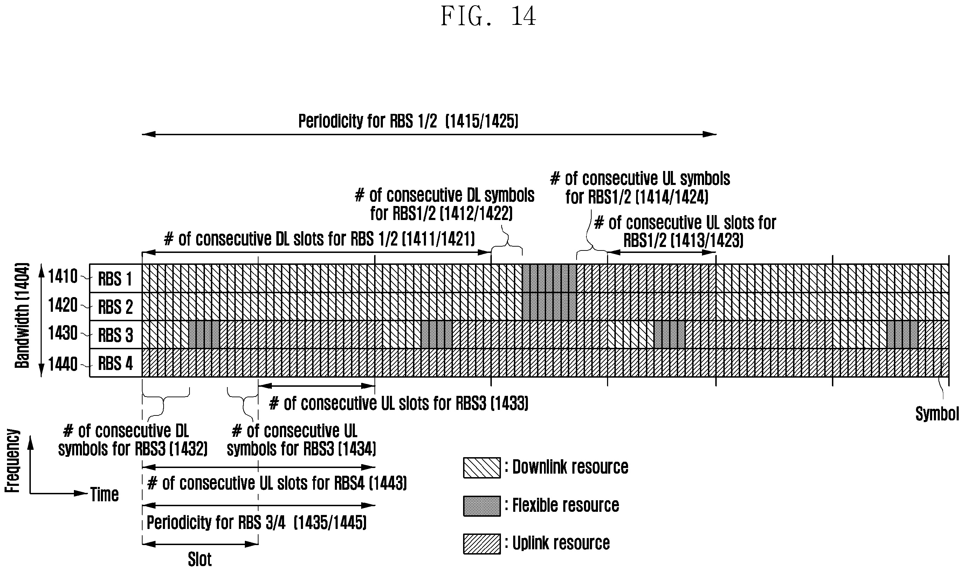

FIG. 14 is a view for describing an uplink-downlink configuration in the time domain and frequency domain of the XDD system, according to an embodiment of the present disclosure.

With reference to FIG. 14, an entire frequency band 1404 is divided into n=4 RBSs 1410, 1420, 1430, and 1440, and for each RBS, an uplink-downlink in the respective time domain is configured. For example, the periodicity of RBS 1 1410 may be configured as 5 slots (1415, or 5 ms at a subcarrier spacing of 15 kHz), the number of consecutive downlink slots from a start point of a pattern is 3 (1411), the number of downlink symbols in the next slot is 4 (1412), the number of consecutive uplink slots from an end of the pattern is 1 (1413), and the number of uplink symbols in the next slot is 3 (1414). An uplink-downlink configuration of RBS 2 1420 may be the same as RBS 1 1410. That is, the periodicity of RBS 2 1420 may be configured as 5 slots (1425, or 5 ms at a subcarrier spacing of 15 kHz), the number of consecutive downlink slots from a start point of a pattern is 3 (1421), the number of downlink symbols in the next slot is 4 (1422), the number of consecutive uplink slots from an end of the pattern is 1 (1423), and the number of uplink symbols in the next slot is 3 (1424). The uplink-downlink periodicity of RBS 3 1430 may be configured as 2 slots (1435, or 2 ms at a subcarrier spacing of 15 kHz), the number of consecutive downlink slots from a start point of a pattern is 0, the number of downlink symbols in the next slot is 6 (1432), the number of consecutive uplink slots from an end of the pattern is 1 (1433), and the number of uplink symbols in the next slot is 4 (1434). Lastly, the uplink-downlink periodicity of RBS 4 1440 may be configured as 2 slots (1445, or 2 ms at a subcarrier spacing of 15 kHz), the number of consecutive downlink slots from a start point of a pattern is 0, the number of downlink symbols in the next slot is 0, the number of consecutive uplink slots from an end of the pattern is 2 (1443), and the number of uplink symbols in the next slot is 0.

Since the uplink-downlink is configured for each RBS within a limited overhead, the resource of the uplink or downlink may be configured with relative flexibility in the time domain.

[Method 2]

The base station indicates an uplink-downlink configuration in the frequency domain to the UE by dividing an entire frequency band into n frequency bands when configuring the uplink-downlink in the time domain and the frequency domain. For each pattern, uplink-downlink configuration information may include uplink-downlink pattern information and subcarrier information that is referenced. The number of slot(s)/symbol(s) in the time domain with the same pattern, the number of consecutive downlink RBSs from a start point of the entire frequency band, the number of downlink RBs in the next RBS, the number of consecutive uplink RBSs from an end of the entire frequency band, and the number of uplink RBs in the next RBS may be indicated in the uplink-downlink pattern information. In this case, RBS and RB that are not indicated as the uplink and downlink may be judged to be flexible RBS/RB.

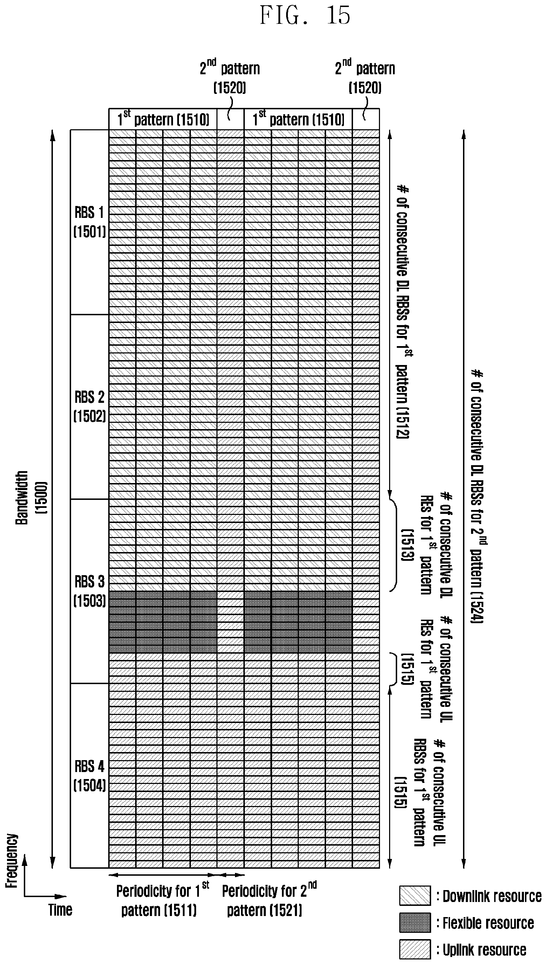

FIG. 15 is a view for describing an uplink-downlink configuration of time and frequency in an XDD system, according to another embodiment of the present disclosure.

With reference to FIG. 15, an entire frequency band 1500 is divided into n=4 RBSs 1501, 1502, 1503, and 1504, in which each RBS includes 24 RBs, and an uplink-downlink in the frequency domain is configured for each pattern. For example, the period of a first pattern 1510 may be configured as 4 slots (1511, or 4 ms at a subcarrier spacing of 15 kHz), the number of consecutive downlink RBSs from an start point of the entire frequency band as 2 (1512) and the number of downlink RBs of the next RBS as 12 (1513), and the number of consecutive uplink RBSs from an end of the entire frequency band as 1 (1514) and the number of uplink RBs of the next RBS as 4 (1515). The period of a second pattern 1520 may be configured as 1 slot (1521, or 1 ms at a subcarrier spacing of 15 kHz) and the number of consecutive uplink RBSs from the end of the entire frequency band as 4 (1524).

Since the uplink-downlink is configured in the frequency domain with a period of the time domain for each pattern and the uplink-downlink is configured in the frequency domain with a limited overhead for the uplink-downlink configuration, the uplink or downlink may be configured with relative flexibility in the frequency domain. In this case, in the XDD system, the guard band may be efficiently configured as a measure to reduce the interference of the uplink channel or signal reception by the out-of-band emission that occurs when the base station transmits the downlink channel or signal from the downlink resource.

<Second embodiment: Method of distinguishing frequency bands in XDD system>

A second embodiment of the present disclosure describes a method of dividing the entire frequency band into n frequency bands in the first embodiment described above. Specifically, in the XDD system, it is necessary to divide the frequency resources into specific units to configure the uplink-downlink resources, rather than dividing the uplink and downlink resources only in time as in the TDD system. For example, when the entire frequency band is 100 MHz, it may be constituted of 273 RBs when the subcarrier spacing is 30 kHz. In this case, there may be a significant overhead in configuring each of the 273 RBs as the uplink or downlink resource.

Therefore, the following methods may be considered as a method of dividing a frequency band into groups for uplink-downlink configuration in the time domain and frequency domain in the XDD system.

[Method 1]

RBs in a frequency band may be constituted as n groups, each group including a specific number of RBs. The number of RBs for each group may be determined through an uplink-downlink pattern configuration or based on a predetermined number for each other. For example, when the subcarrier spacing (SCS) is 30 kHz and the entire frequency band is 100 MHz, the total number of RBs is 273. In this case, the number of RBs for each group is 24. When the number of RBs is indicated by being included in the uplink-downlink pattern configuration or configured with a predetermined number of 24, the entire frequency band of 100 MHz may be constituted of a total of n = [total number of RB/ number of RB for each group] = [273/24] = 12 groups. This may be efficiently determined to reduce the overhead for the uplink-downlink configuration in the frequency domain as described above.

The method described above is a method of constituting RBs in a frequency band into n groups of a specific number of RBs, in which the number of RBs configured for each group is not limited to an uplink-downlink pattern configuration or a predetermined value for each other. Information required to configure the number of RBs for each group may also be included in a system information block, user-specific configuration information through dedicated higher layer signaling, MAC CE, or downlink control information that is L1 signaling.

[Method 2]

The entire frequency band may be constituted of n groups of a specific frequency band. A specific frequency band value for each group may be determined through the uplink-downlink pattern configuration or based on a predetermined number for each other. For example, in case that the entire frequency band is 100 MHz, and each group has a frequency band of 20 MHz, either indicated by being included in the uplink-downlink pattern configuration or in case that a predetermined frequency band for each other is 20 MHz, the entire frequency band of 100 MHz may be constituted of a total of n = [total frequency bands/frequency bands configured for each group] = [100/20] = 5 groups. This may be efficiently determined to reduce the overhead for the uplink-downlink configuration in the frequency domain as described above.

The method described above is a method of constituting a frequency band into n groups of a specific frequency band, in which the method of being configured with a frequency band value for each group is not limited to configuring an uplink-downlink pattern. The frequency band value for each group may be configured with a predetermined number of RBs, or information used to configure the frequency band value for each group may be included in a system information block, user-specific configuration information through dedicated higher layer signaling, MAC CE, or downlink control information that is L1 signaling.

[Method 3]

The entire frequency band may be constituted of two groups with reference to the guard band. That is, in case that a frequency band of the guard band is indicated through the uplink-downlink pattern configuration, the entire frequency band may be constituted of two groups with respect to the guard band, which are a frequency band lower than the guard band and a frequency band higher than the guard band. For example, when a start position and size of the guard band in the entire frequency band of 100 MHz is configured as 50 CRBs with the 100th CRB as a start point with respect to point A, up to the 99th CRB from point A, which is a frequency band lower than the guard band, may be divided into a first group and the 150th CRB to the last CRB into a second group. This may be efficiently determined to reduce the overhead for the uplink-downlink configuration in the frequency domain as described above. In particular, it is very difficult to implement the base station to allocate resources in such a manner that the downlink or uplink are not continuous at the same occasion, and as described above, the interference caused by OOB may occur between the uplink and downlink. Therefore, when the downlink or uplink needs to be configured to be continuous at all times, the two groups may be efficiently divided by the guard band configured between the downlink and uplink.

The method described above is a method of constituting a frequency band into two groups based on the guard band, in which the method of being configured with a guard band related configuration is not limited to configuring an uplink-downlink pattern. The guard band may be configured with a predetermined number of RBs, or information used to configure the guard band may be included in a system information block, user-specific configuration information through dedicated higher layer signaling, MAC CE, or downlink control information that is L1 signaling.

<Third embodiment: Method of configuring uplink and downlink in XDD system>

According to an embodiment of the present disclosure, uplink and downlink resources may be flexibly configured in the time and frequency domains. That is, any time and frequency resource may be configured as the uplink or downlink. Hereinafter, in describing the present disclosure, being configured as an uplink or downlink in any time and frequency resource will be referred to as an "uplink-downlink configuration (UL_DL_Configuration)". The uplink-downlink configuration may be constituted of a downlink symbol, an uplink symbol, a flexible symbol, etc.

According to an embodiment of the present disclosure, the uplink-downlink configuration may be switched statically, semi-statically, or dynamically. According to an embodiment of the present disclosure, the base station may configure or indicate the uplink-downlink configuration information to the UE with higher layer signaling, L1 signaling, or a combination of higher layer signaling and L1 signaling. In an example, the base station may perform the uplink-downlink configuration to the UE through higher layer signaling. In another example, the base station may perform one or a plurality of uplink-downlink configurations to the UE through higher layer signaling, and one of the uplink-downlink configurations may be activated through higher layer signaling (e.g., MAC CE) or L1 signaling. The UE may obtain uplink-downlink configuration information from the base station, and signal reception may be expected from a resource configured as a downlink, and signal transmission may be expected from a resource configured as an uplink. In particular, various methods for the uplink-downlink configuration may follow the first and second embodiments described above, as an example.

According to an embodiment of the present disclosure, the uplink-downlink configuration may be switched based on L1 signaling (e.g., DCI). More specifically, the base station may transmit a DCI format that includes an indicator to switch arbitrary uplink-downlink configuration A to arbitrary uplink-downlink configuration B to the LTE through PDCCH. The UE may receive a DCI format that includes an indicator to switch the uplink-downlink configuration from the base station, and may switch arbitrary uplink configuration A to arbitrary uplink configuration B based on the content indicated in the received DCI format.

According to an embodiment of the present disclosure, a table constituted of a plurality of uplink-downlink configurations for switching the uplink-downlink configuration may be predefined or configured from the base station to the UE through higher layer signaling. For example, an "uplink-downlink configuration table" constituted of N uplink-downlink configurations {uplink-downlink configuration #1, uplink-downlink configuration #2, uplink-downlink configuration #3, ..., uplink-downlink configuration #N} may be predefined or configured from the base station to the UE through higher layer signaling. The base station may transmit an indicator that activates arbitrary uplink-downlink configuration #X in the uplink-downlink configuration table to the LTE through L1 signaling (e.g., in DCI format). The LTE may activate uplink-downlink configuration #X as indicated by L1 signaling (e.g., DCI format) received from the base station based on a predefined or preconfigured uplink-downlink configuration table.

According to an embodiment of the present disclosure, when the uplink-downlink configuration is switched, an additional switch delay time $T_{delay}$ may be considered. As described above, the optimal parameter values of the respective transmitter and receiver blocks to effectively process the interference between the downlink and uplink may be different depending on the uplink-downlink transmission resource patterns. Accordingly, a certain amount of delay time ($T_{delay}$) may occur to switch the transmitter and receiver parameter values in response to switching of the uplink-downlink configuration.

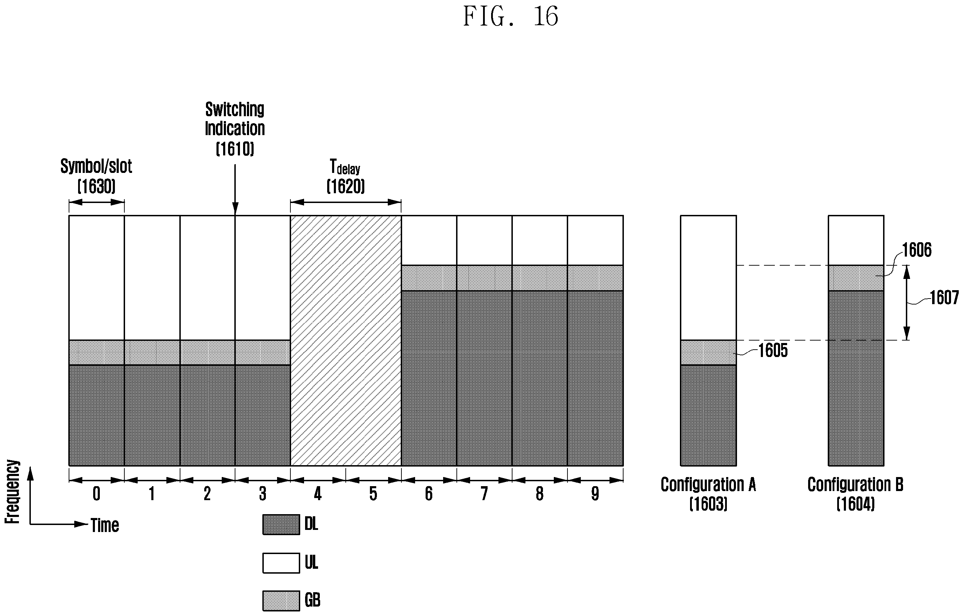

FIG. 16 is a view for describing an example of switching an uplink-downlink configuration according to an embodiment of the present disclosure.

FIG. 16 illustrates an example in which configuration switching occurs between arbitrary uplink-downlink configuration A 1603 and arbitrary uplink-downlink configuration B 1604. A unit of resource in the time domain may be a symbol or a slot or any other various unit of time (e.g., a mini-slot) 1630, and the example of FIG. 16 assumes a unit of slot. In the example of FIG. 16, the base station transmits an uplink-downlink configuration switching indicator 1610 to the LTE in slot 3 to switch the uplink-downlink configuration from uplink-downlink configuration A 1603 to uplink-downlink configuration B 1604. In this case, a switch time corresponding to $T_{delay}$ 1620 may be required to switch the uplink-downlink configuration from uplink-downlink configuration A 1063 to uplink-downlink configuration B 1604. That is, the base station may transmit the configuration switching indicator 1610 at arbitrary slot n to switch the uplink-downlink configuration, and may be operated based on the switched uplink-downlink configuration from an occasion after slot n+$T_{delay}$. When the UE receives the uplink-downlink configuration switching indicator from the base station in slot n, the UE may be operated based on the switched uplink-downlink configuration from an occasion after slot n+$T_{delay}$.

According to an embodiment of the present disclosure, the switch delay time $T_{delay}$ 1620 may be considered only when a particular "condition A" is satisfied. That is, $T_{delay}$ 1620 may have a value greater than zero when condition A is satisfied, and $T_{delay}$ 1620 may be zero when condition A is not satisfied. For example, $T_{delay}$ 1620 may be considered when at least one of the following conditions, or a combination of one or more of the following conditions, is satisfied.

[Condition 1].

- The switch delay time $T_{delay}$ may be required when a direction of the uplink-downlink on a specific frequency domain resource is switched in uplink-downlink configuration A before switching and in uplink-downlink configuration B after switching. For example, specifically, in the example of FIG. 16, in case that uplink-downlink configuration A 1603 is switched to uplink-downlink configuration B 1604, a specific frequency domain resource 1607 may be switched from the uplink to the downlink. As described above, in case that the direction switching between the uplink and the downlink occurs in the frequency domain resource, the switch delay time $T_{delay}$ 1620 may be required. In case that the direction switching between the uplink and the downlink occurs in the frequency domain, the interference state between the uplink and the downlink may be different than before. Therefore, the base station or the UE device may require the switch delay time $T_{delay}$, which is an additional time to configure the parameter values of the transmitter and receiver to the optimal values.

[Condition 2].

- In case that the guard band differed in uplink-downlink configuration A before switching and uplink-downlink configuration B after switching (e.g., a position or size of the guard band switched), a switch delay time $T_{delay}$ may be required. For example, specifically, in the example of FIG. 16, uplink-downlink configuration A 1603 before switching and uplink-downlink configuration B 1604 after switching may have different positions 1605 and 1606 of the respective guard bands, in which case a switch delay time $T_{delay}$ 1620 may be required. The guard bands in the uplink-downlink configuration may have different sizes and positions depending on the interference between the uplink and downlink. That is, configuration information on the guard band may also be different depending on the uplink-downlink configuration, and the guard band configuration being switched may mean that an interference situation between the uplink and downlink is different. Therefore, when the guard band is switched along with the uplink-downlink configuration being switched, it may mean that an interference state between the uplink and downlink has been different than before. Accordingly, an additional switch delay time Tdelay may be required to configure the parameter values of the transmitter and receiver at the base station or UE device to the optimal values.

[Condition 3].

- In case that uplink-downlink configuration A before switching corresponds to specific uplink-downlink configuration X, the switch delay time $T_{delay}$ 1620 may be required. In an embodiment, the specific uplink-downlink configuration X may be predefined, or explicitly preconfigured by the base station through higher layer signaling to the LTE, or implicitly determined by other system parameters. In an embodiment, there may be one or a plurality of specific uplink-downlink configurations X, and in case that there are a plurality of uplink-downlink configurations X, a plurality of uplink-downlink configurations may constitute a set of uplink-downlink configurations X. In this case, the switch delay time may be required in case that uplink-downlink configuration A before switching corresponds to arbitrary uplink-downlink configuration in the set of uplink-downlink configurations X.

[Condition 4].

- In case that uplink-downlink configuration B after switching corresponds to specific uplink-downlink configuration Y, the switch delay time $T_{delay}$ 1620 may be required. In an embodiment, the specific uplink-downlink configuration Y may be predefined, or explicitly preconfigured by the base station through higher layer signaling to the LTE, or implicitly determined by other system parameters. In an embodiment, there may be one or a plurality of specific uplink-downlink configurations Y, and in case that there are a plurality of uplink-downlink configurations Y, a plurality of uplink-downlink configurations may constitute a set of uplink-downlink configurations Y. In this case, the switch delay time may be required in case that uplink-downlink configuration B after switching corresponds to arbitrary uplink-downlink configuration in the set of uplink-downlink configurations Y.

[Condition 5].

- In case that uplink-downlink configuration A before switching corresponds to specific uplink-downlink configuration X and uplink-downlink configuration B after switching corresponds to specific uplink-downlink configuration Y, the switch delay time $T_{delay}$ 1620 may be required. In an embodiment, the specific uplink-downlink configuration X and the specific uplink-downlink configuration Y may be predefined, or explicitly preconfigured by the base station through higher layer signaling to the LTE, or implicitly determined by other system parameters. In an embodiment, there may be one or a plurality of each of the specific uplink-downlink configuration X and the specific uplink-downlink configuration Y, and in case that there may be a plurality of each of the specific uplink-downlink configuration X and the specific uplink-downlink configuration Y, each of the plurality of uplink-downlink configurations may constitute a set of uplink-downlink configurations X and a set of uplink-downlink configurations Y. In this case, the switch delay time may be required in case that uplink-downlink configuration A before switching corresponds to arbitrary uplink-downlink configuration in the set of uplink-downlink configurations X and uplink-downlink configuration B after switching corresponds to arbitrary uplink-downlink configuration in the set of uplink-downlink configurations Y .

According to an embodiment of the present disclosure, the switch delay time $T_{delay}$ 1620 may always be considered when a switch in the uplink-downlink configuration occurs. That is, the switch delay $T_{delay}$ may always be required, regardless of whether condition A described above is satisfied.

According to an embodiment of the present disclosure, a value of the switch delay time $T_{delay}$ of the uplink and downlink may be predefined as a fixed value. The base station and UE may determine the switch delay time based on a predefined $T_{delay}$ value.

According to an embodiment of the present disclosure, the value of the switch delay time $T_{delay}$ of the uplink and downlink may be explicitly configured or notified through higher layer signaling from the base station to the UE. The UE may determine the switch delay time based on the $T_{delay}$ value notified by the base station.

According to an embodiment of the present disclosure, the value of the switch delay time $T_{delay}$ of the uplink and downlink may be notified from the LTE to the base station through LTE capability signaling. The base station may determine the switch delay time based on the $T_{delay}$ value notified by the UE.

According to an embodiment of the present disclosure, the value of the switch delay time $T_{delay}$ of the uplink and downlink may be defined as a different value depending on a subcarrier spacing value. That is, $T_{delay,i}$ may be defined for a subcarrier interval i. For example, when the subcarrier spacing is 15 kHz, $T_{delay,0}$ may be required, when the subcarrier spacing is 30 kHz, $T_{delay,1}$ may be required, when the subcarrier spacing is 60 kHz, $T_{delay,2}$ may be required, when the subcarrier spacing is 120 kHz, $T_{delay,3}$ may be required.

According to an embodiment of the present disclosure, the value of the switch delay time $T_{delay}$ of the uplink and downlink may be defined as the same value regardless of the subcarrier spacing value.

According to an embodiment of the present disclosure, the value of the switch delay time $T_{delay}$ of the uplink and downlink may have a different value depending on the uplink-downlink configuration information before switching or after switching. For example, the switch delay time $T_{delay,1}$ may be required in case that uplink-downlink configuration A1 is switched to uplink-downlink configuration B1, and the switch delay time $T_{delay,2}$ may be required in case that uplink-downlink configuration A2 is switched to uplink-downlink configuration B2.

According to an embodiment of the present disclosure, the value of the switch delay time Tdelay of the uplink and downlink may have a different value depending on the range of a switched frequency domain resource. The range of frequency domain resource may be determined based on at least one of a band of the frequency domain resource or a size of the frequency domain resource.

According to an embodiment of the present disclosure, the UE may not expect any transmission or reception during the switch delay time $T_{delay}$. More specifically, in case that the LTE receives an indicator to switch the uplink-downlink configuration in slot n, which corresponds to a switch that requires the uplink-downlink switch delay time, the LTE may not expect any transmission or reception from slot n to slot n+$T_{delay}$.

According to an embodiment of the present disclosure, the uplink-downlink configuration switch indicator may be transmitted from the base station to the UE with at least one method of a common DCI (or a DCI format monitored in a common search space), or a group-common DCI (or a DCI format monitored in a type-3 common search space), or a LTE-specific DCI (or a DCI format monitored in a LTE-specific search space), or a DCI format that includes scheduling, or a DCI format that does not include scheduling.

According to an embodiment of the present disclosure, the uplink-downlink configuration switch indicator may include uplink-downlink configuration information on one or a plurality of slots. That is, the base station may transmit the configuration switch indicator that indicates the uplink-downlink configuration for one or a plurality of slots to the UE, and the UE may receive the configuration switch indicator that indicates the uplink-downlink configuration for one or a plurality of slots from the base station.

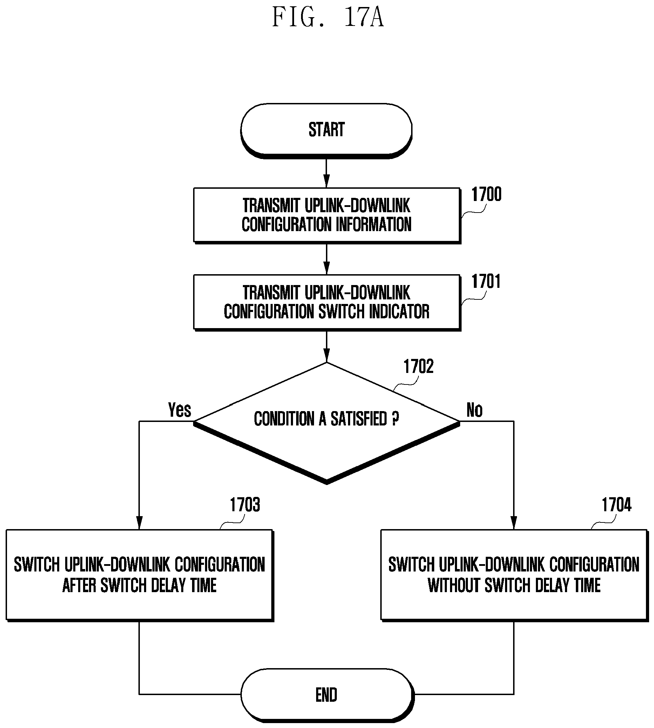

FIG. 17A is a view illustrating a base station procedure according to an embodiment of the present disclosure.

With reference to FIG. 17A, to describe a base station procedure, in step 1700, the base station may transmit configuration information on the uplink and downlink to the UE. In step 1701, the base station may transmit the uplink-downlink configuration switch indicator to the LTE. In step 1702, the base station may judge whether condition A is satisfied. When it is judged that condition A is satisfied, in step 1703, the base station may switch the uplink-downlink configuration in consideration of the switch delay time. When it is judged that condition A is not satisfied, in step 1704, the base station may switch the uplink-downlink configuration with no switch delay time.

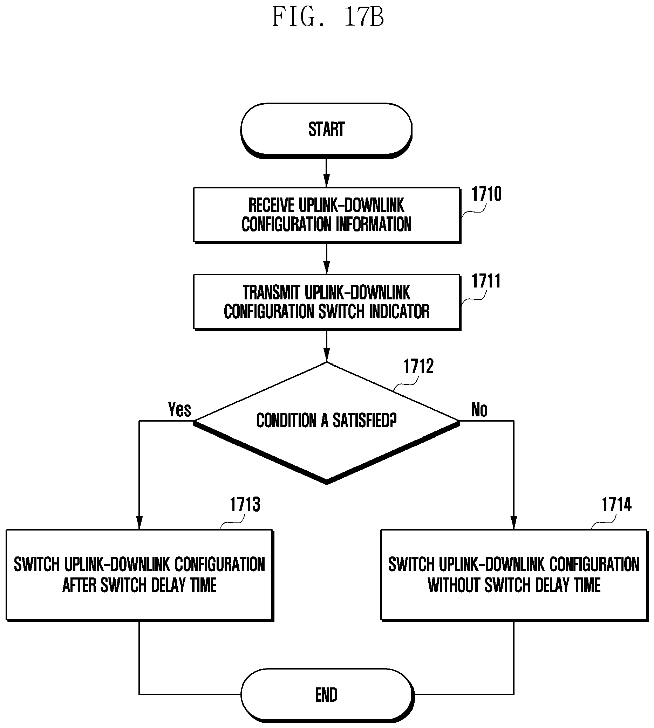

FIG. 17B is a view illustrating a UE procedure according to an embodiment of the present disclosure.

With reference to FIG. 17B, to describe a UE procedure, in step 1710, the UE may receive configuration information on the uplink and downlink from the base station. In step 1711, the UE may receive the uplink-downlink configuration switch indicator from the base station. In step 1712, the UE may judge whether condition A is satisfied. When it is judged that condition A is satisfied, in step 1713, the UE may switch the uplink-downlink configuration in consideration of the switch delay time. When it is judged that condition A is not satisfied, in step 1714, the LTE may switch the uplink-downlink configuration with no switch delay time.

<Fourth embodiment: Frequency hopping method for PUSCH transmission in XDD system>.

In an embodiment of the present disclosure, a method of frequency hopping for PUSCH transmission in the XDD system is described.

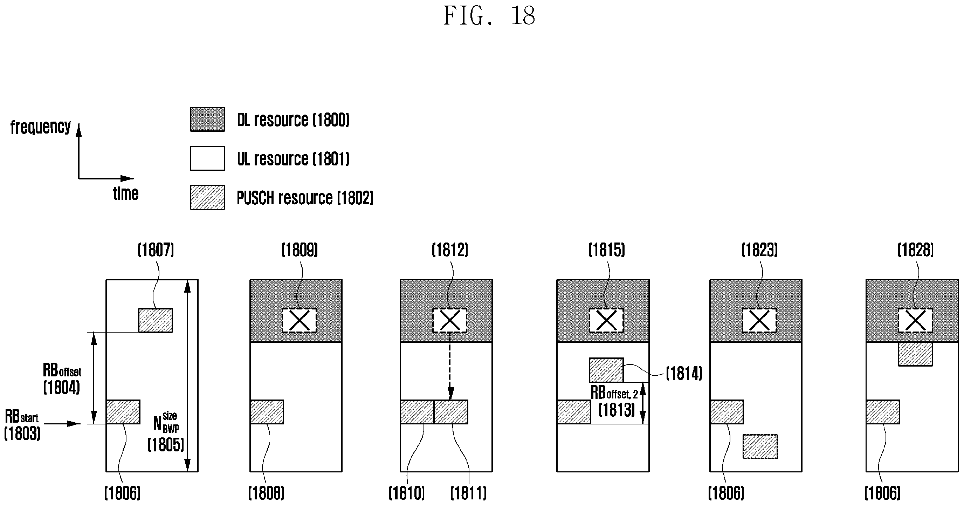

FIG. 18 is a view illustrating various frequency hopping methods that may be considered for PUSCH transmission in the XDD system according to an embodiment of the present disclosure. FIG. 18 illustrates intra-slot frequency hopping as an example, which may not be meant to imply that the various methods described in the present disclosure are limited to the intra-slot frequency hopping method.

With reference to FIG. 18, a conventional frequency hopping method may be used as it is for PUSCH transmission 1802 in a time resource (a slot or OFDM symbol) where only UL resource 1801 exists. That is, the UE may transmit for half of an OFDM symbol length scheduled for PUSCH transmission at $RB_{start}$ 1803, which is a start RB position of PUSCH transmission (1806), and may perform transmission for the remaining half of the OFDM symbol length at a frequency resource position that is away from $RB_{start}$ by a RB offset 1804, which is a specific $RB_{offset}$ (1807). In this case, a resource size 1805 of the bandwidth part may be considered according to Equations 4 to 6 described above so that frequency hopping may be performed within the bandwidth part in case that the RBoffset exceeds a size of the bandwidth part.

Meanwhile, in case that the UL resource 1801 and DL resource 1800 exist on different frequency resources in a specific time resource (a slot or OFDM symbol), additional rules may be required in addition to the conventional frequency hopping method. This case may occur through a method of configuring or indicating a TDD configuration to the UE in two dimensions within the same time resource, as described above. Alternatively, as described differently, this case may also occur when a currently activated uplink bandwidth part of the UE and a deactivated downlink bandwidth part configured for the corresponding UE overlap on some frequency resources. This case is because, due to the scheduling of the base station, the deactivated downlink bandwidth part may be used for the corresponding UE and the activated bandwidth part for another UE. Therefore, regarding the two cases, the former is a case in which some frequency resources are actually allocated as the DL resource, and the latter is a case in which some frequency resource regions that are actually allocated as the UL resource overlap the DL resource, but the two cases may be referred to as a case in which some frequency resources are the DL resource in the following.

As described above, in case that some frequency resources are the DL resource within a specific time resource, frequency hopping is applied for PUSCH transmission 1802 to be transmitted at a different hop, and when a resource at the corresponding hop is the DL resource, various processing methods for the corresponding hop may exist, which will be described in detail for each method below.

[Method 4-1]

As one method, in case that some of the frequency resources of a hop that is to be transmitted at a position that is away from the start RB position by a specific offset exist within the DL resource, the LTE may cancel transmission at the corresponding hop (1809). That is, PUSCH transmission may be performed only when all frequency resources used for PUSCH transmission at a specific hop exist in the UL resource (1808).

[Method 4-2]

As one method, in case that all the frequency resources of a hop that is to be transmitted at a position that is away from the start RB position by a specific offset exist within the DL resource, the LTE may cancel transmission at the corresponding hop (1809). In FIG. 18, only the case in which all the frequency resources where PUSCH is to be transmitted at the position hopped by the RB offset are included in the DL resource is considered, but in case that some frequency resources where PUSCH is to be transmitted at the position hopped by a specific RB offset are included in the UL resource and some other frequency resources are included in the DL resource, the UE may perform rate matching for the resource part included in the DL resource and perform PUSCH transmission for the frequency resources included in the UL resource.

[Method 4-3]

As one method, in case that some or all of the frequency resources for a hop that is to be transmitted at a position that is away from the start RB position by a specific offset exist within the DL resource, the LTE may perform transmission at the existing start RB position without performing a frequency hopping operation. As illustrated in FIG. 18, all of PUSCH transmission hops 1810 at the start RB position are within the UL resource and therefore transmitted at the corresponding position, but some or all of the frequency resources of PUSCH at a position 1812 hopped by a specific RB offset are within the DL resource and therefore not transmitted at the corresponding hop 1812, but may be transmitted at an unhopped start RB position 1811.

[Method 4-4]

In one method, the UE may be configured with a higher layer signaling value, indicated through L1 signaling, or configured or indicated through higher layer signaling and L1 signaling as an additional frequency offset value that may be used in Equations 4 to 6 above (e.g., $RB_{offset,2}$ 1813) from the base station, in which the additional frequency offset value may be used when the DL resource and UL resource exist on different frequency resources at a specific time. The UE may apply $RB_{offset,2}$ 1813, which is an additional frequency offset value to perform PUSCH transmission at a hop where all the frequency resources of the PUSCH transmission for which frequency hopping was performed do not overlap the DL resource (1814), in case that some or all of the frequency resources of a hop to be transmitted at a position that is away from the start RB position by a specific offset exist within the DL resource (1815).

[Method 4-5]

In one method, the UE may be configured with a higher layer signaling value, indicated through L1 signaling, or configured or indicated through higher layer signaling and L1 signaling as an additional bandwidth part size value that may be used in Equations 4 to 6 above (e.g., $N_{BWP}^{size}$ 1820) from the base station, in which the additional bandwidth part size value may be used when the DL resource and UL resource exist on different frequency resources at a specific time. In addition, the UE may reinterpret the bandwidth part size on its own in case that the DL resource and UL resource exist on different frequency resources at a specific time, without any additional configuration or indication of the bandwidth part size value from the base station. The bandwidth part size that is reinterpreted may be a size of the UL resource within a specific time resource where the DL resource and UL resource exist on different frequency resources. The UE may perform transmission for half of the time resource allocated to the PUSCH transmission at a start RB position (1816) and perform transmission for the corresponding hop at a frequency resource position 1822 shifted by an RB offset using the bandwidth part size that has been further configured or reinterpreted within a specific time resource. In FIG. 18, when the bandwidth part size that has been further configured or reinterpreted within a specific time resource is $N_{BWP,2}^{size}$ 1820 and a corresponding bandwidth part size is less than the configured RB offset, a corresponding hop may be transmitted at a position of the reference numeral 1822, as illustrated in FIG. 18, in which case a length of the RB offset may be a sum of $d_1$ 1817 and $d_2$ 1818.

[Method 4-6]

As one method, in case that some or all of the frequency resources for a hop that is to be transmitted at a position that is away from a start RB position by a specific offset exist within the DL resource (1828), the LTE may perform a frequency hopping operation to a frequency resource position that is able to shift farthest away from the start RB position within the available UL resource. In FIG. 18, when transmission for half of the time resources allocated for the PUSCH transmission at the start RB position has been performed (1824), and since some or all of the frequency resources of a hop that is away from the start RB position by a specific offset are the DL resource, it is possible to shift on the frequency resource by $d_3$ 1825 or $d_4$ 1826 within the available UL resource. In this case, for example, in case that $d_3$ is greater than $d_4$, the UE may perform the PUSCH transmission at a hop that is shifted by $d_3$ (1827).

The LTE may also support a method that combines some of the methods of Methods 4-1 to 4-6 described above. For example, in case that the UE supports a method that combines Method 4-4 and Method 4-5, the UE may be configured with an additional frequency offset and an additional bandwidth part size from the base station through higher layer signaling, indicated through L1 signaling, or configured and indicated through a combination of higher layer signaling and L1 signaling, and in case that the DL resource and the UL resource exist in different frequency resource regions at a specific time, the UE may perform frequency hopping from the start RB position using the additional frequency offset and additional bandwidth part size to transmit a hop that may exist at a frequency position within the UL resource.

The UE may use one of the methods described above, or a method that combines at least one of the methods described above, without specific higher layer signaling or L1 signaling based on a predefinition with the base station. In addition, the LTE may report information to the base station in the form of a LTE capability that the UE is capable of using at least one of the methods described above, or a plurality of methods in combination with at least one of the methods described above, and the base station may notify the UE of the use of a specific method through the corresponding higher layer signaling configuration.

<Fifth Embodiment: Method of reporting LTE capability>.

In an embodiment of the present disclosure, the LTE may report at least one of LTE capabilities listed below that may indicate that the UE is capable of performing the operations of the UE described in the various embodiments described above.

- UE capability indicating whether the XDD system is supported
- LTE capability indicating whether the XDD system supports each resource configuration method
- UE capability indicating whether the XDD system supports each frequency band distinguishing method.
- LTE capability indicating whether the XDD system supports each uplink-downlink configuration and indication method.
- UE capability indicating whether the XDD system supports each of the bandwidth part configurations and indication methods described above.
- LTE capability indicating whether the XDD system supports the frequency hopping methods described above for PUSCH transmission, or a method that combines the frequency hopping methods described above.

The LTE capabilities described above are optional with capability signaling and may support signaling distinguished by FR1/FR2. Some or all of the UE capabilities described above may be included within a single feature group, or each UE capability may support individual feature group signaling. The UE capabilities described above may support signaling for each UE, for each band combination, for each band, or for each CC.

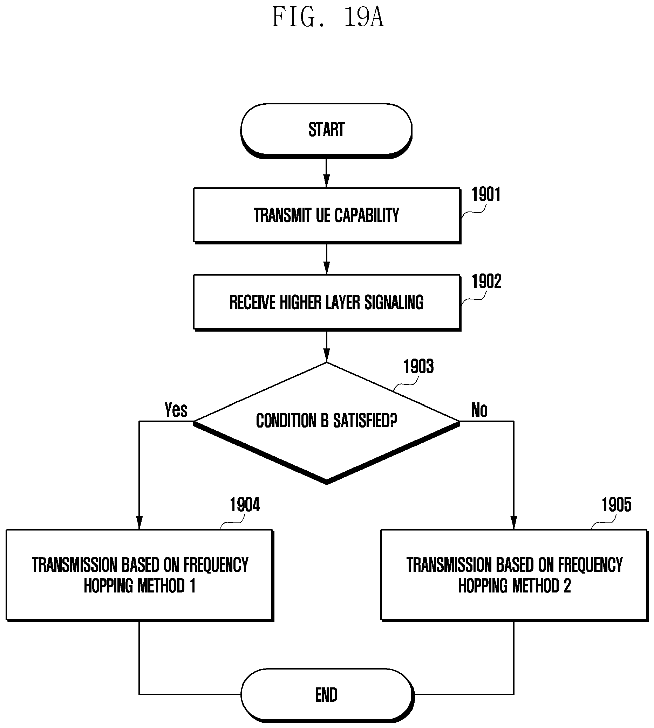

FIG. 19A is a view illustrating an example of a LTE operation for the frequency hopping method according to an embodiment of the present disclosure.

With reference to FIG. 19A, the UE may transmit at least one of the UE capabilities described above to the base station (1901). The UE may receive higher layer signaling from the base station based on the transmitted UE capability (1902). The higher layer signaling that may be included in this case may include the resource configuration method of the XDD system described above, the frequency band distinguishing method, the uplink-downlink configuration method, the frequency hopping method for PUSCH transmission, the frequency hopping method in the XDD system (Method 4-1 to Method 4-6 or a combination of at least one of the methods), and the like.

Then, the operation of the UE may differ depending on whether condition B is satisfied (1903). Here, condition B may mean cases in which the following conditions are satisfied.

- a case in which, for a bandwidth part with which the UE has been configured, in the corresponding bandwidth part, some frequency resources have an uplink resource and some remaining frequency resources have a downlink resource in a specific time resource, or a case in which, for the bandwidth part with which the UE is configured, in the corresponding bandwidth part, all frequency resources have an uplink resource in a specific time resource and a downlink resource in the remaining time resource, with some or all thereof overlapping other bandwidth parts on frequency and with different time ratios of uplink and downlink, and
- a case in which at least some time resources and some frequency resources overlap the downlink resource when applying the frequency hopping method in PUSCH transmission.

In case that condition B described above is satisfied, the LTE may perform PUSCH transmission through frequency hopping method 1 (1904). In this case, frequency hopping method 1 may be one of Methods 4-1 to 4-6 described above, or a method that combines at least one of the methods. In case that condition B described above is not satisfied, the LTE may perform PUSCH transmission through frequency hopping method 2 (1905). In this case, frequency hopping method 2 may be a conventional PUSCH frequency hopping method that does not take XDD into account.

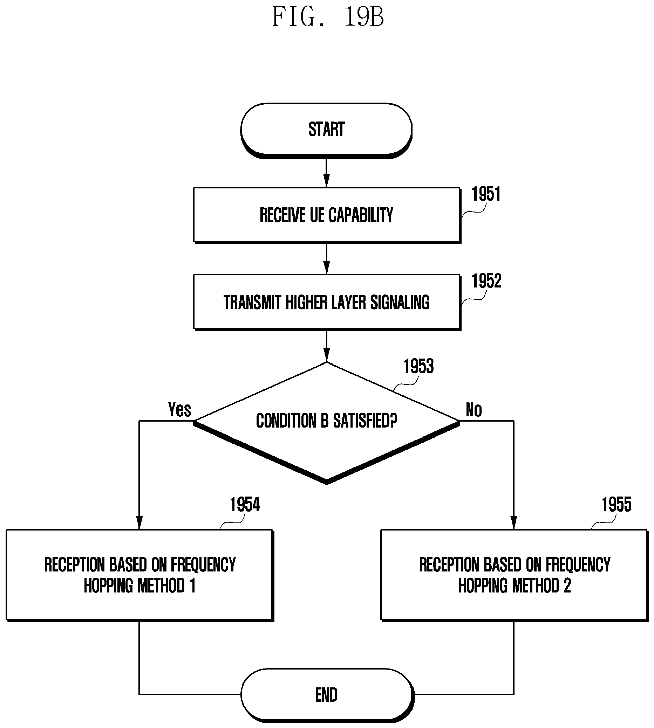

FIG. 19B is a view illustrating an example of a base station operation for the frequency hopping method according to an embodiment of the present disclosure.

With reference to FIG. 19B, the base station may receive at least one of the UE capabilities described above from the UE (1951). The base station may transmit higher layer signaling to the UE based on the received UE capability (1952). The higher layer signaling that may be included in this case may include the resource configuration method of the XDD system described above, the frequency band distinguishing method, the uplink-downlink configuration method, the frequency hopping method for PUSCH transmission, the frequency hopping method in the XDD system (Method 4-1 to Method 4-6 or a combination of at least one of the methods), and the like.

Then, the base station may receive the transmitted PUSCH from the UE by applying the frequency hopping method according to whether condition B is satisfied (1953). Here, condition B may mean cases in which the following conditions are satisfied.

- a case in which, for a bandwidth part that the UE has been configured with, in the corresponding bandwidth part, some frequency resources have an uplink resource and some remaining frequency resources have a downlink resource in a specific time resource, or a case in which, for the bandwidth part that the UE is configured with, in the corresponding bandwidth part, all frequency resources have an uplink resource in a specific time resource and a downlink resource in the remaining time resource, with some or all thereof overlapping other bandwidth parts on frequency and with different time ratios of uplink and downlink, and
- a case in which at least some time resources and some frequency resources overlap the downlink resource when applying the frequency hopping method in PUSCH transmission.

In case that condition B described above is satisfied, the base station may receive the transmitted PUSCH from the LTE through frequency hopping method 1 (1954). In this case, frequency hopping method 1 may be one of Methods 4-1 to 4-6 described above, or a method that combines at least one of the methods. In case that condition B described above is not satisfied, the base station may receive the transmitted PUSCH from the UE through frequency hopping method 2 (1955). In this case, frequency hopping method 2 may be a conventional PUSCH frequency hopping method that does not take XDD into account.

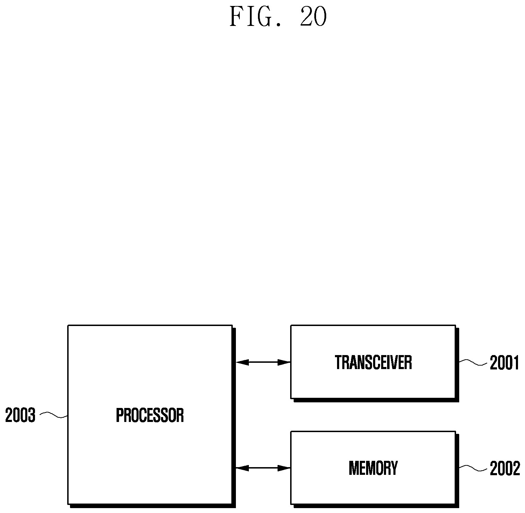

FIG. 20 is a block diagram illustrating a structure of a terminal according to an embodiment of the present disclosure.

With reference to FIG. 20, the terminal may include a transceiver 2001, a memory 2002, and a processor 2003. However, the constituent elements of the terminal are not limited to the examples described above. For example, the terminal may include more constituent elements or fewer constituent elements than the constituent elements described above. Furthermore, at least some or all of the transceiver 2001, the memory 2002, and the processor 2003 may be implemented in the form of a single chip.

In an embodiment, the transceiver 2001 may transmit and receive a signal from the base station. The signals described above may include control information and data. To this end, the transceiver 2001 may include an RF transmitter that performs up-conversion and amplification on a frequency of a signal to be transmitted, and an RF receiver that performs low-noise amplification on a received signal and performs down-conversion on a frequency of the received signal. In addition, the transceiver 2001 may receive a signal through a radio channel, output the received signal to the processor 2003, and transmit an output signal of the processor 2003 through the radio channel.

In an embodiment, the memory 2002 may store a program and data required for operation of the terminal. In addition, the memory 2002 may store control information or data included in a signal transmitted and received by the terminal. The memory 2002 may be constituted of a storage medium, such as ROM, RAM, a hard disk, a CD-ROM, and a DVD, or a combination of storage media. In addition, the memory 2002 may be constituted of a plurality of memories. In an embodiment, the memory 2002 may store a program for executing an operation for saving power of the terminal.

In an embodiment, the processor 2003 may control a series of processes for the terminal to be operated according to the embodiments described above. In an embodiment, by executing a program stored in the memory 2002, the processor 2003 may receive information such as a configuration for CA, a bandwidth part configuration, an SRS configuration, a PDCCH configuration, etc. from the base station, and control a dormant cell operation based on the configuration information.

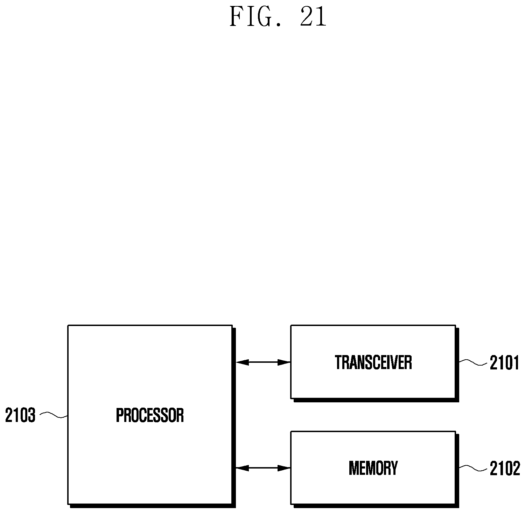

FIG. 21 is a block diagram illustrating a structure of a base station according to an embodiment of the present disclosure.

With reference to FIG. 21, the base station may include a transceiver 2101, a memory 2102, and a processor 2103. However, the constituent elements of the base station are not limited to the examples described above. For example, the terminal may include more constituent elements or fewer constituent elements than the constituent elements described above. Furthermore, the transceiver 2101, the memory 2102, and the processor 2103 may be implemented in the form of a single chip.

In an embodiment, the transceiver 2101 may transmit and receive a signal from the terminal. The signals described above may include control information and data. To this end, the transceiver 2101 may include an RF transmitter that performs up-conversion and amplification on a frequency of a signal to be transmitted, and an RF receiver that performs low-noise amplification on a received signal and performs down-conversion on a frequency of the received signal. In addition, the transceiver 2101 may receive a signal through a radio channel, output the received signal to the processor 2103, and transmit an output signal of the processor 2103 through the radio channel.

In an embodiment, the memory 2102 may store a program and data required for operation of the terminal. In addition, the memory 2102 may store control information or data included in a signal transmitted and received by the terminal. The memory 2102 may be constituted of a storage medium, such as ROM, RAM, a hard disk, a CD-ROM, and a DVD, or a combination of storage media. In addition, the memory 2102 may be constituted of a plurality of memories. In an embodiment, the memory 2102 may store a program for executing an operation for saving power of the terminal.

In an embodiment, the processor 2103 may control a series of processes for the base station to be operated according to the embodiments described above. In an embodiment, by executing a program stored in the memory 2102, the processor 2103 may transmit information such as a configuration for CA, a bandwidth part configuration, an SRS configuration, a PDCCH configuration, etc. to the terminal, and control a dormant cell operation of the terminal based on the configuration information.

The methods according to the embodiments described in the claims and the specification of the present disclosure may be implemented as hardware, software, or a combination of hardware and software.

When implemented in software, a computer-readable storage medium or computer program product storing one or more programs (software modules) may be provided. The one or more programs stored in the computer-readable storage medium or computer program product are configured for execution by one or more processors in an electronic device. The one or more programs include instructions directing the electronic device to execute the methods according to the embodiments as described in the claims and the specification of the present disclosure.

The programs (e.g., software modules or software) may be stored in random access memory (RAM), non-volatile memory including flash memory, read only memory (ROM), electrically erasable programmable read-only memory (EEPROM), a magnetic disc storage device, compact disc-ROM (CD-ROM), a digital versatile disc (DVD), another optical storage device, or a magnetic cassette. Alternatively, the programs may be stored in a memory including a combination of some or all of the above-described storage media. In addition, each of the memories may be provided in plural.

In addition, the programs may be stored in an attachable storage device accessible through any or a combination of communication networks such as the Internet, an intranet, a local area network (LAN), a wide LAN (WLAN), and a storage area network (SAN). Such a storage device may access, via an external port, a device that performs the embodiments of the present disclosure. In addition, an additional storage device on the communication network may access the device that performs the embodiments of the present disclosure.

In the specific embodiments described above, a constituent element included in the present disclosure is expressed in a singular or plural form depending on the presented embodiments. However, the singular or plural expression is appropriately selected for the situation proposed for the convenience of description, and the present disclosure is not limited by the singular or plural expression. Therefore, the constituent elements expressed with a plural term may be configured in a singular form, or the constituent element expressed with a singular term may be configured in a plural form.

Meanwhile, the embodiments disclosed in the present specification and drawings are provided as examples merely for easily explaining the technical contents and helping understand the present disclosure, but not intended to limit the scope of the technology disclosed in the present disclosure. That is, it is obvious to those skilled in the art to which the present disclosure pertains that other modified embodiments may be carried out based on the technical spirit of the present disclosure. In addition, the above respective embodiments may be operated in combination with each other as necessary. For example, the base station and the terminal may be operated in a manner that portions of an embodiment of the present disclosure are combined with portions of another embodiment of the present disclosure. In addition, the embodiments of the present disclosure may also be applied to other communication systems, and various modifications based on the technical spirit of the embodiments may be performed. For example, the embodiments may be applied to a LTE, 5G, NR system, or the like.

**Claims**

1. A method of a terminal of a communication system, the method comprising:

identifying a time resource allocated for a physical uplink shared channel (PUSCH);
determining an offset and a bandwidth part (BWP) size for frequency hopping based on whether an uplink resource and a downlink resource are configured on different frequency resources with respect to the time resource; and
transmitting the PUSCH by applying frequency hopping based on the offset and the bandwidth part size.

2. The method of claim 1, wherein, in case that the uplink resource and the downlink resource are configured on different frequency resources with respect to the time resource, the offset for the frequency hopping is determined to be a second offset, and
wherein the second offset is a value at which the PUSCH with the frequency hopping applied is defined to be transmitted in the uplink resource of the time resource.

3. The method of claim 1, wherein in case that the uplink resource and the downlink resource are configured in different frequency resources with respect to the time resource, the bandwidth part size for the frequency hopping is determined to be a second bandwidth part size, and
wherein the second bandwidth part size is a size of the frequency resource allocated from the time resource to the uplink resource.

4. The method of claim 1, wherein in case that only the uplink resource is configured with respect to the time resource, the offset for the frequency hopping is determined to be a first offset, and
wherein the bandwidth part size for the frequency hopping is determined to be a first bandwidth part size.

5. A method of a base station of a communication system, the method comprising:

identifying a time resource allocated for a physical uplink shared channel (PUSCH);
determining an offset and a bandwidth part (BWP) size for frequency hopping based on whether an uplink resource and a downlink resource are configured on different frequency resources with respect to the time resource; and
receiving the PUSCH by applying frequency hopping based on the offset and the bandwidth part size.

6. The method of claim 5, wherein, in case that the uplink resource and the downlink resource are configured on different frequency resources with respect to the time resource, the offset for the frequency hopping is determined to be a second offset, and
wherein the second offset is a value at which the PUSCH with the frequency hopping applied is defined to be received in the uplink resource of the time resource.

7. The method of claim 5, wherein in case that the uplink resource and the downlink resource are configured in different frequency resources with respect to the time resource, the bandwidth part size for the frequency hopping is determined to be a second bandwidth part size, and
wherein the second bandwidth part size is a size of the frequency resource allocated from the time resource to the uplink resource.

8. The method of claim 5, wherein in case that only the uplink resource is configured with respect to the time resource, the offset for the frequency hopping is determined to be a first offset, and
wherein the bandwidth part size for the frequency hopping is determined to be a first bandwidth part size.

9. A terminal of a communication system, the terminal comprising:

a transceiver; and
a control unit constituted to:

identify a time resource allocated for a physical uplink shared channel (PUSCH);
determine an offset and a bandwidth part (BWP) size for frequency hopping based on whether an uplink resource and a downlink resource are configured on different frequency resources with respect to the time resource; and
transmit the PUSCH by applying frequency hopping based on the offset and the bandwidth part size.

10. The terminal of claim 9, wherein, in case that the uplink resource and the downlink resource are configured on different frequency resources with respect to the time resource, the offset for the frequency hopping is determined to be a second offset, and
wherein the second offset is a value at which the PUSCH with the frequency hopping applied is defined to be transmitted in the uplink resource of the time resource.

11. The terminal of claim 9, wherein in case that the uplink resource and the downlink resource are configured in different frequency resources with respect to the time resource, the bandwidth part size for the frequency hopping is determined to be a second bandwidth part size, and
wherein the second bandwidth part size is a size of the frequency resource allocated from the time resource to the uplink resource.

12. The terminal of claim 9, wherein in case that only the uplink resource is configured with respect to the time resource, the offset for the frequency hopping is determined to be a first offset, and
wherein the bandwidth part size for the frequency hopping is determined to be a first bandwidth part size.

13. Abase station of a communication system, the base station comprising:

    a transceiver; and
    a control unit constituted to:

        identify a time resource allocated for a physical uplink shared channel (PUSCH);
        determine an offset and a bandwidth part (BWP) size for frequency hopping based on whether an uplink resource and a downlink resource are configured on different frequency resources with respect to the time resource; and
        receive the PUSCH by applying frequency hopping based on the offset and the bandwidth part size.

14. The base station of claim 13, wherein, in case that the uplink resource and the downlink resource are configured on different frequency resources with respect to the time resource, the offset for the frequency hopping is determined to be a second offset, and
wherein the second offset is a value at which the PUSCH with the frequency hopping applied is defined to be received in the uplink resource of the time resource.

15. The base station of claim 13, wherein in case that the uplink resource and the downlink resource are configured in different frequency resources with respect to the time resource, the bandwidth part size for the frequency hopping is determined to be a second bandwidth part size, and
wherein the second bandwidth part size is a size of the frequency resource allocated from the time resource to the uplink resource.

# FIG. 1

One subframe

$N_{symb}^{subframe,\mu}$ OFDM symbols

1 OFDM symbols (102)

1 subcarrier (103)

$k = N_{RB,x}^{max,\mu} N_{sc}^{RB} - 1$

$N_{RB}^{\mu} N_{sc}^{RB}$ subcarriers

Resource block $N_{sc}^{RB}$ subcarriers (104)

Resource element (k,l) (101)

Frequency

$k = 0$

$\bar{l} = 0$

$\bar{l} = 14 \cdot 2^{\mu} - 1$

Time

# FIG. 2

# FIG. 3

# FIG. 4

Duration
(404)

Frequency resource
(403)

UE bandwidth part
(410)

slot (420)

Frequency

Time

Control resource set #1 (401)

Control resource set #2 (402)

FIG. 5

# FIG. 6

Slot (601) ⟷      Symbol (602)

Periodicity (603)

**1. Cell-specific semi-static UL/DL configuration (SIB) (610)**

# of consecutive DL slots (611)    # of consecutive DL slots (612)    # of consecutive UL symbols (614)    # of consecutive UL slots (613)

**2. UE-specific semi-static UL/DL configuration (dedicated RRC) (620)**

Slot (621)    Slot (622)

# of consecutive DL symbols (623)    # of consecutive UL symbols (624)    # of consecutive DL symbols (625)    # of consecutive UL symbols (626)

**3. UE-group dynamic UL/DL configuration (DCI format 2_0) (630)**

Slot format indicator (631)    Slot format indicator (632)

▨ : Downlink resource (604)

▨ : Flexible resource (605)

▨ : Uplink resource (606)

EP 4 329 409 A1

FIG. 7

# FIG. 8

symbol/slot (802)

810 811  820 821  830 831

Bandwidth (803)

PUSCH
PDSCH

PUSCH
PDSCH

PUSCH
PDSCH

Frequency
Time

■ : Downlink resource (800)

□ : Uplink resource (801)

FIG. 9

EP 4 329 409 A1

FIG. 10

# FIG. 11

FIG. 12

FIG. 13

## FIG. 14

FIG. 15

# FIG. 16

## FIG. 17A

```
                          ┌──────────────┐
                          │    START     │
                          └──────┬───────┘
                                 │
                                 ▼
              ┌──────────────────────────────────┐   1700
              │   TRANSMIT UPLINK-DOWNLINK        │
              │   CONFIGURATION INFORMATION       │
              └──────────────┬───────────────────┘
                             │
                             ▼
              ┌──────────────────────────────────┐   1701
              │   TRANSMIT UPLINK-DOWNLINK        │
              │   CONFIGURATION SWITCH INDICATOR  │
              └──────────────┬───────────────────┘
                             │
                             ▼
                          1702
          Yes      ◇ CONDITION A SATISFIED ? ◇      No
```

**TRANSMIT UPLINK-DOWNLINK CONFIGURATION INFORMATION** — 1700

**TRANSMIT UPLINK-DOWNLINK CONFIGURATION SWITCH INDICATOR** — 1701

1702

CONDITION A SATISFIED ?   Yes   No

1703

**SWITCH UPLINK-DOWNLINK CONFIGURATION AFTER SWITCH DELAY TIME**

1704

**SWITCH UPLINK-DOWNLINK CONFIGURATION WITHOUT SWITCH DELAY TIME**

END

# FIG. 17B

```
                    ┌─────────────┐
                    │    START    │
                    └──────┬──────┘
                           │
                           ▼
          ┌──────────────────────────────┐  1710
          │    RECEIVE UPLINK-DOWNLINK    │
          │   CONFIGURATION INFORMATION   │
          └──────────────┬───────────────┘
                         │
                         ▼
          ┌──────────────────────────────┐  1711
          │    TRANSMIT UPLINK-DOWNLINK   │
          │ CONFIGURATION SWITCH INDICATOR│
          └──────────────┬───────────────┘
                         │
                         ▼
                                          1712
       Yes          ◇ CONDITION A SATISFIED? ◇          No
     ┌───────────────                        ───────────────┐
     │                                                      │
     ▼                                                      ▼
┌─────────────────────────────┐          ┌─────────────────────────────┐
│ 1713                        │          │ 1714                        │
│ SWITCH UPLINK-DOWNLINK      │          │ SWITCH UPLINK-DOWNLINK      │
│ CONFIGURATION               │          │ CONFIGURATION               │
│ AFTER SWITCH DELAY TIME     │          │ WITHOUT SWITCH DELAY TIME   │
└──────────────┬──────────────┘          └──────────────┬──────────────┘
               │          ┌─────────────┐               │
               └──────────┤     END     ├───────────────┘
                          └─────────────┘
```

FIG. 18

EP 4 329 409 A1

FIG. 19A

```
                        ┌─────────────┐
                        │    START    │
                        └─────────────┘
                               │
                               ▼
              ┌──────────────────────────────┐  1901
              │      TRANSMIT UE CAPABILITY    │
              └──────────────────────────────┘
                               │
                               ▼
              ┌──────────────────────────────┐  1902
              │   RECEIVE HIGHER LAYER SIGNALING │
              └──────────────────────────────┘
                               │
                               ▼
                                          1903
                      ◇───────────────────◇
         Yes      ◇    CONDITION B SATISFIED?   ◇      No
      ┌──────────◇                              ◇──────────┐
      │           ◇───────────────────◇                    │
      │                                                     │
      ▼  1904                                        1905   ▼
┌──────────────────────────┐          ┌──────────────────────────┐
│  TRANSMISSION BASED ON    │          │  TRANSMISSION BASED ON    │
│  FREQUENCY HOPPING METHOD 1 │        │  FREQUENCY HOPPING METHOD 2 │
└──────────────────────────┘          └──────────────────────────┘
      │                                                     │
      │              ┌─────────────┐                        │
      └──────────────│     END     │────────────────────────┘
                     └─────────────┘
```

# FIG. 19B

START

RECEIVE UE CAPABILITY ⟶ 1951

TRANSMIT HIGHER LAYER SIGNALING ⟶ 1952

1953
CONDITION B SATISFIED?

Yes / No

1954
RECEPTION BASED ON FREQUENCY HOPPING METHOD 1

1955
RECEPTION BASED ON FREQUENCY HOPPING METHOD 2

END

FIG. 20

2003 ～ PROCESSOR ⟷ TRANSCEIVER ～ 2001

⟷ MEMORY ～ 2002

FIG. 21

2103 ～ PROCESSOR ⟷ TRANSCEIVER ～ 2101

⟷ MEMORY ～ 2102

## INTERNATIONAL SEARCH REPORT

| | International application No. |
| --- | --- |
| | **PCT/KR2022/010357** |

**A.  CLASSIFICATION OF SUBJECT MATTER**

**H04W 72/04**(2009.01)i; **H04L 5/00**(2006.01)i

According to International Patent Classification (IPC) or to both national classification and IPC

**B.  FIELDS SEARCHED**

Minimum documentation searched (classification system followed by classification symbols)

H04W 72/04(2009.01); H04B 1/7143(2011.01); H04L 1/18(2006.01); H04L 5/00(2006.01); H04W 74/00(2009.01); H04W 74/08(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: PUSCH, time domain resource, frequency hopping, hopping offset, BWP size, different frequency resource, UL resource, DL resource

**C.  DOCUMENTS CONSIDERED TO BE RELEVANT**

| Category* | Citation of document, with indication, where appropriate, of the relevant passages | Relevant to claim No. |
| --- | --- | --- |
| A | US 2021-0168858 A1 (SHARP KABUSHIKI KAISHA et al.) 03 June 2021 (2021-06-03) <br> See paragraphs [0320]-[0364]; and figures 8-9. | 1-15 |
| A | US 2020-0052827 A1 (VILAIPORNSAWAI, Usa et al.) 13 February 2020 (2020-02-13) <br> See paragraphs [0088]-[0137]; and figures 6A-6B. | 1-15 |
| A | US 2021-0028815 A1 (TELEFONAKTIEBOLAGET LM ERICSSON (PUBL)) 28 January 2021 (2021-01-28) <br> See paragraphs [0004]-[0010] and [0105]-[0118]; and figures 1-2 and 13-16. | 1-15 |
| A | EP 3462795 A1 (INTEL IP CORPORATION) 03 April 2019 (2019-04-03) <br> See paragraphs [0014]-[0035]; and figures 2-4. | 1-15 |
| A | WO 2020-067967 A1 (TELEFONAKTIEBOLAGET LM ERICSSON (PUBL)) 02 April 2020 (2020-04-02) <br> See pages 26-40; and figures 7-16. | 1-15 |

☐ Further documents are listed in the continuation of Box C.    ☑ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
| --- | --- |
| **11 October 2022** | **11 October 2022** |

| Name and mailing address of the ISA/KR | Authorized officer |
| --- | --- |
| **Korean Intellectual Property Office** <br> **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

INTERNATIONAL SEARCH REPORT
Information on patent family members

International application No.

**PCT/KR2022/010357**

| Patent document cited in search report | | | Publication date (day/month/year) | Patent family member(s) | | | Publication date (day/month/year) |
|---|---|---|---|---|---|---|---|
| US | 2021-0168858 | A1 | 03 June 2021 | JP | 2020-014082 | A | 23 January 2020 |
| | | | | WO | 2020-017391 | A1 | 23 January 2020 |
| US | 2020-0052827 | A1 | 13 February 2020 | CN | 112534919 | A | 19 March 2021 |
| | | | | EP | 3821659 | A1 | 19 May 2021 |
| | | | | WO | 2020-030013 | A1 | 13 February 2020 |
| US | 2021-0028815 | A1 | 28 January 2021 | CN | 111771338 | A | 13 October 2020 |
| | | | | EP | 3753115 | A1 | 23 December 2020 |
| | | | | WO | 2019-160497 | A1 | 22 August 2019 |
| EP | 3462795 | A1 | 03 April 2019 | None | | | |
| WO | 2020-067967 | A1 | 02 April 2020 | None | | | |

Form PCT/ISA/210 (patent family annex) (July 2022)